# EUROPEAN PATENT APPLICATION

(11) **EP 2 050 794 A1**
(43) Date of publication of application: **22.04.2009**
(21) Application number: 07791740.9
(22) Date of filing: 01.08.2007
(51) Int. Cl.: C09B 57/10, B41M 5/26, C09B 26/02, G11B 7/244

(54) **HYDRAZIDE CHELATE COMPLEX COMPOUND, OPTICAL RECORDING MEDIUM USING THE COMPOUND AND RECORDING METHOD THEREOF**

(30) Priority: 08.08.2006 JP 2006215920; 19.01.2007 JP 2007010449
(71) Applicant: Mitsubishi Chemical Corporation, Minato-ku Tokyo 108-0014 (JP); Mitsubishi Kagaku Media Co., Ltd., Tokyo 108-8415 (JP)
(72) Inventor: NAKAMURA, Takeshi, Yokohama-shi Kanagawa 227-8502 (JP); SATOU, Wataru, Yokohama-shi Kanagawa 227-8502 (JP); FUJITA, Rieko, Yokohama-shi Kanagawa 227-8502 (JP); UCHIDA, Naoyuki, Tokyo 108-8415 (JP)
(74) Representative: HOFFMANN EITLE
(86) International application number: PCT/JP2007/065056
(87) International publication number: WO 2008/018337

(57) **Abstract**

Provided are a novel hydrazide chelate complex compound which is excellent in terms of both solubility in a coating solvent and light fastness, which can be used for blue laser recording, and which is useful as a dye for forming a recording layer of an optical recording medium, the hydrazide chelate complex compound being represented by general formula (1) below; and a dye for forming a recording layer of an optical recording medium, the dye containing the compound.

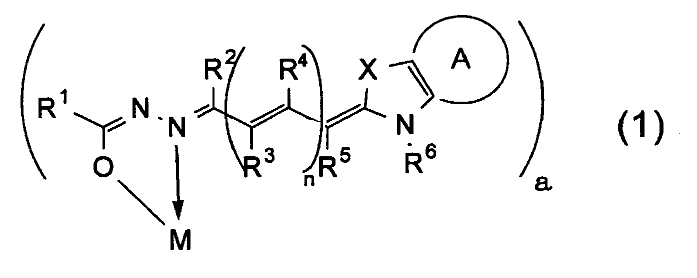

In general formula (1), ring A represents an aromatic ring; R¹ and R⁶ each represent an aromatic ring group or a monovalent nonaromatic ring substituent having 20 or less carbon atoms; R² to R⁵ each represent a hydrogen atom, an aromatic ring group, or a monovalent nonaromatic ring substituent having 20 or less carbon atoms; n represents 0 or 1; a represents an integer of 1 to 3; M represents a transition metal atom; and X represents an atom of Groups 14 to 16 of the periodic table.

## Description

### Field of the Invention

The present invention relates to a novel hydrazide chelate complex compound, which is useful as a dye for forming a recording layer of an optical recording medium, and a dye containing the compound and used for forming a recording layer of an optical recording medium. More particularly, the present invention relates to a novel hydrazide chelate complex compound useful as a dye for forming a recording layer of an optical recording medium using a blue laser beam.
The present invention also relates to an optical recording medium having a recording layer using such a dye and a recording method for the optical recording medium.

### Background of the Invention

Optical recording media, in particular, optical disks, using laser beams have been undergoing development so that information can be recorded and stored/reproduced with high density. Among optical disks, a compact disk-recordable (CD-R) has been receiving attention recently. A CD-R usually has a structure in which a recording layer containing a dye as a main component, a metal reflective film, and a protective film are disposed in that order on a circular plastic substrate having a pregroove. Recording of information onto a CD-R is performed by a method (heat mode) in which mainly irradiation of a laser beam is performed, and the irradiated energy is absorbed by the recording layer, thereby causing thermal deformation, such as decomposition, evaporation, or melting, at the laser beam irradiated spot in the recording layer, the reflective layer, or the substrate. Furthermore, reproduction of recorded information is performed by reading the difference in reflectance with respect to a laser beam between a portion where thermal deformation and changes in the dye structure due to laser light irradiation have occurred and a portion where such deformation and changes have not occurred. Consequently, the recording layer of the optical recording medium is required to efficiently absorb laser beam energy, and a laser beam-absorbing dye is generally used for the recording layer.

In an optical recording medium using an organic dye as the laser beam-absorbing dye, a recording layer can be formed by a simple method of applying an organic dye solution. Therefore, such an optical recording medium is expected to be increasingly used as an inexpensive optical recording medium.

Furthermore, in recent years, in order to increase the recording density, studies have been carried out on decreasing the wavelength of the laser beam used for recording from around 780 nm, which is the emission wavelength of the conventional semiconductor laser, to the blue light range of about 405 nm or less.

Moreover, in recent years, in order to increase the capacity of recording media, studies have been carried out on the fabrication of a two-layer recording medium in which two recording layers are disposed so that the storage capacity can be doubled and on methods of increasing the speed of recording. Consequently, there has been a demand for recording layer dye compounds that have a higher sensitivity to recording lasers.

Furthermore, when a recording layer is formed using a dye, in general, coating of a substrate using spin-coating is more advantageous in terms of cost than vacuum deposition. Consequently, dyes for optical recording media are essentially required to exhibit high solubility in a coating solvent. Currently, it is common to apply a fluorocarbon alcohol solvent, such as 2,2,3,3-tetrafluoropropanol (TFP) or 2,2,3,3,4,4,5,5-octafluoropentanol (OFP), to a polycarbonate substrate. Therefore, dyes for forming recording layers are required to exhibit high solubility in such a coating solvent.

Furthermore, in general, data are recorded and read by different intensity of laser beams, namely, a recording laser beam and a reading laser beam that has a lower intensity than the recording laser beam. Consequently, in the dye constituting the recording layer of the optical recording medium, if light fastness is low to such an extent that the dye is decomposed by irradiation with a weak laser beam, which is the reading laser beam, data errors are caused when reading of recorded data is performed. Furthermore, optical recording media are by their nature often irradiated with sunlight, illumination, and the like for long periods of time. Therefore, if dyes have poor light fastness, it becomes difficult to retain data recorded in the optical recording media. Consequently, the dyes for forming recording layers are also required to have good light fastness.

An imine compound is one of the compounds that are expected to be used for optical recording media because of its ease of synthesis and having an absorption maximum mainly at a wavelength of 300 nm or more. Patent applications have been made on the imine compound, for example, in Patent Documents 1 to 4 and the like.

However, in general, when the imine compound is not a metal complex, although solubility in a coating solvent is excellent, light fastness is markedly low. When the imine compound is a metal complex, although light fastness is improved, solubility in a coating solvent is greatly decreased. That is, in the imine compounds described in Patent Documents 1 and 2, in general, either solubility in a coating solvent or light fastness is markedly low.

For example, Patent Document 1 describes only optical recording media using imine compounds that do not contain a metal as examples. As a result of studies by the present inventors, it has been found that the compounds in the examples are significantly inferior in light fastness. Furthermore, with respect to the imine metal complex compounds referred to as examples in Patent Document 2, as a result of studies by the present inventors, it has been found that solubility in a fluorocarbon alcohol solvent, in particular, is significantly inferior. Moreover, a salen complex compound, which is a typical example of the imine metal complex compound, has been examined similarly. As a result, it has been found that solubility in a fluorocarbon alcohol solvent is significantly inferior.

Furthermore, the organic dyes for short wavelength application, such as for blue lasers, which are described in Patent Documents 3 and 4, are intended to be used in conjunction with a recording mechanism similar to that used for recording on an optical recording medium referred to as a conventional CD-R or DVD-R, i.e., High-to-Low recording. High-to-Low recording is a recording method in which the reflectance in the unrecorded state is higher than in the recorded state, and the above-mentioned dyes have been described as excellent recording materials in which the amount of reflected light at the unrecorded portion is large. However, in the recording method using a blue semiconductor laser, which has been undergoing development, for example, in HD (High-Definition) DVD-R, BD (Blu-ray Disc)-R, and the like, it is difficult to put High-to-Low recording to practical use, which is a problem.
Patent Document 1: PCT Japanese Translation Patent Publication No. 2005-515914
Patent Document 2: International Patent Publication No. 2004-102551
Patent Document 3: International Patent Publication No. 2006-035554
Patent Document 4: Japanese Unexamined Patent Application Publication No. 2001-301333

### Summary of the Invention

The present invention has been achieved under these circumstances, and it is an object of the present invention to provide an imine dye which is excellent in terms of both solubility in a coating solvent and light fastness and which can be used for optical recording using a blue laser beam.

Furthermore, it is another object of the present invention to provide an optical recording medium capable of recording and reproducing optical information with high density by Low-to-High recording, which is a recording mechanism different from the conventional one, and to provide a novel dye suitably used for the optical recording medium. Note that Low-to-High recording is a recording method in which the reflectance in the recorded state is higher than in the unrecorded state, and it is necessary to decrease the reflectance in the unrecorded state.

One of the reasons for the fact that light fastness is markedly low when the conventional imine compound is not a metal complex is believed to be that the imine structure is unstable with respect to light. One of the reasons for the fact that although light fastness is improved, solubility in a coating solvent is greatly decreased when the imine compound is a metal complex is believed to be that since the compound becomes rigid due to formation of metal complex, stability improves, but compatibility with a solvent decreases.

On the other hand, the rigidity of a hydrazide compound is lower than the imine compound because the hydrazide compound has a skeleton having an amide group adjacent to the Schiff base (-C=N-NH-C(=O)-skeleton). Thus, in a metal complex, improvement in solubility in a solvent is expected. However, when this skeleton is formed into a metal complex, N and O serve as coordination points for the metal, and the coordination does not directly affect the π-conjugated structure. Consequently, it is believed that a substantial improvement in stability cannot be expected and that application to optical recording media is impossible.

However, as a result of diligent studies carried out by the present inventors to overcome the problems described above, it has been found that a hydrazide chelate complex compound represented by general formula (1) below is excellent in terms of solubility in a coating solvent and light fastness in a thin film state, and that an optical recording medium using the compound for a recording layer can undergo recording satisfactorily with a blue laser beam.

In a first aspect, a hydrazide chelate complex compound is characterized by being represented by the following general formula (1): 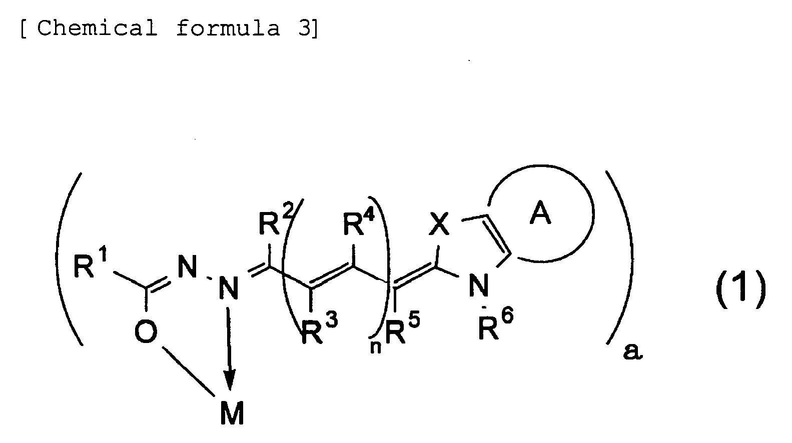 In general formula (1), ring A represents an aromatic ring which may have a substituent; R¹ and R⁶ each independently represent an aromatic ring group which may have a substituent or a monovalent nonaromatic ring substituent having 20 or less carbon atoms; R² to R⁵ each independently represent a hydrogen atom, an aromatic ring group which may have a substituent, or a monovalent nonaromatic ring substituent having 20 or less carbon atoms; n represents 0 or 1; a represents an integer of 1 to 3; M represents a transition metal atom; and X represents an atom of Groups 14 to 16 of the periodic table. When X is an atom of Groups 14 to 15 of the periodic table, X may further have a monovalent substituent having 20 or less carbon atoms. Furthermore, the above-described molecule may have a counterion.

In a second aspect, a dye for forming a recording layer of an optical recording medium is characterized by including the hydrazide chelate complex compound according to the first aspect.

In a third aspect, an optical recording medium is characterized by including at least a substrate and a recording layer disposed on the substrate, wherein the recording layer is formed using the dye for forming a recording layer of an optical recording medium according to the second aspect.

In a fourth aspect, a recording method for an optical recording medium is characterized by performing recording on the optical recording medium according to the third aspect using a laser beam with a wavelength of 350 to 530 nm.

### Brief Description of Drawings

[Fig. 1] Figs. 1a and 1b are each a schematic cross-sectional view showing an example of a layer structure of an optical recording medium according to an embodiment of the present invention.
[Fig. 2] Figs. 2a to 2f are schematic cross-sectional views showing an example of a method for manufacturing a two-layer optical recording medium.

### Detailed Description

A novel hydrazide chelate complex compound of the present invention is excellent in terms of solubility in a solvent, light fastness, and sensitivity to recording by blue laser. Consequently, by using a dye containing the hydrazide chelate complex compound for a recording layer of an optical recording medium, it is possible to provide a high-density optical recording medium which has excellent recording characteristics with respect to a blue laser beam and good light fastness, with good film properties and at low cost.
Embodiments of the present invention will be specifically described below. However, it is to be understood that the present invention is not limited to the embodiments described below, but various alterations can be made within the gist of the invention.

### [Hydrazide chelate complex compound]

A hydrazide chelate complex compound of the present invention is represented by the following general formula (1): 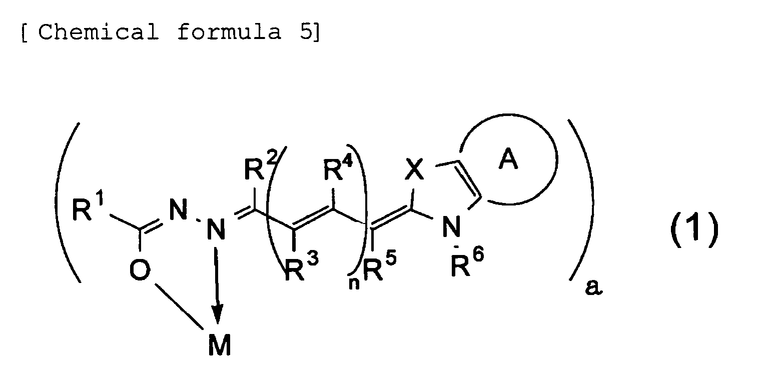 In general formula (1), ring A represents an aromatic ring which may have a substituent; R¹ and R⁶ each independently represent an aromatic ring group which may have a substituent or a monovalent nonaromatic ring substituent having 20 or less carbon atoms; R² to R⁵ each independently represent a hydrogen atom, an aromatic ring group which may have a substituent, or a monovalent nonaromatic ring substituent having 20 or less carbon atoms; n represents 0 or 1; a represents an integer of 1 to 3; M represents a transition metal atom; and X represents an atom of Groups 14 to 16 of the periodic table. When X is an atom of Groups 14 to 15 of the periodic table, X may further have a monovalent substituent having 20 or less carbon atoms. Furthermore, the above-described molecule may have a counterion.

### {Glossary}

In the present invention, the term "aromatic ring" means a ring having aromaticity, i.e., a ring having a (4m+2)π electron system (wherein m is a natural number). The skeleton structure thereof usually includes a 5- or 6-membered monocyclic aromatic ring or 2 to 6 fused aromatic rings. Examples of the aromatic ring include, in addition to an aromatic hydrocarbon ring and an aromatic heterocycle, a fused ring, such as an anthracene ring, a carbazole ring, or an azulene ring. The term "ring group" in "aromatic ring group" or the like is defined as a monovalent substituent obtained by removing a hydrogen atom from a ring, such as an aromatic ring.

Furthermore, the term "(hetero)aryl" means both "aryl" and "heteroaryl", and the term "(hetero)aralkyl" means both "aralkyl" and "hetroaralkyl".
Furthermore, in the present invention, the expression "may have a substituent" means "may have one or more substituents".

### {General formula (1)}

### <Ring A>

In general formula (1), ring A represents an aromatic ring which may have a substituent. Specific examples of the skeleton structure thereof include 5-membered monocycles, such as a furan ring, a thiophene ring, a pyrrole ring, an imidazole ring, a thiazole ring, and an oxadiazole ring; 6-membered monocycles, such as a benzene ring, a pyridine ring, and a pyrazine ring; and fused rings, such as a naphthalene ring, a phenanthrene ring, an azulene ring, a pyrene ring, a quinoline ring, an isoquinoline ring, a quinoxaline ring, a benzofuran ring, a carbazole ring, a dibenzothiophene ring, and an anthracene ring. Among these rings, in view of synthesis, an aromatic hydrocarbon ring is preferable, and a benzene ring or a naphthalene ring is particularly preferable.

Examples of the substituent that may be possessed by the aromatic ring as the ring A include those which have 20 or less carbon atoms, and specifically include a chain alkyl group, a chain alkenyl group, a chain alkynyl group, a hydrocarbon ring group, a heterocyclic group, an alkoxy group, an alkylcarbonyl group, a (hetero)aryloxycarbonyl group, a (hetero)aralkyloxy group, an amino group which may have a substituent, a nitro group, a cyano group, an alkoxycarbonyl group, a (hetero)aryloxycarbonyl group, a carbamoyl group which may have a substituent, a halogen atom, and a hydroxyl group.

Examples of the chain alkyl group include those which are straight-chained or branched and which generally have 1 to 20 carbon atoms, and preferably 1 to 10 carbon atoms, such as a methyl group, an ethyl group, a propyl group, an isopropyl group, a butyl group, an iso-butyl group, a sec-butyl group, a tert-butyl group, a hexyl group, and an octyl group.

Examples of the chain alkenyl group include those which are straight-chained or branched and which generally have 2 to 20 carbon atoms, and preferably 2 to 10 carbon atoms, such as a vinyl group, a propenyl group, a butenyl group, a 2-methyl-1-propenyl group, a hexenyl group, and an octenyl group.

Examples of the chain alkynyl group include those which are straight-chained or branched and which generally have 2 to 20 carbon atoms, and preferably 2 to 10 carbon atoms, such as an ethynyl group, a propynyl group, a butynyl group, a 2-methyl-1-propynyl group, a hexynyl group, and an octynyl group.

Examples of the hydrocarbon ring group include cycloalkyl groups which generally have 3 to 20 carbon atoms, and preferably 5 to 10 carbon atoms, such as a cyclopropyl group, a cyclohexyl group, and a tetradecahydro-anthranyl group; cycloalkenyl groups which generally have 3 to 20 carbon atoms, and preferably 5 to 10 carbon atoms, such as a cyclohexenyl group; and aryl groups which generally have 6 to 18 carbon atoms, and preferably 6 to 10 carbon atoms, such as a phenyl group, an anthranyl group, a phenanthryl group, and a ferrocenyl group.

Examples of the heterocyclic group include heteroaryl groups having a 5- or 6-membered monocycle or 2 to 6 fused rings, and heterocycloalkyl groups having a 5- or 6-membered monocycle or 2 to 6 fused rings. Examples of the heteroatom include a nitrogen atom, an oxygen atom, and a sulfur atom. Specific examples include 5-membered rings, such as a thienyl group; 6-membered rings, such as a pyridyl group, a 2-piperidinyl group, and a 2-piperadinyl group; and 5- or 6-membered groups derived from 2 to 6 fused rings, such as a benzothienyl group, a carbazolyl group, a quinolinyl group, and an octahydroquinolinyl group.

Examples of the alkoxy group include those which generally have 1 to 9 carbon atoms, and preferably 2 to 8 carbon atoms, such as a methoxy group, an ethoxy group, an iso-propoxy group, an isopropoxy group, a butoxy group, an iso-butoxy group, a sec-butoxy group, a tert-butoxy group, a hexyloxy group, and an octyloxy group.

Examples of the alkylcarbonyl group include those which generally have 2 to 18 carbon atoms, and preferably 2 to 8 carbon atoms, such as a methylcarbonyl group, an ethylcarbonyl group, an isopropylcarbonyl group, a tert-butylcarbonyl group, and a cyclohexylcarbonyl group.

Examples of the (hetero)aryloxy group include aryloxy groups which generally have 6 to 18 carbon atoms, and preferably 6 to 10 carbon atoms, such as a phenoxy group and a naphthyloxy group; and heteroaryloxy groups which generally have 5 to 18 carbon atoms, and preferably 5 to 10 carbon atoms, and which include a heteroatom selected from a nitrogen atom, an oxygen atom, a sulfur atom, and the like, such as a 2-thienyloxy group, a 2-furyloxy group, and a 2-quinolyloxy group.

Examples of the (hetero)aralkyloxy group include aralkyloxy groups which generally have 7 to 18 carbon atoms, and preferably 7 to 12 carbon atoms, such as a benzyloxy group, a phenetyloxy group, and a naphthylmethoxy group; and heteroaralkyloxy groups which generally have 6 to 18 carbon atoms, and preferably 6 to 10 carbon atoms, and which include a heteroatom selected from a nitrogen atom, an oxygen atom, a sulfur atom, and the like, such as a 2-thienylmethoxy group, a 2-furylmethoxy group, and a 2-quinolylmethoxy group.

Examples of the amino group which may have a substituent include an amino group, an alkylamino group, and a (hetero)arylamino group.
Examples of the alkylamino group include those which have 2 to 20 carbon atoms, and preferably 3 to 10 carbon atoms, such as an ethylamino group, a dimethylamino group, a methylethylamino group, a dibutylamino group, and a piperidyl group.
Examples of the (hetero)arylamino group include arylamino groups having 6 to 30 carbon atoms, and preferably 6 to 15 carbon atoms, such as a diphenylamino group, a dinaphthylamino group, a naphthylphenylamino group, and a ditolylamino group; heteroarylamino groups which have 5 to 30 carbon atoms, and preferably 6 to 15 carbon atoms, and which include a heteroatom selected from a nitrogen atom, an oxygen atom, a sulfur atom, and the like, such as a di(2-thienyl)amino group and a di(2-furyl)amino group; and arylheteroarylamino groups having 11 to 30 carbon atoms, and preferably 12 to 16 carbon atoms, such as a phenyl(2-thienyl)amino group.

Examples of the carbamoyl group which may have a substituent include a carbamoyl group and an alkylcarbamoyl group.
Examples of the alkylcarbamoyl group include those which generally have 2 to 20 carbon atoms, and preferably 2 to 10 carbon atoms, such as an N-methylcarbamoyl group, an N,N-dimethylcarbamoyl group, and an N-ethyl-N-cyclohexylcarbamoyl group.

Examples of the alkoxycarbonyl group and the (hetero)aryloxycarbonyl group include those which have 2 to 20 carbon atoms, and preferably 2 to 10 carbon atoms, such as a methoxycarbonyl group, an ethoxycarbonyl group, a propoxycarbonyl group, an isopropoxycarbonyl group, a tert-butoxycarbonyl group, an acetyloxy group, and a benzoyloxy group.

Examples of the halogen atom include a fluorine atom, a chlorine atom, a bromine atom, an iodine atom, and the like.

Note that when ring A has two or more substituents, the substituents may be combined together to form a cyclic structure. For example, when ring A is a group derived from a benzene ring, examples of a case in which the substituents possessed by the benzene ring are combined together to form a cyclic structure which may contain a heteroatom are shown below. In the following structures, the linkage position to the hydrazide skeleton is indicated by a dotted line.

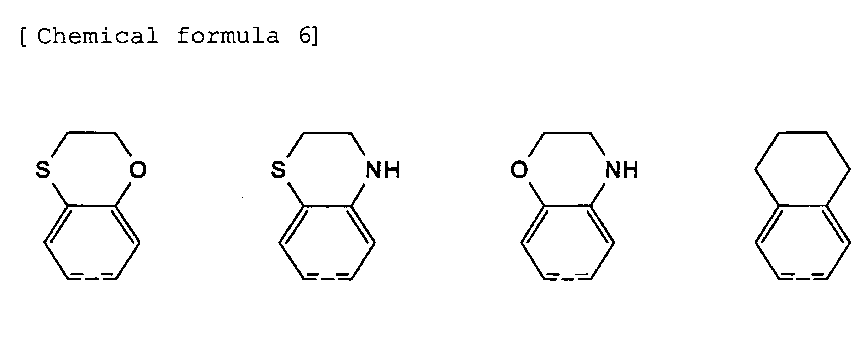

Ring A preferably has these substituents from the standpoint that the solubility of the dye in a solvent used when a recording layer is formed improves. More preferably, ring A has an alkoxycarbonyl group, an alkoxyl group, or the like. On the other hand, ring A preferably does not have these substituents in view of synthesis cost.

### <R¹ and R⁶>

In general formula (1), R¹ and R⁶ each independently represent an aromatic ring group which may have a substituent or a monovalent nonaromatic ring substituent having 20 or less carbon atoms.
Specific examples of the aromatic ring group which may have a substituent include the specific examples of ring A described above. Specific examples of the monovalent nonaromatic ring substituent having 20 or less carbon atoms include the examples of the substituent which may be possessed by ring A described above except for the aromatic ring groups.

R¹ is preferably an aromatic ring group in view of stability of the compound. On the other hand, R¹ is preferably a nonaromatic ring substituent in view of improvement in sensitivity to a blue laser.
Furthermore, R⁶ is preferably a nonaromatic ring substituent in view of synthesis.

### <R² to R⁵>

In general formula (1), R² to R⁵ each independently represent a hydrogen atom, an aromatic ring group which may have a substituent, or a monovalent nonaromatic ring substituent having 20 or less carbon atoms.
Specific examples of the aromatic ring group which may have a substituent include the specific examples of ring A described above. Specific examples of the monovalent nonaromatic ring substituent having 20 or less carbon atoms include the examples of the substituent which may be possessed by ring A described above except for the aromatic ring groups.
Preferably, R² to R⁵ each represent a hydrogen atom in view of synthesis.

### <X>

In general formula (1), X represents an atom of Groups 14 to 16 of the periodic table.
Specific examples thereof include C, N, O, Si, P, S, and the like. In view of stability of the compound and synthesis, X is preferably any one of C, O, and S, and particularly preferably C.

Furthermore, when X represents an atom of Group 14 or 15 of the periodic table, X may further have a substituent having 20 or less carbon atoms. Specific examples thereof include examples of the substituent which may be possessed by ring A described above.

### <n>

In general formula (1), n represents an integer of 0 or 1. In view of synthesis, n is preferably 0. In view of improvement in laser sensitivity, n is preferably 1.

### <a>

In general formula (1), a represents an integer of 1 to 3. Since the hydrazide chelate complex compound of the present invention represented by general formula (1) is preferably of the square planar type or the octahedral type because of structural stability, a is preferably 2 or 3.

### <M>

In general formula (1), M represents a transition metal atom.
The metal atom may be any metal atom that can form a metal complex with a hydrazide ligand. Specific examples thereof include Ti, V, Cr, Mn, Fe, Co, Ni, Cu, Mo, Ru, Rh, Pd, Ag, Pt, Au, Er, and the like.

In view of economics, the transition metal atom is preferably an element of the fourth period of the periodic table. In view of improvement in light fastness, the transition metal atom is preferably Co, Ni, or Cu, and particularly preferably Co.

Although M is preferably a divalent transition metal, M may be monovalent or trivalent or higher-valent.

Furthermore, M may be coordinated with, in addition to the chelate, a solvent or another chelate.
Examples of the solvent include alcohol solvents, ketone solvents, amino solvents, or the like that can be coordinated from the axial or other position of the metal.
Examples of another chelate include a chelate having a coordinating atom, such as pyridine, pyrimidine, pyridazine, or pyrazine.

### <Counterion>

The hydrazide chelate complex compound of the present invention represented by general formula (1) may have a counterion not shown in general formula (1) so that the compound entirely as a molecule can be electrically neutral. In such a case, examples of the counteranion that may be possessed include BF₄⁻, ClO₄⁻, PF₆⁻, a halogen ion, a hydroxide ion, and an acetate ion. Examples of the countercation include, in particular, monovalent cations, such as cations of Group 1A of the periodic table.

### {Particularly preferable structure of general formula (1)}

The hydrazide chelate complex compound of the present invention represented by general formula (1) is particularly preferably represented by the following general formula (2): 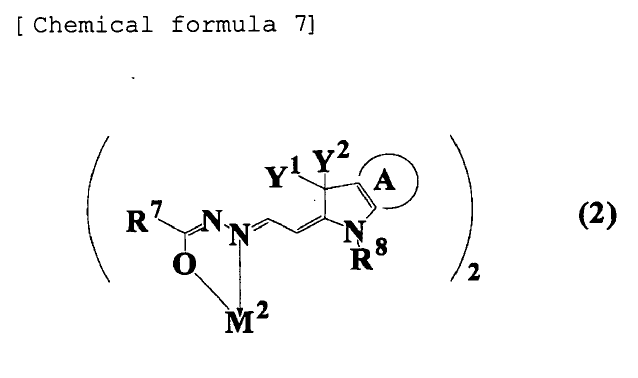 In general formula (2), ring A represents an aromatic ring which may have a substituent; R⁷, R⁸, Y¹, and Y² each independently represent an aromatic ring group which may have a substituent or a monovalent nonaromatic ring substituent having 20 or less carbon atoms; and M² represents a transition metal atom. Furthermore, the above-described molecule may have a counterion.

### <Ring A>

In general formula (2), ring A has the same meaning as defined in the ring A in general formula (1).

### <R⁷ and R⁸>

In general formula (2), R⁷ and R⁸ have the same meanings as defined in R¹ and R⁶ in general formula (1).

### <Y¹ and Y²>

In general formula (2), Y¹ and Y² each independently represent an aromatic ring group which may have a substituent or a monovalent nonaromatic ring substituent having 20 or less carbon atoms.
Specific examples of the aromatic ring group which may have a substituent include the specific examples of the ring A derived from an aromatic ring in general formula (1) described above. Specific examples of the monovalent nonaromatic ring substituent having 20 or less carbon atoms include the examples of the substituent which may be possessed by ring A in general formula (1) described above except for the aromatic ring groups.

Furthermore, at least one of Y¹ and Y² is preferably an arylmethyl group, such as a benzyl group or a naphthylmethyl group, which may have a substituent; a heteroarylmethyl group, such as a furanylmethyl group, a thiophenylmethyl group, or a pyridylmethyl group, which may have a substituent; or a leaving substituent, such as a tert-butyl group, which may have a substituent, from the standpoint of improvement in sensitivity when used for forming a recording medium. At least one of Y¹ and Y² is particularly preferably an arylmethyl group which may have a substituent or a heteroarylmethyl group which may have a substituent, more preferably an arylmethyl group which may have a substituent, and most preferably a benzyl group which may have a substituent. Furthermore, for the reason of improving recording signal quality, preferably, the leaving substituent further has one or more substituents. More preferably, the substituent is an electron-withdrawing substituent with a Hammett substituent constant value σρ satisfying the relationship 0 < σρ < 0.9, which is described in Hansch, C. et, al., J. Med. Chem., 16, 1207 (1973) and Hansch, C. et, al., J. Med. Chem., 20, 304 (1977). The substituent is particularly preferably a cyano group, a trifluoromethyl group, a halogen, such as F or Cl, or the like.

### <M²>

In general formula (2), M² has the same meaning as defined in M in general formula (1).

### {Molecular weight}

In the hydrazide chelate complex compound of the present invention represented by general formula (1), preferably, by general formula (2), the molecular weight is preferably usually 1,500 or less, and more preferably 1,000 or less, from the standpoint of preventing a decrease in sensitivity due to a decrease in absorbance.

Furthermore, preferably, the hydrazide chelate complex compound of the present invention represented by general formula (1), preferably, by general formula (2), is usually water-insoluble for the reason of improving the preservation stability of the recording medium. Here, the term "being water-insoluble" means a state in which the solubility in water at 25°C and 1 atm is usually 0.1% by weight or less, and preferably 0.01% by weight or less.

### {Specific examples}

Specific examples of the hydrazide chelate complex compound of the present invention represented by general formula (1) will be exemplified below. However, it is to be understood that the present invention is not limited thereto unless it deviates from the scope of the present invention. In the following formulae, Me represents a methyl group, Et represents an ethyl group, Bu represents a butyl group, Ac represents an acetyl group, and Ph represents a phenyl group. Although Cu complexes, Mn complexes, Ni complexes, or Co complexes are described below, other transition metals may be substituted therefor.

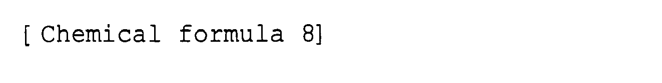

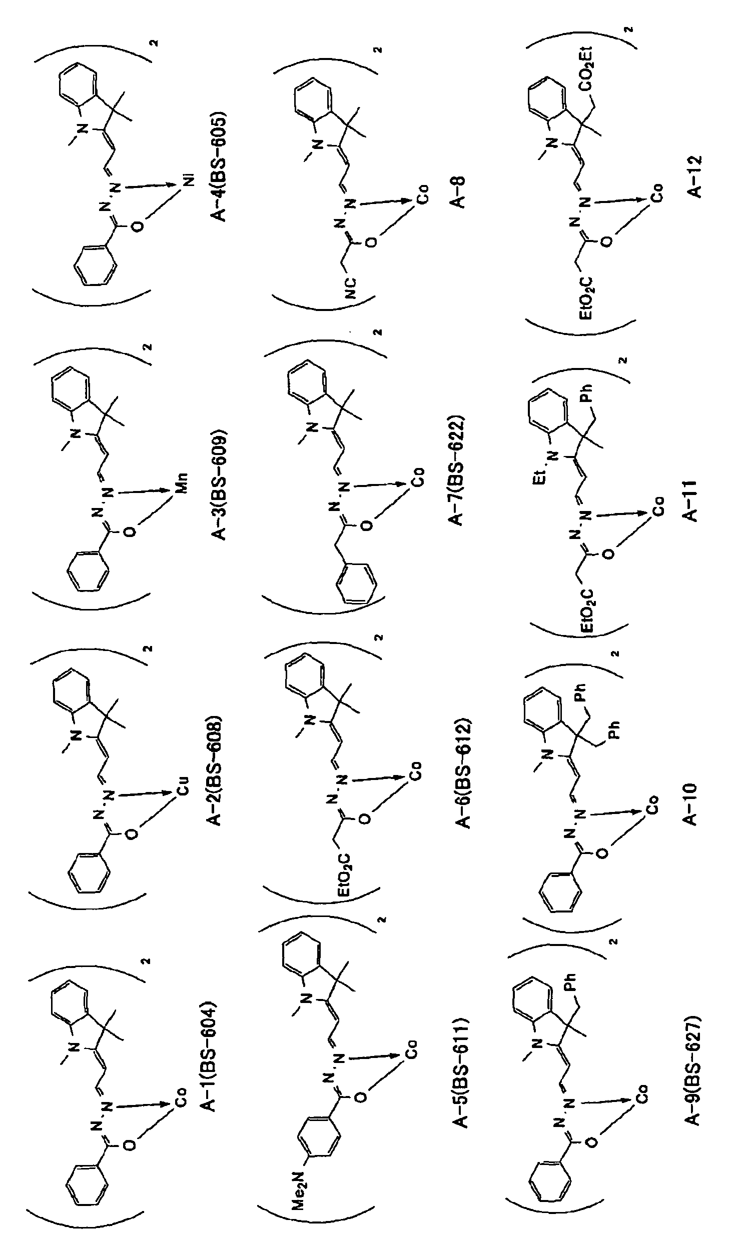

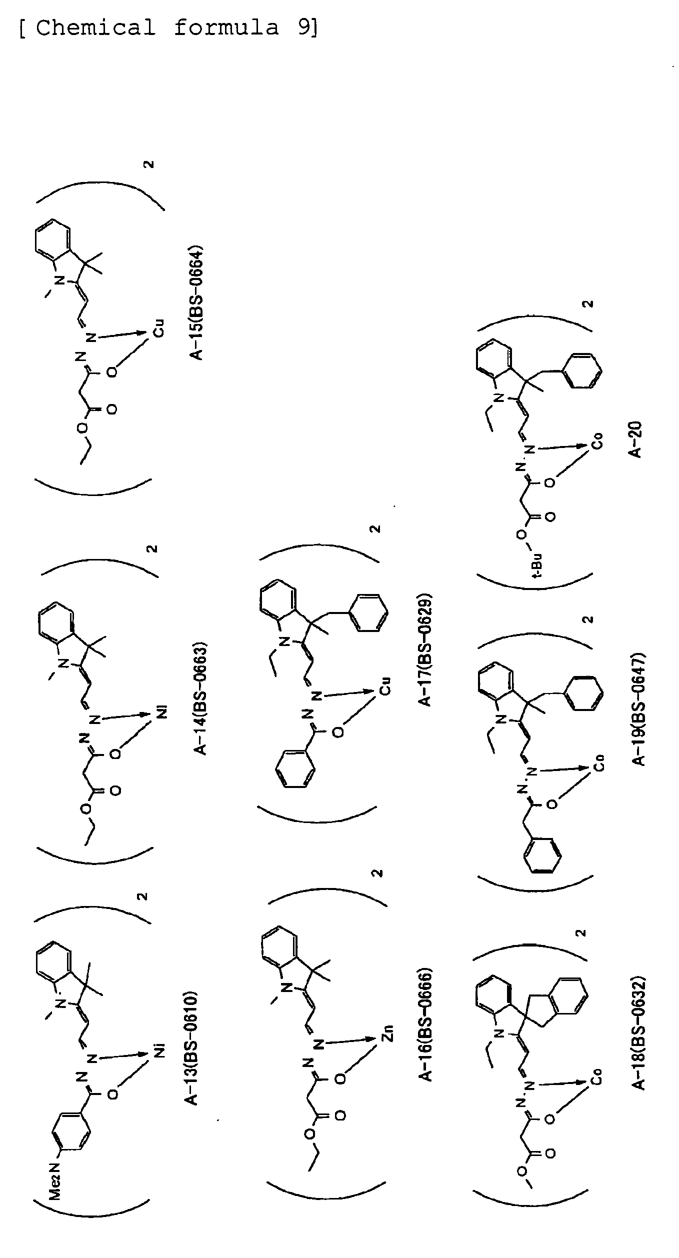

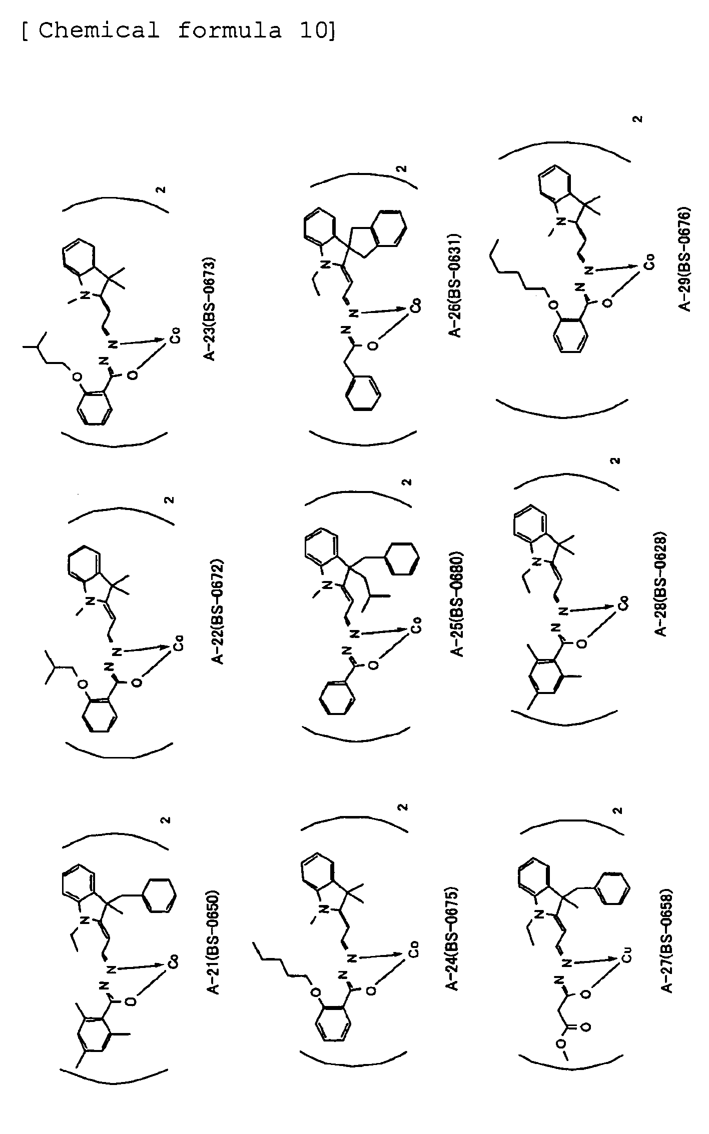

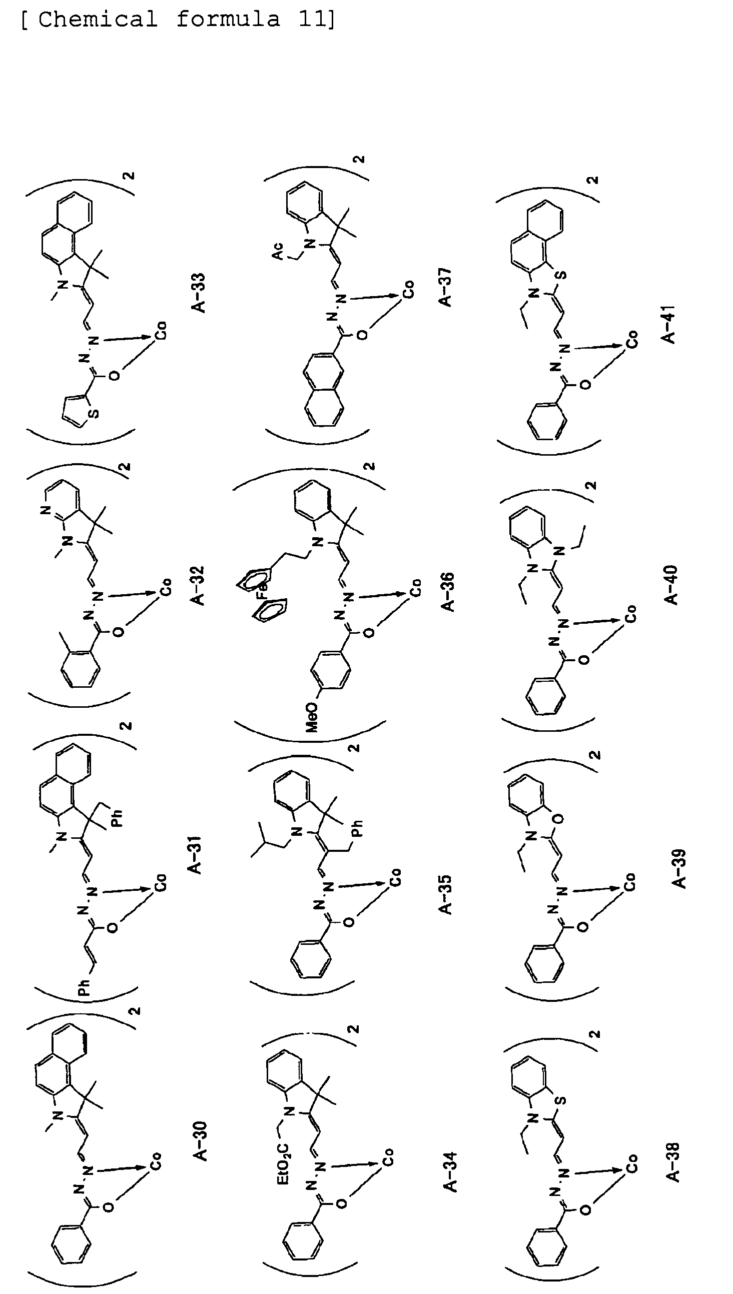

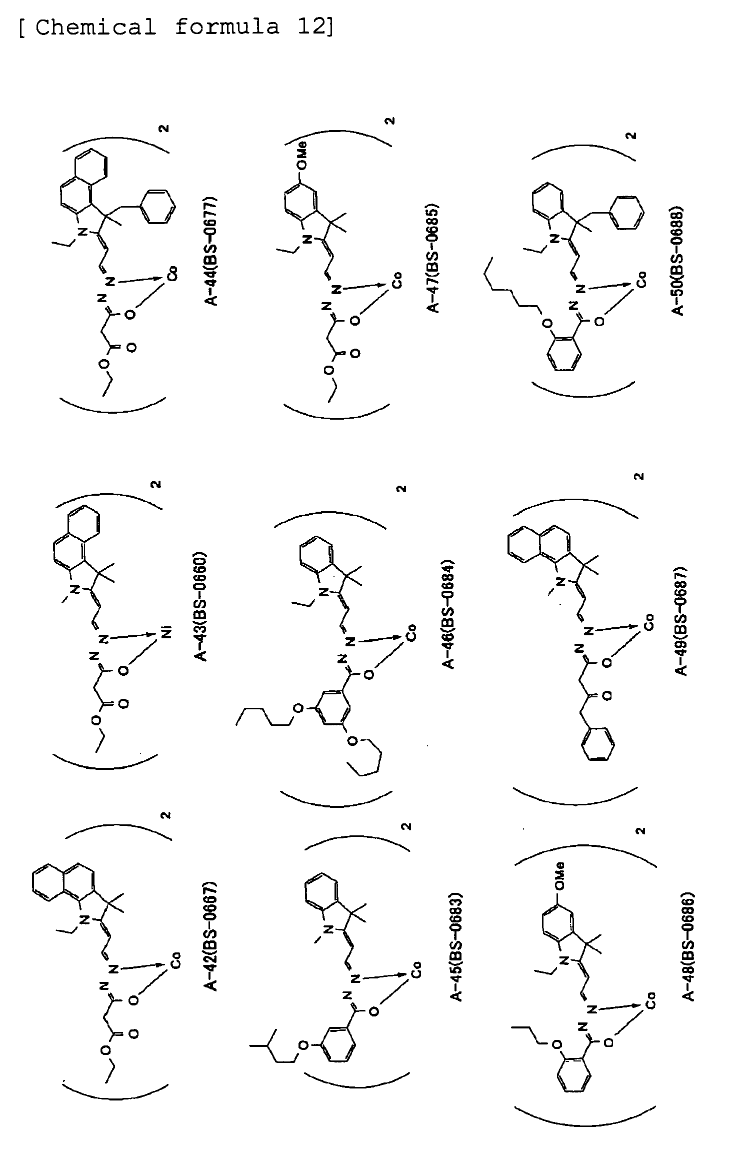

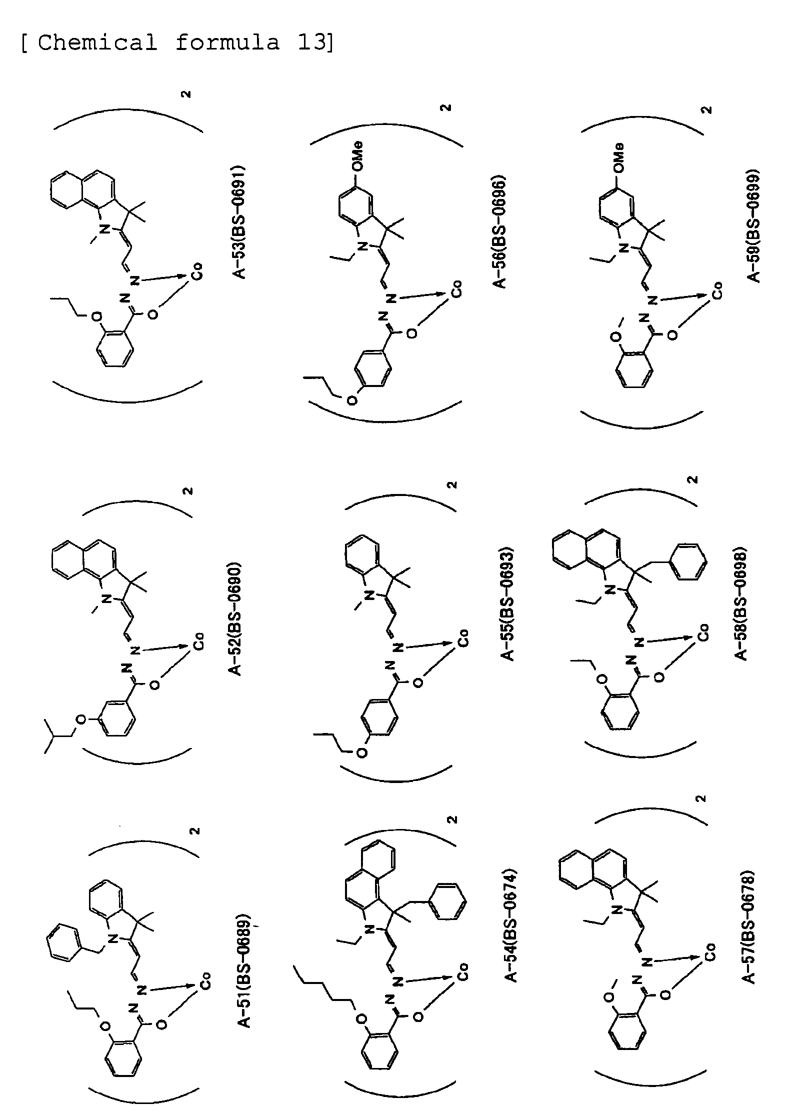

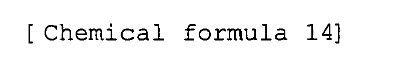

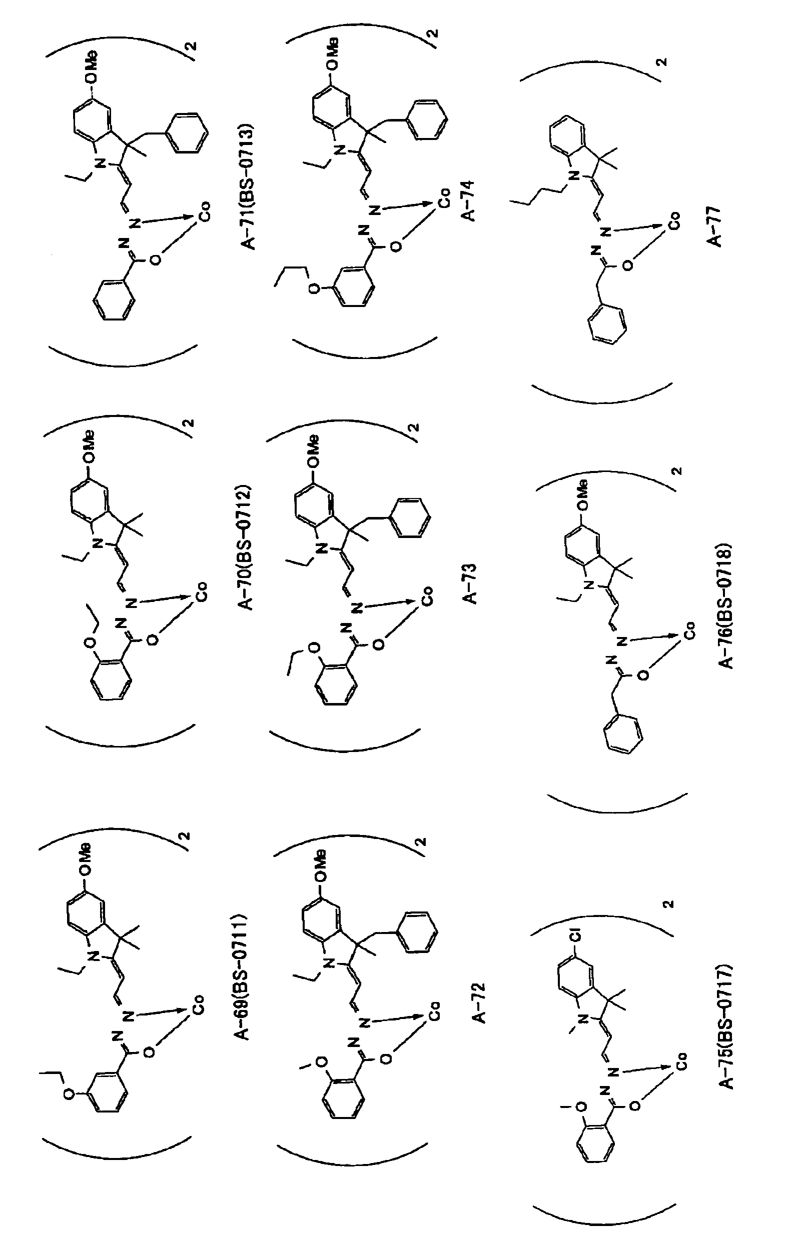

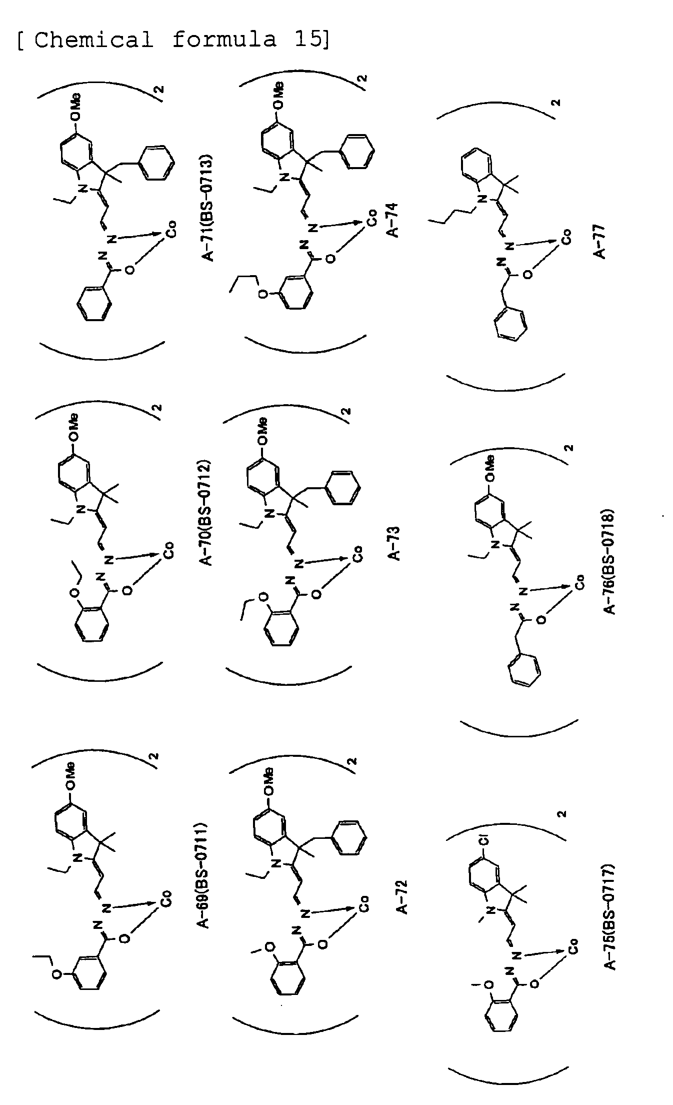

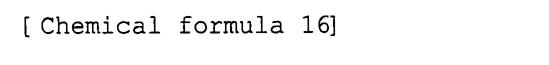

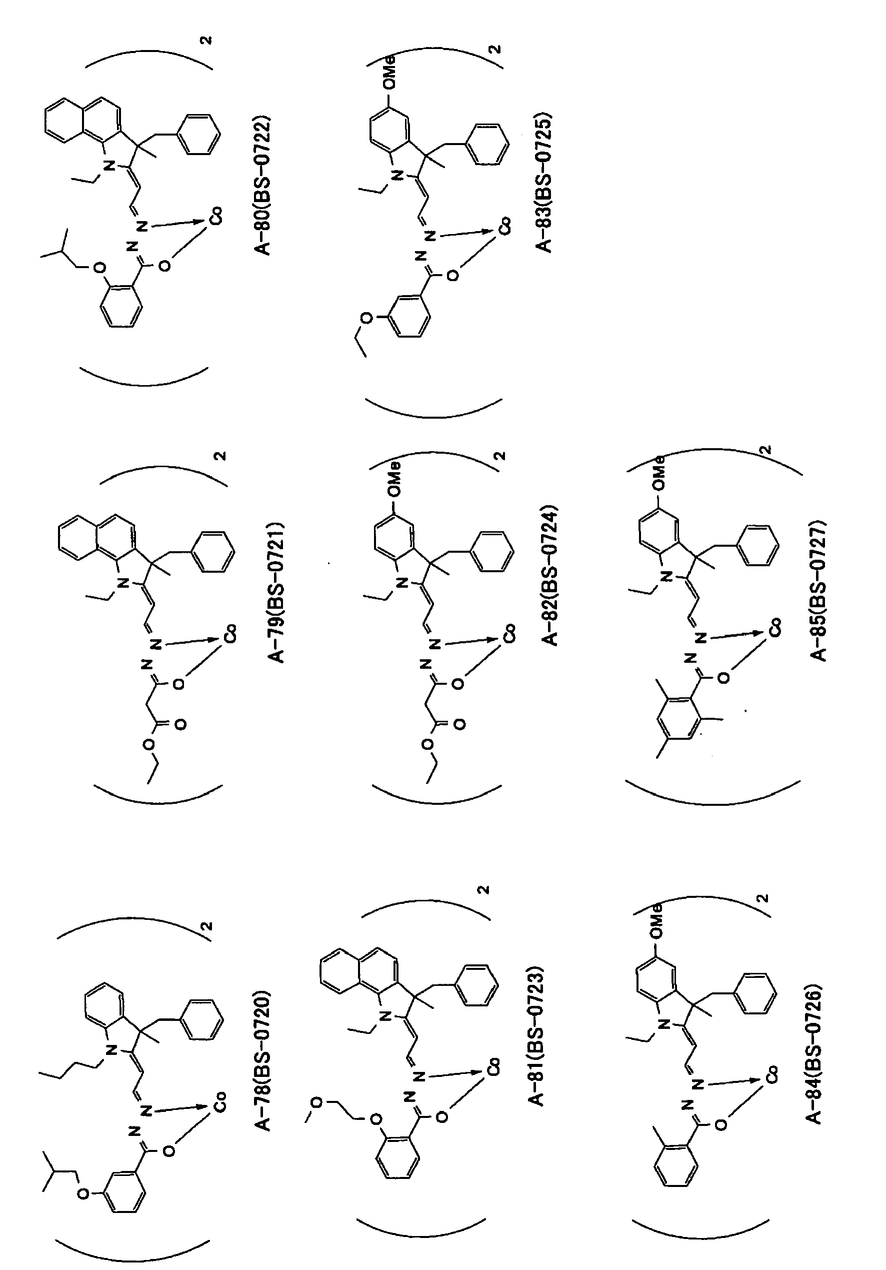

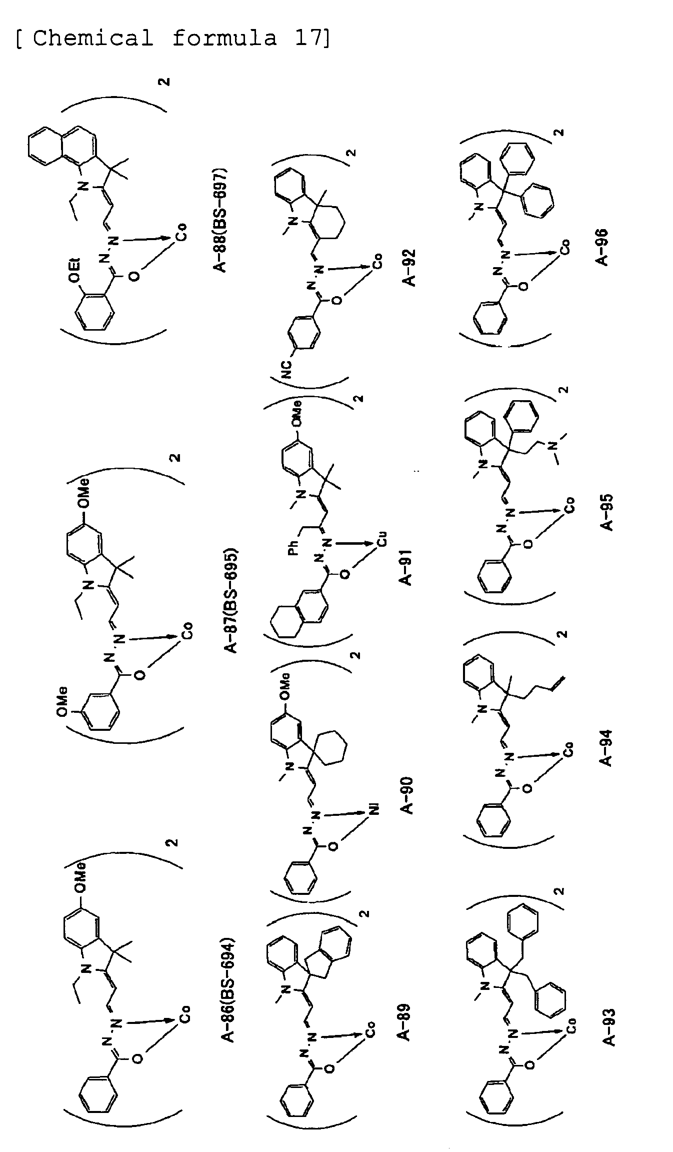

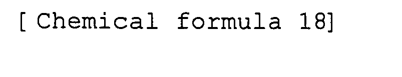

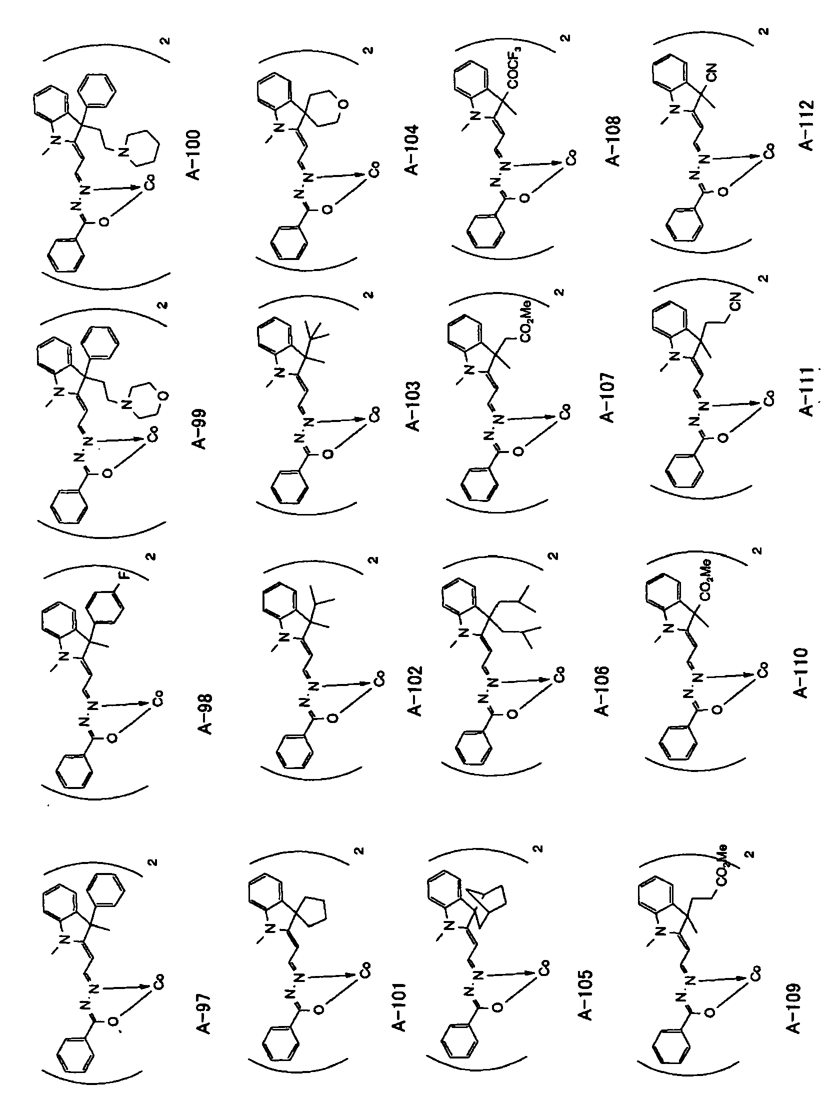

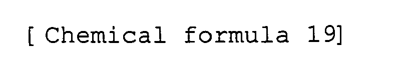

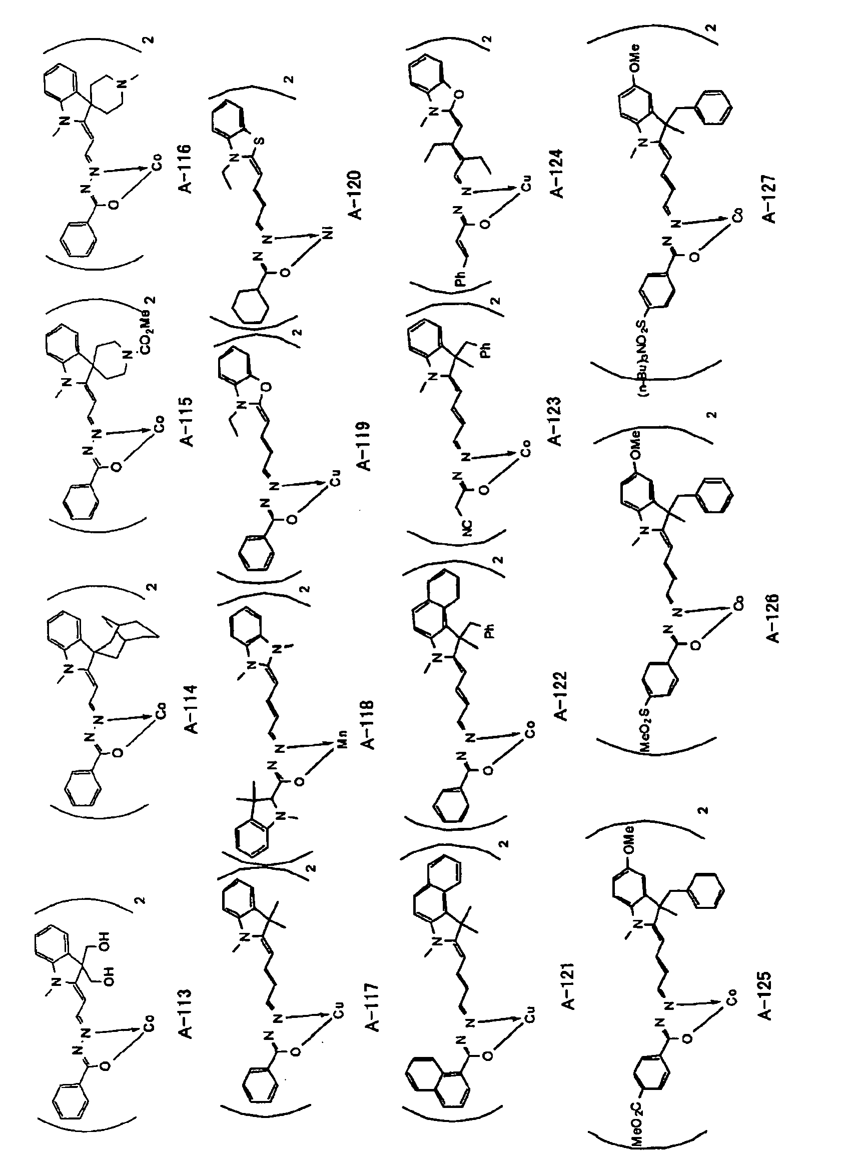

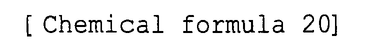

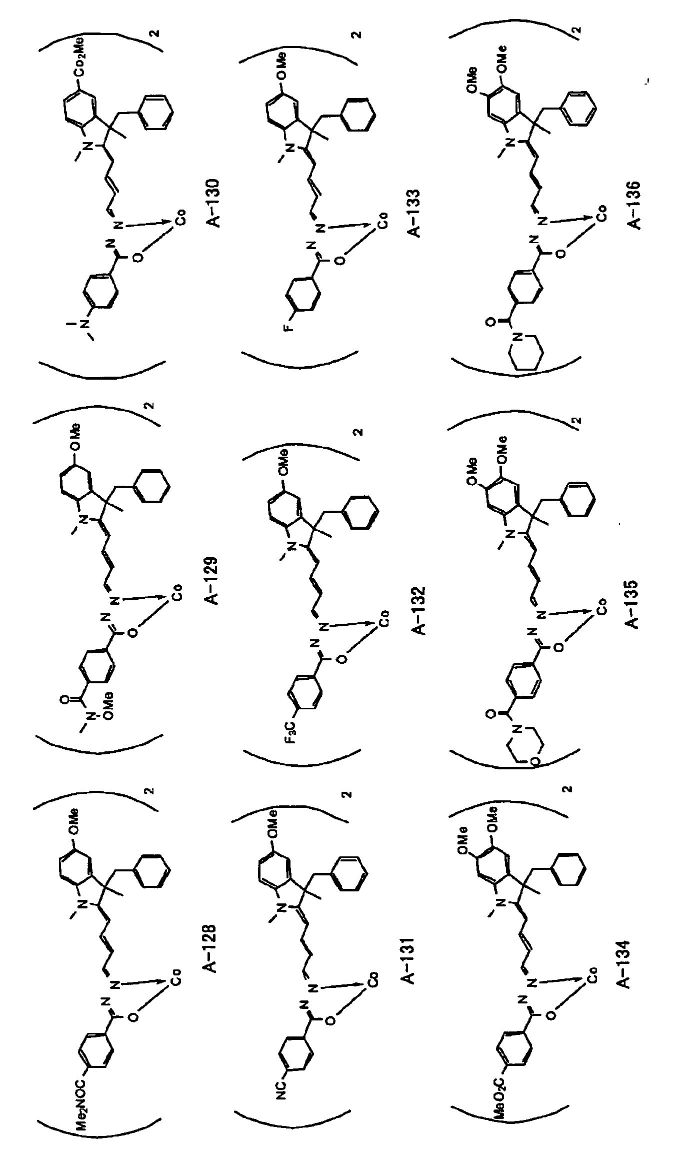

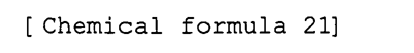

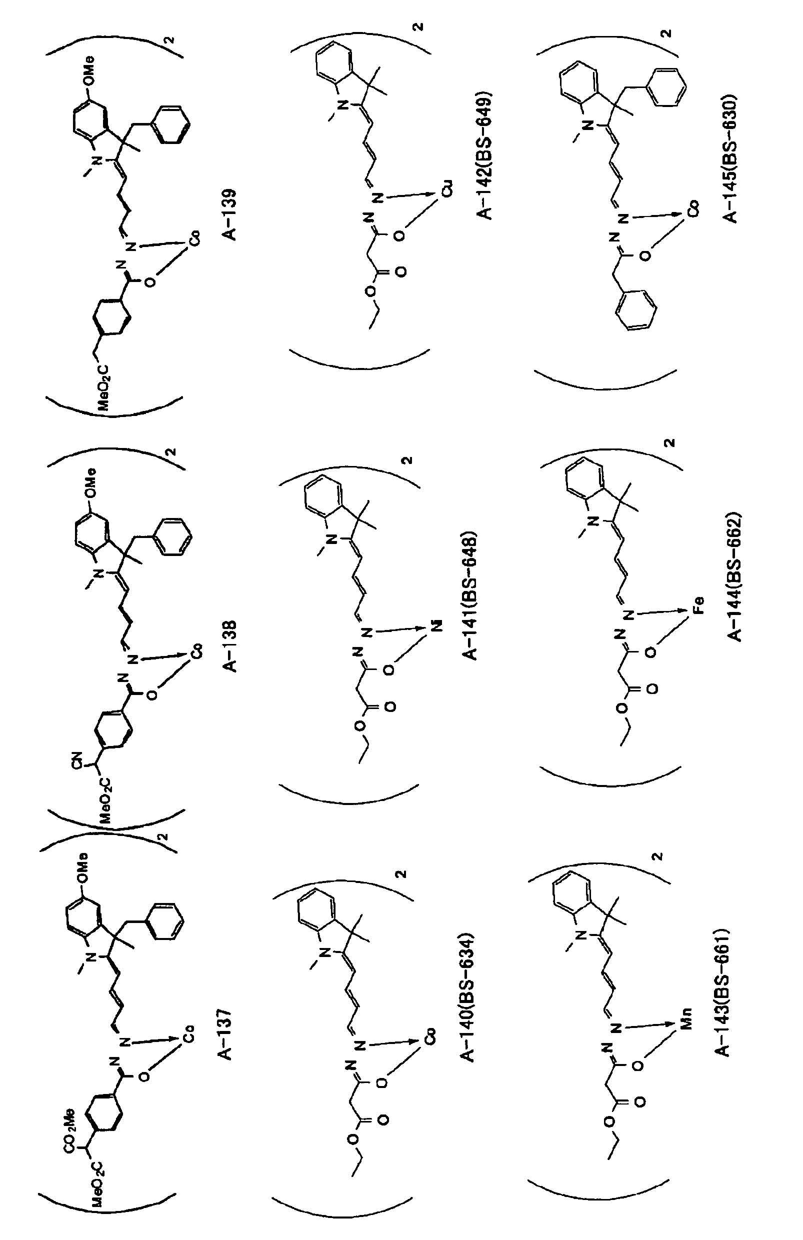

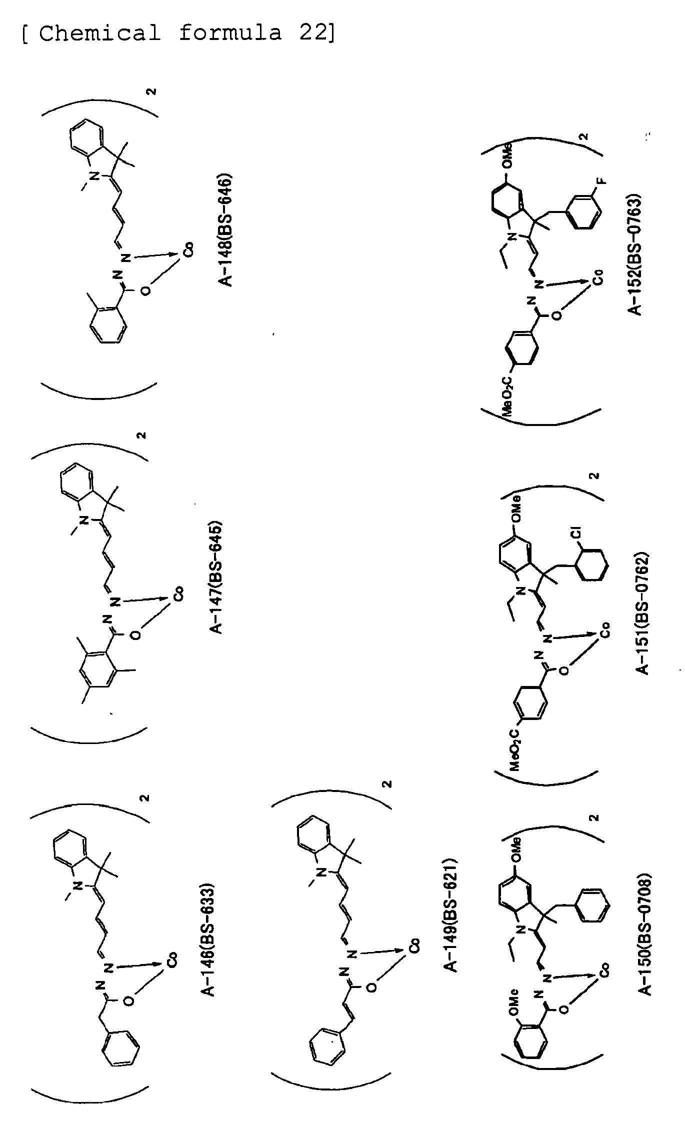

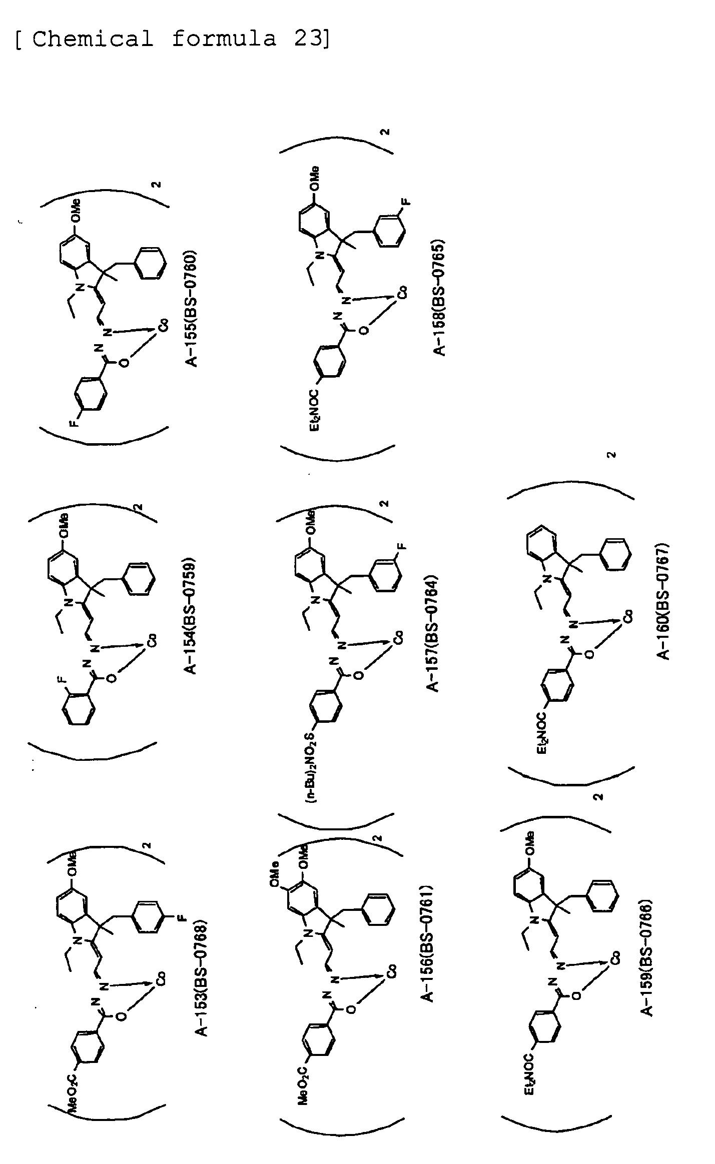

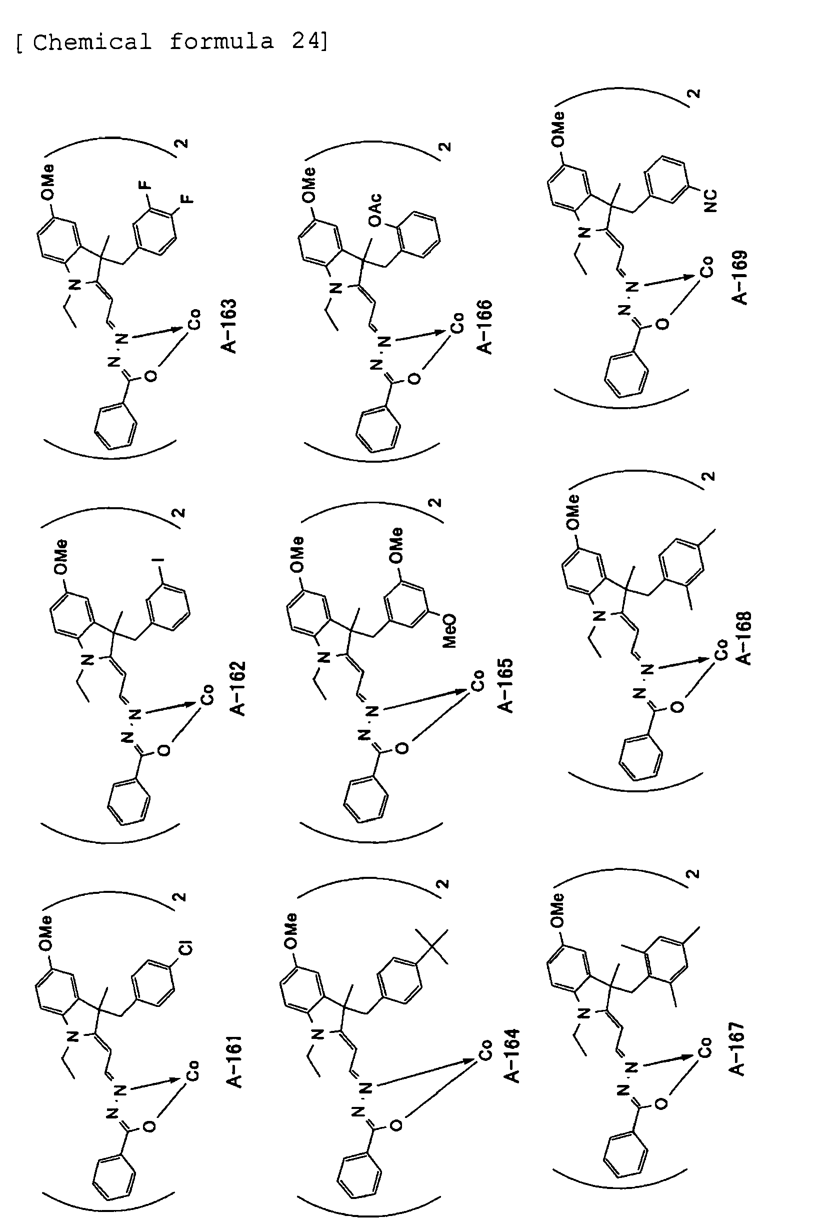

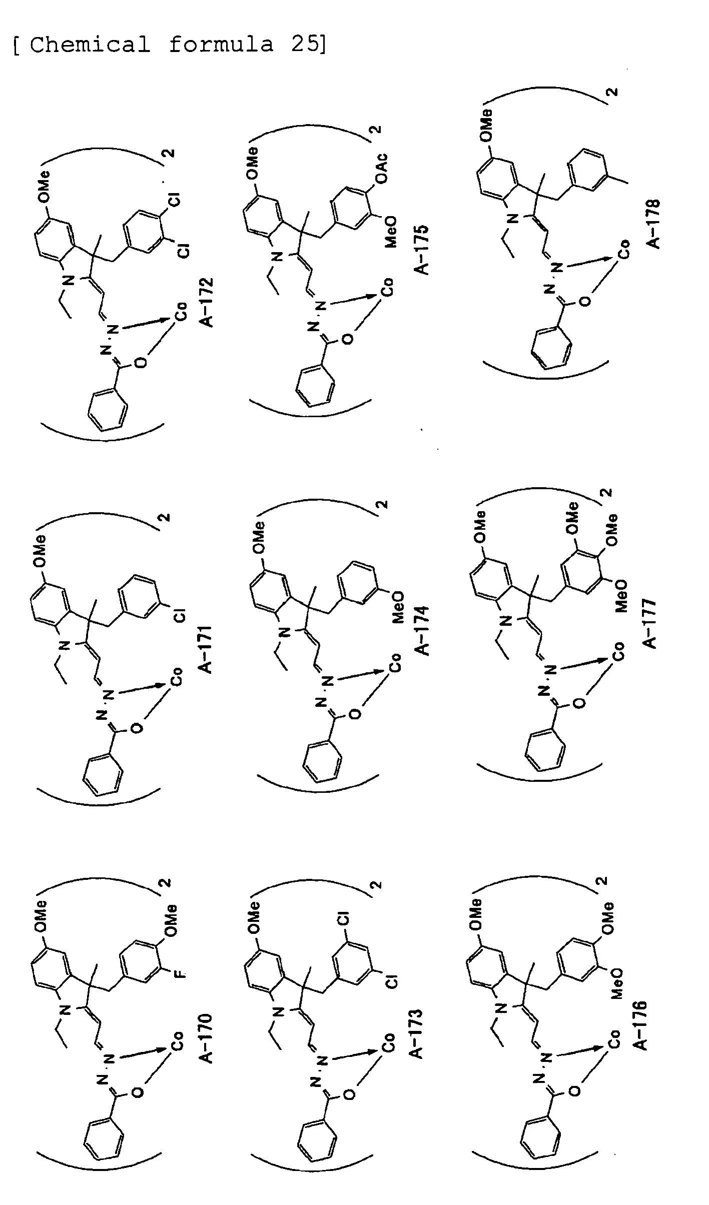

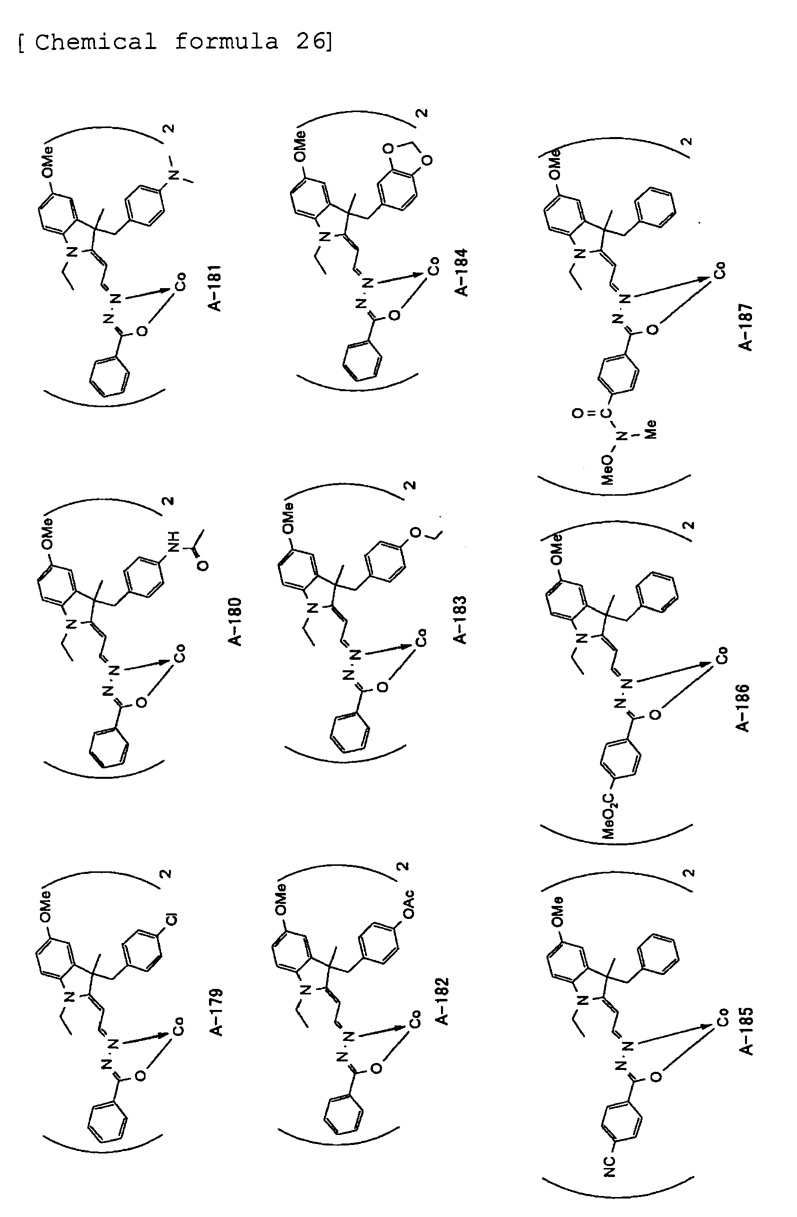

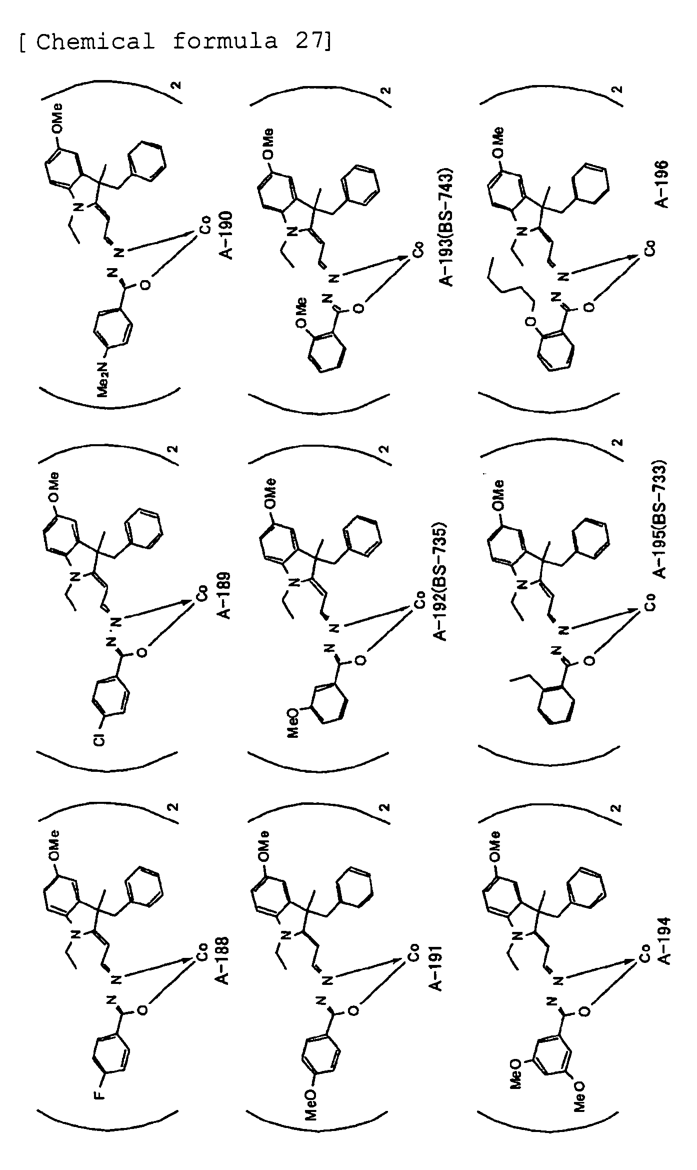

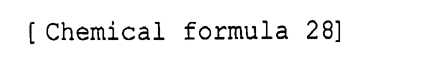

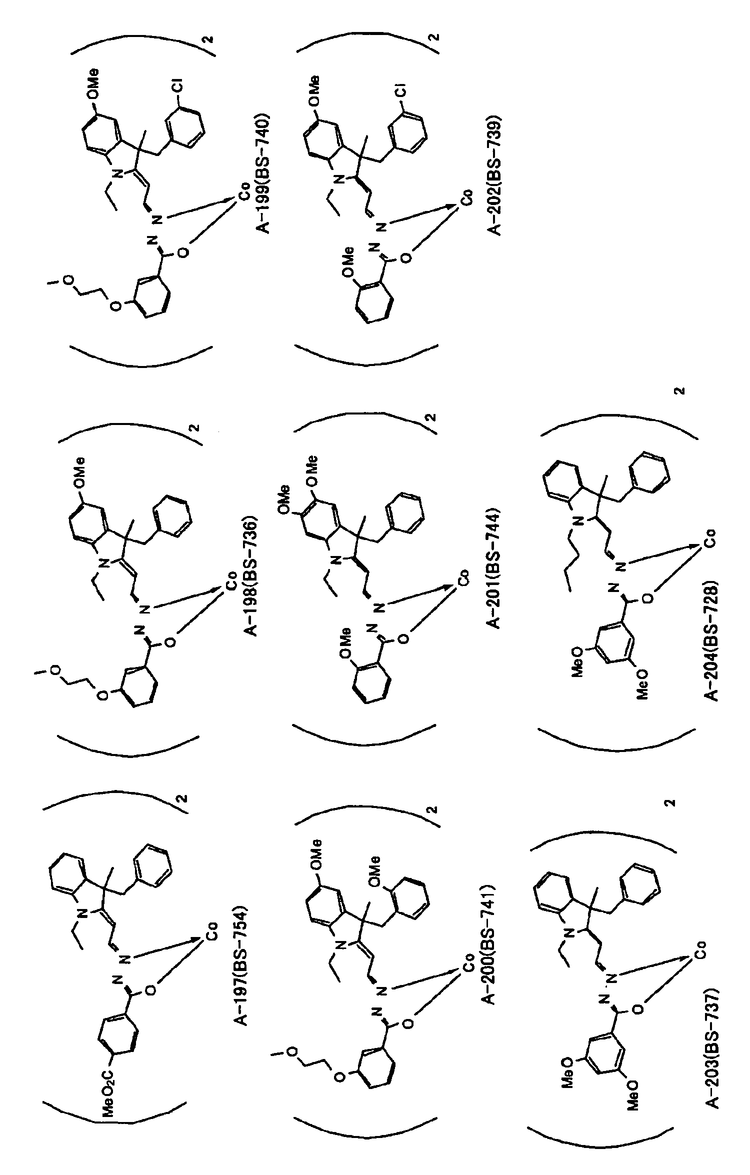

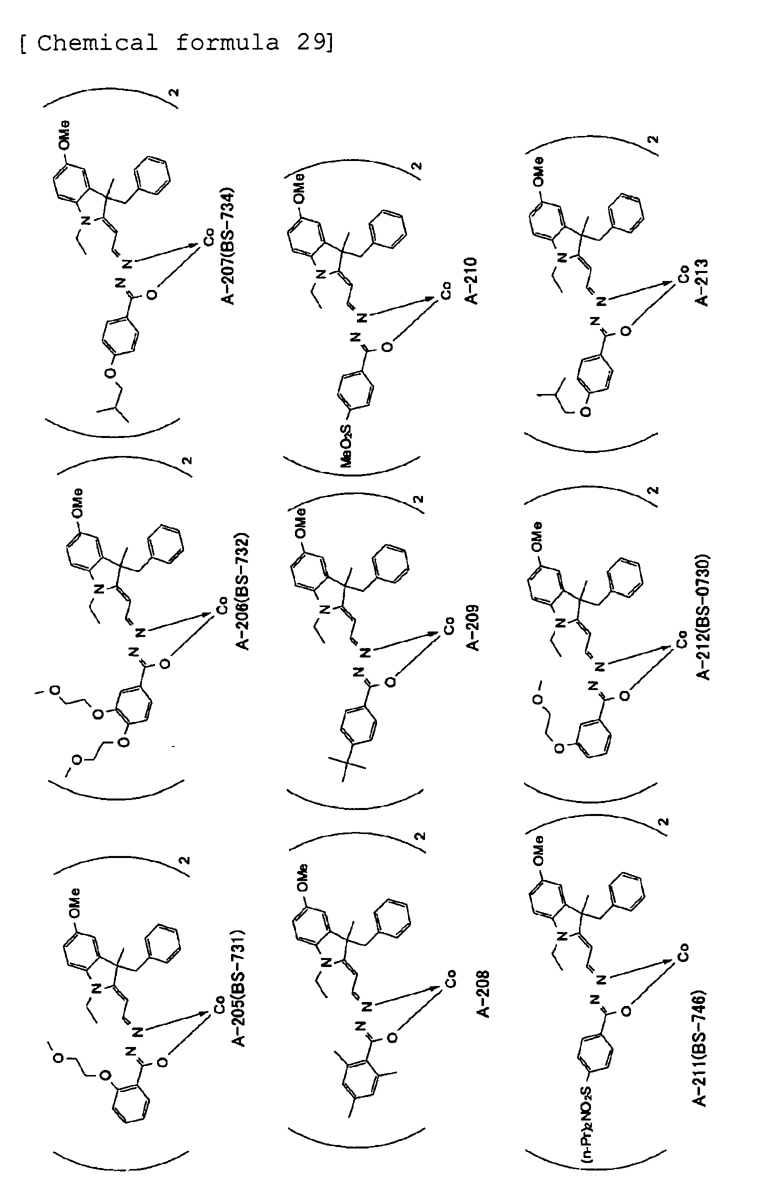

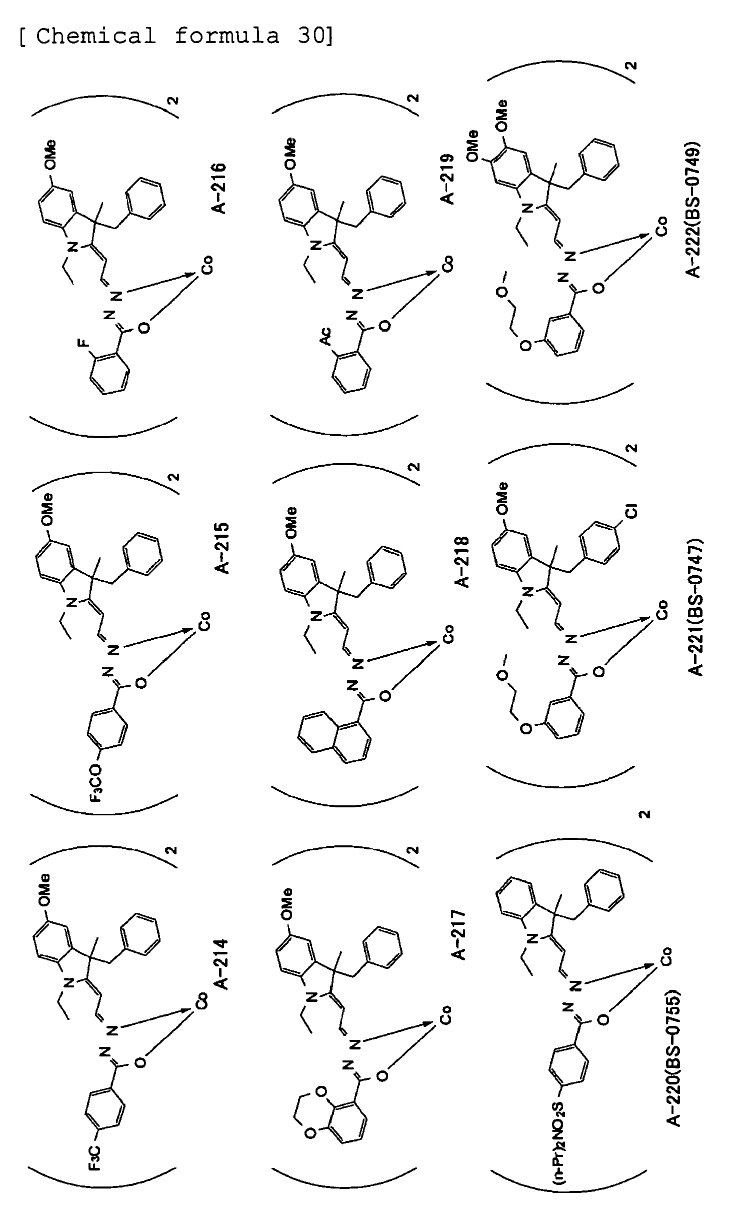

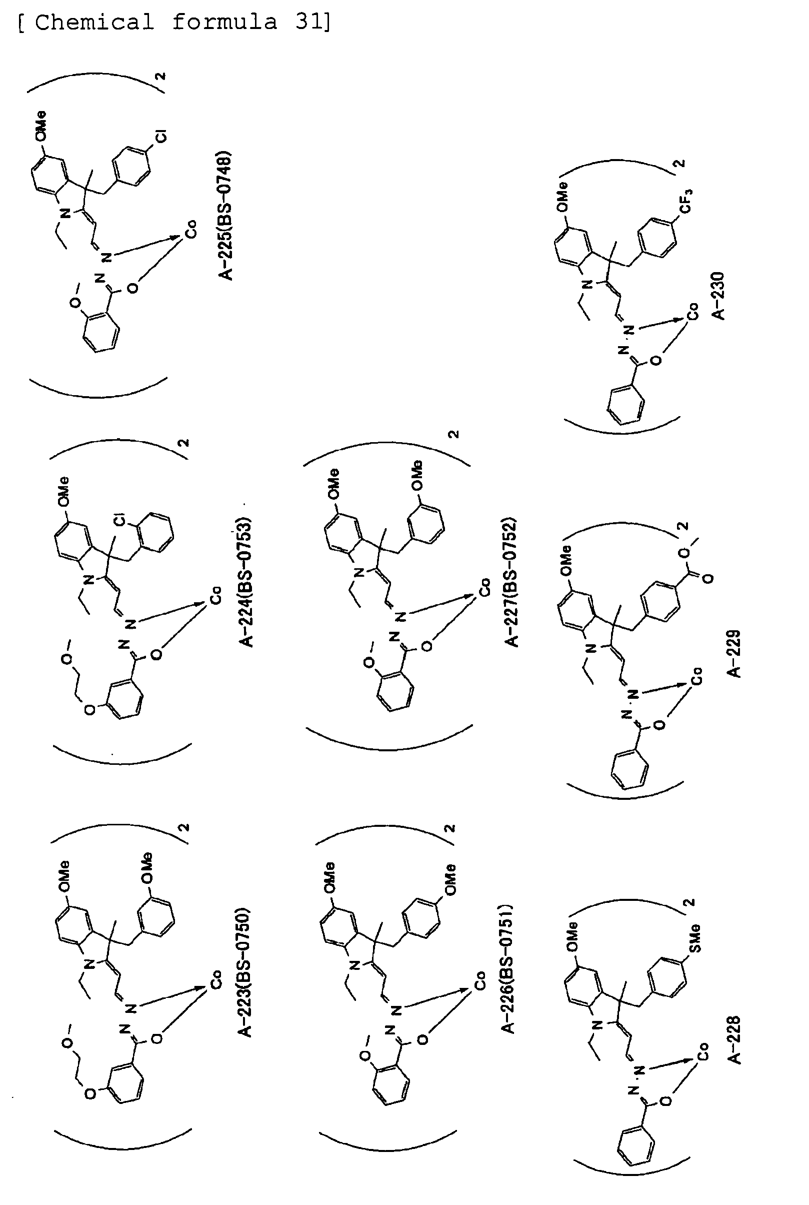

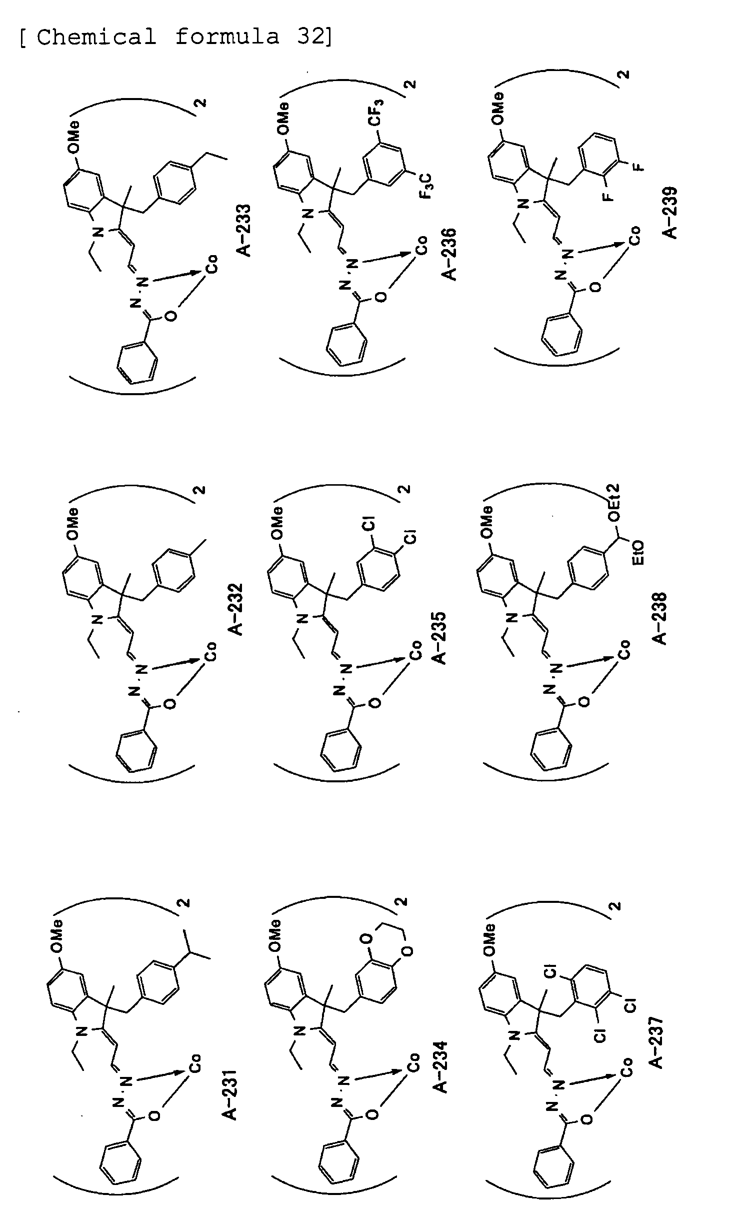

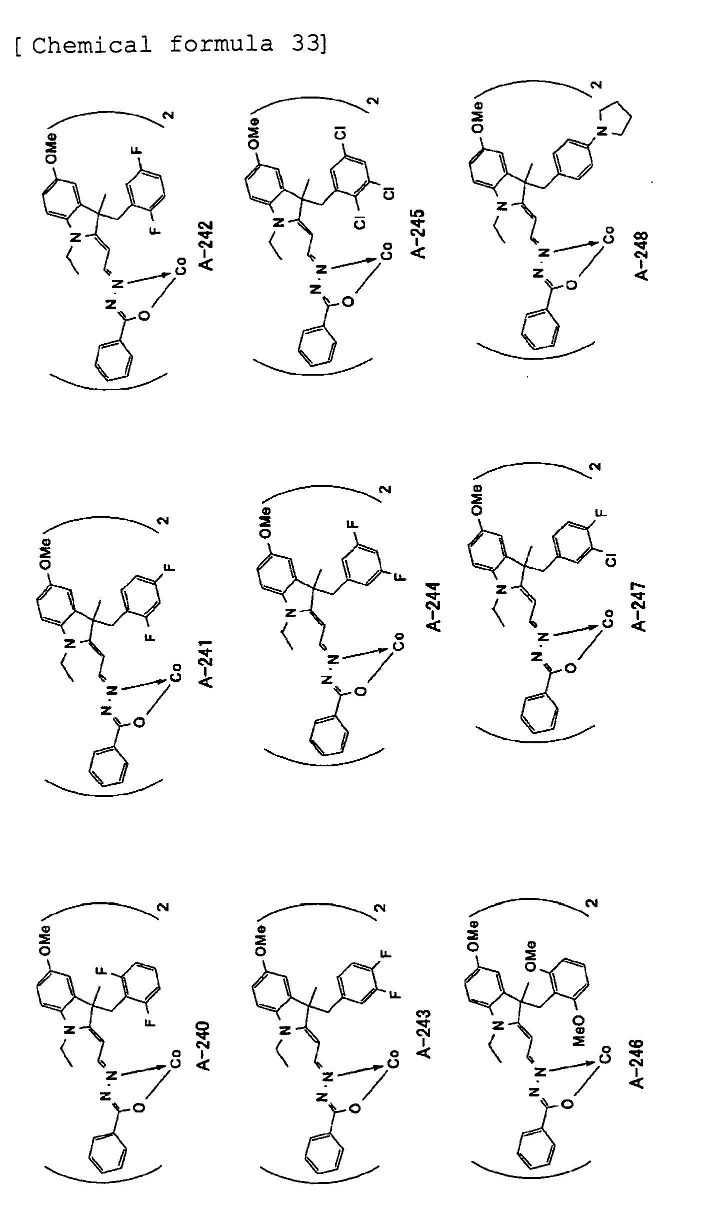

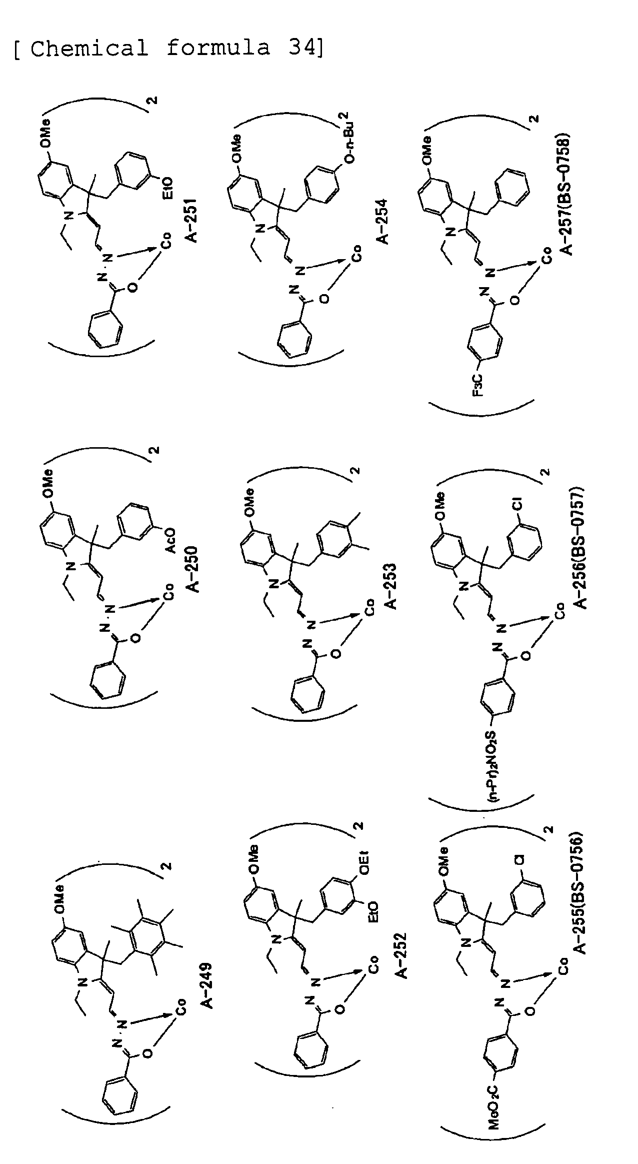

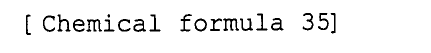

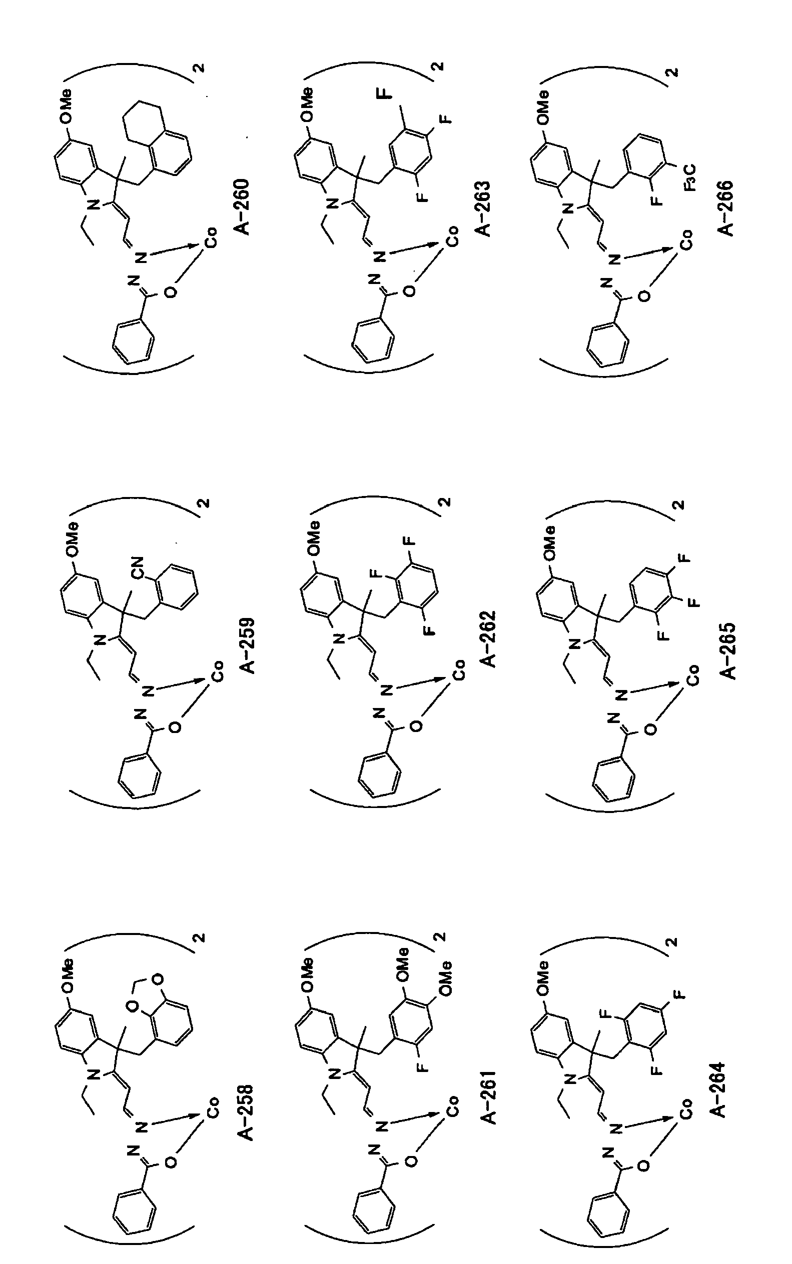

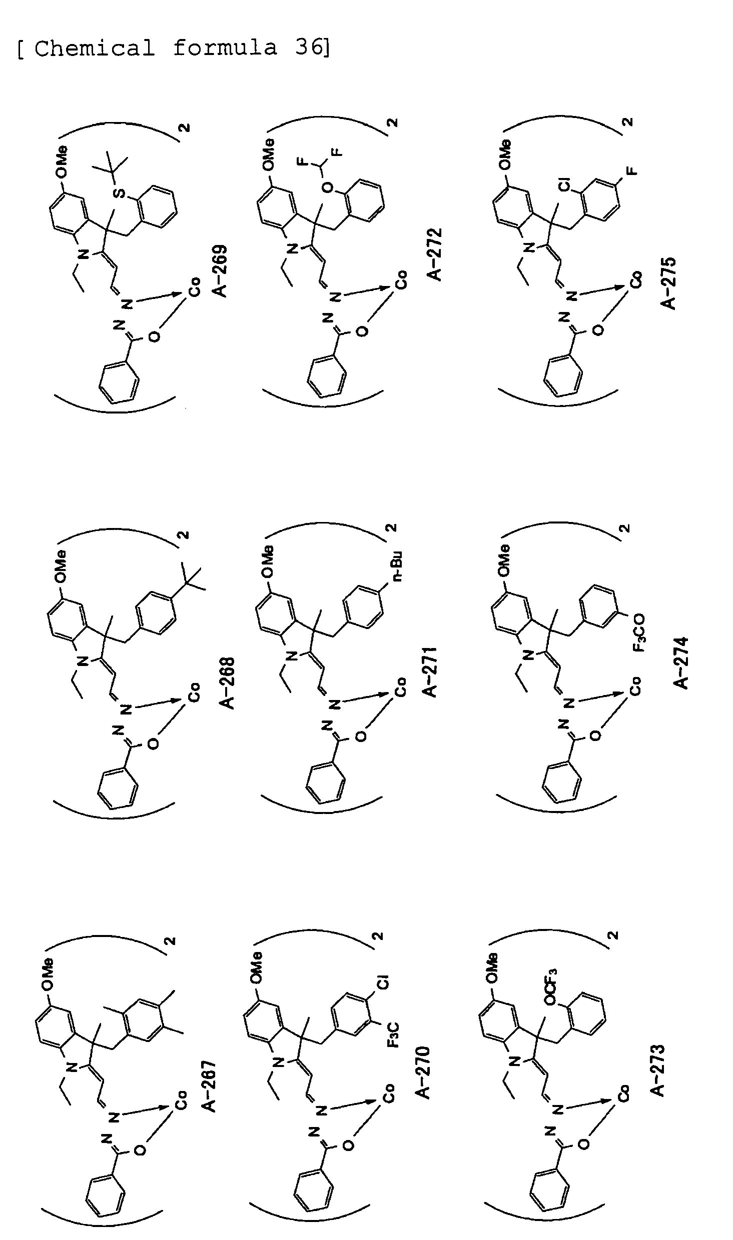

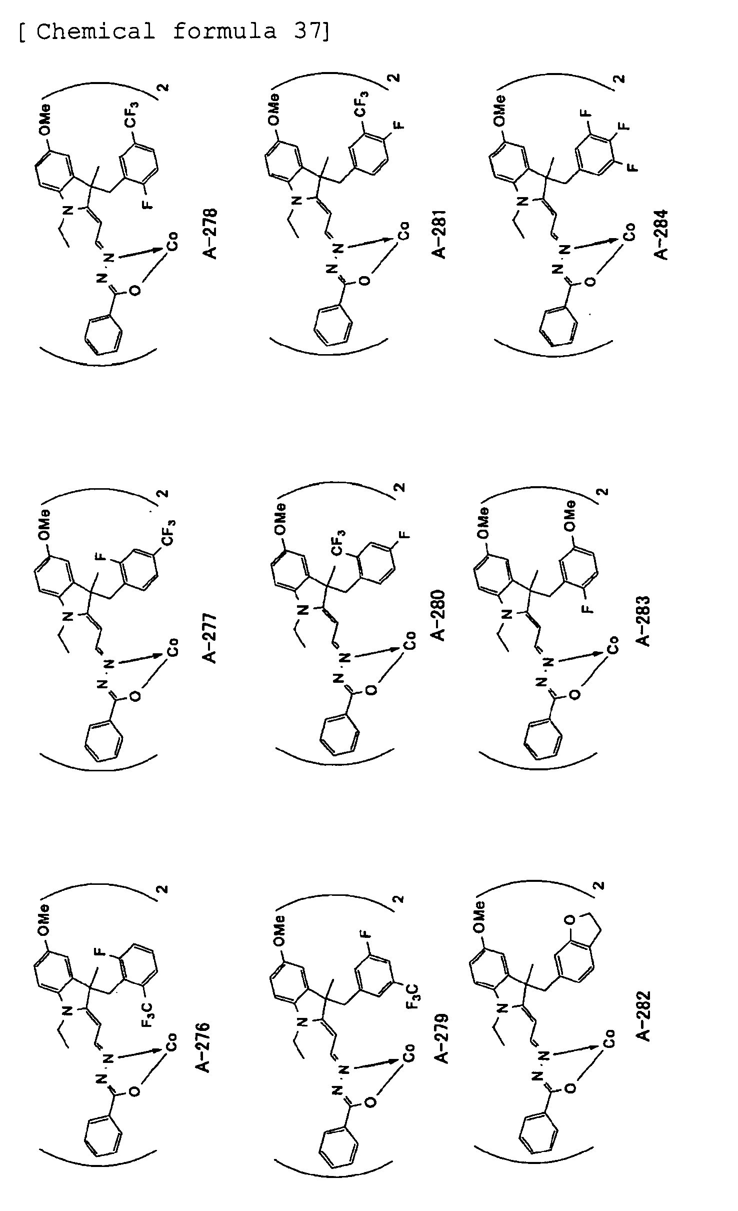

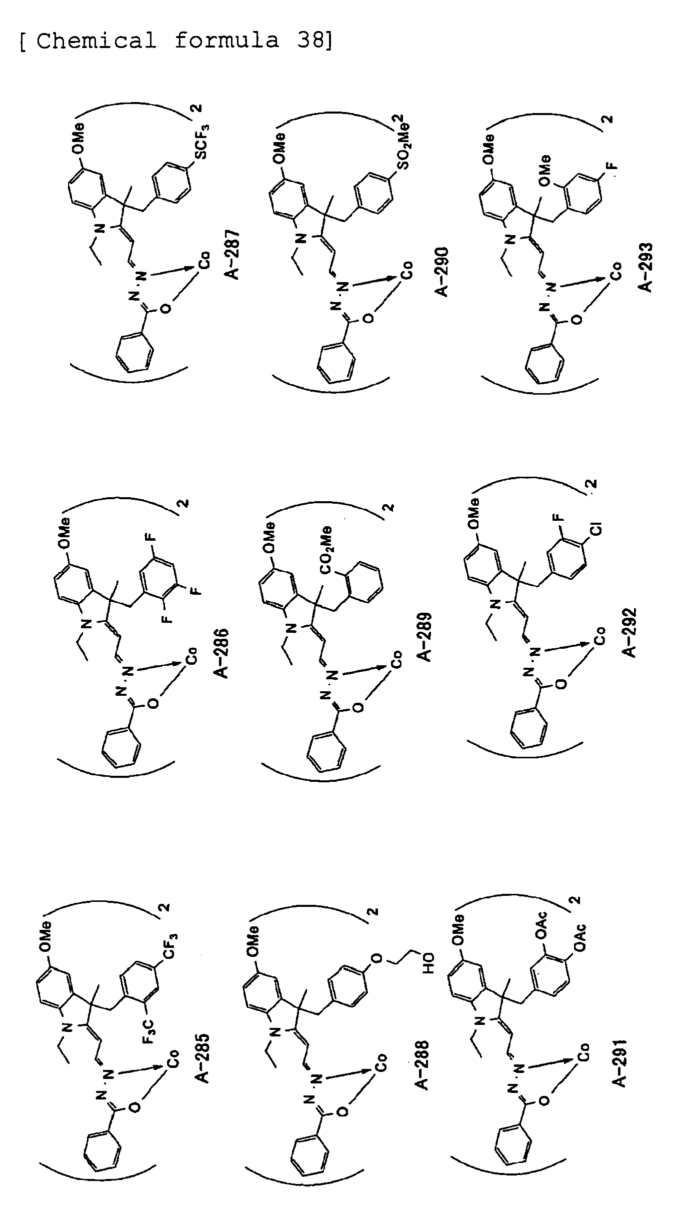

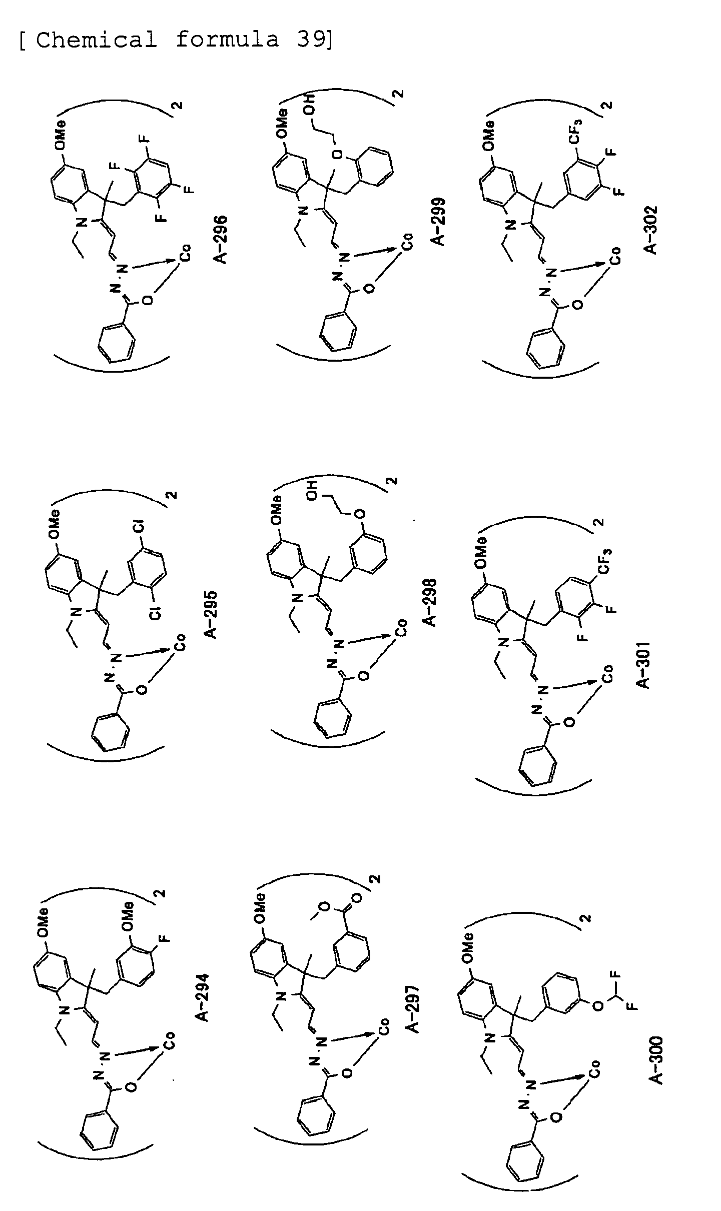

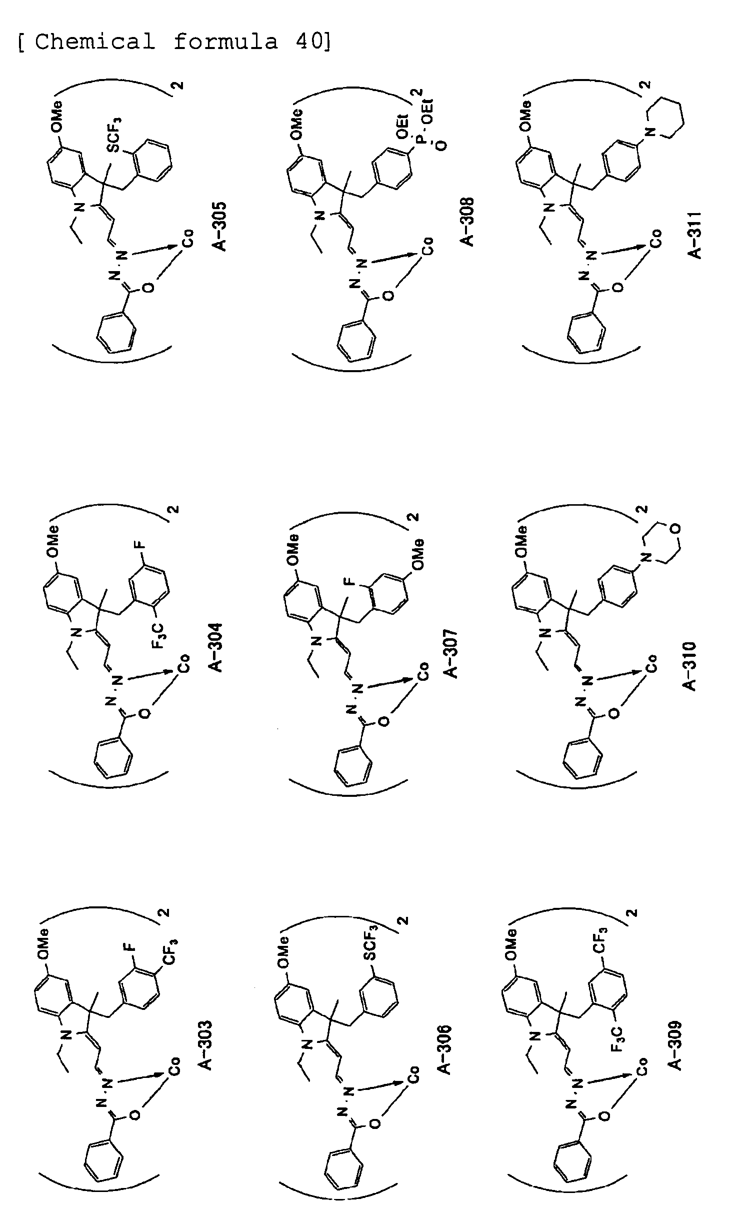

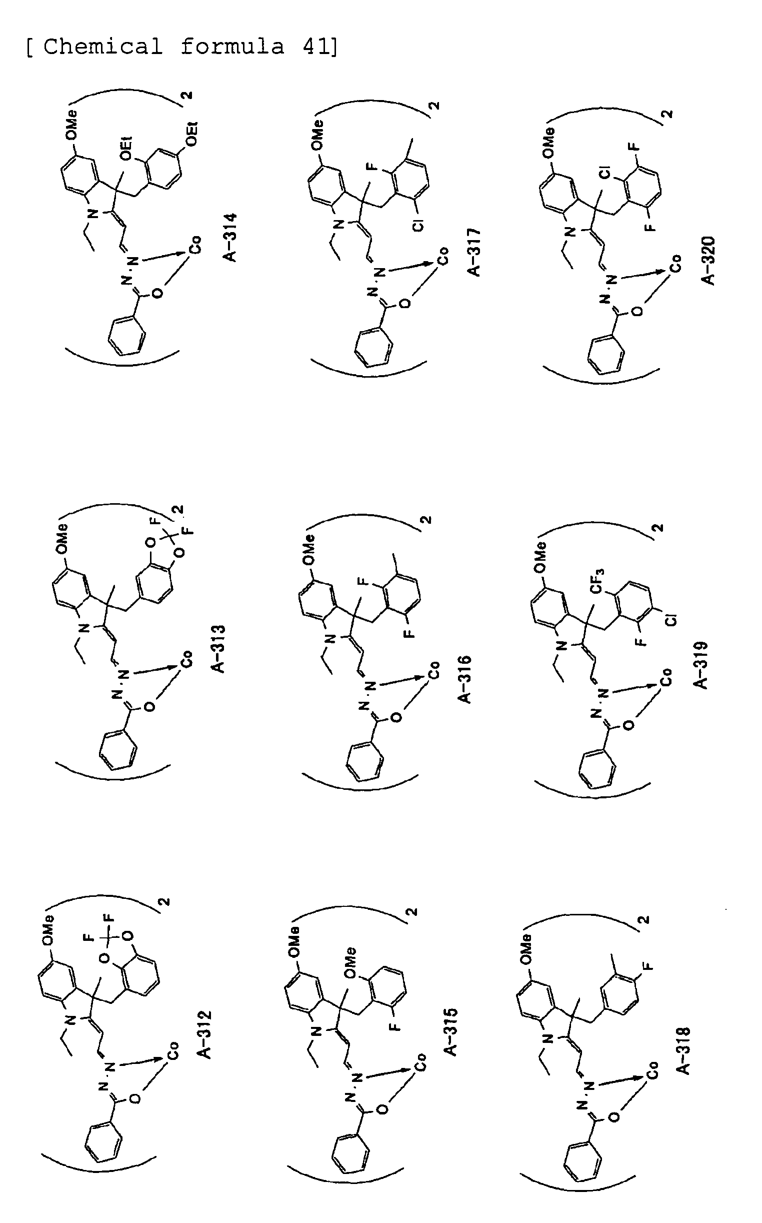

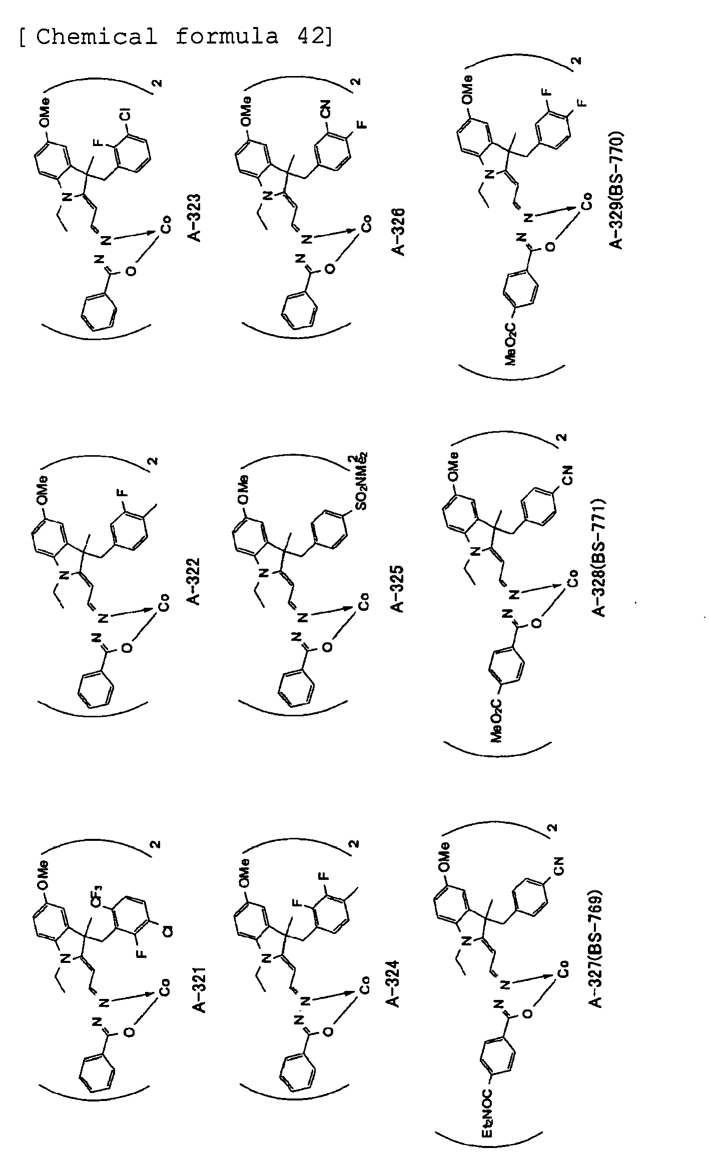

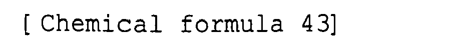

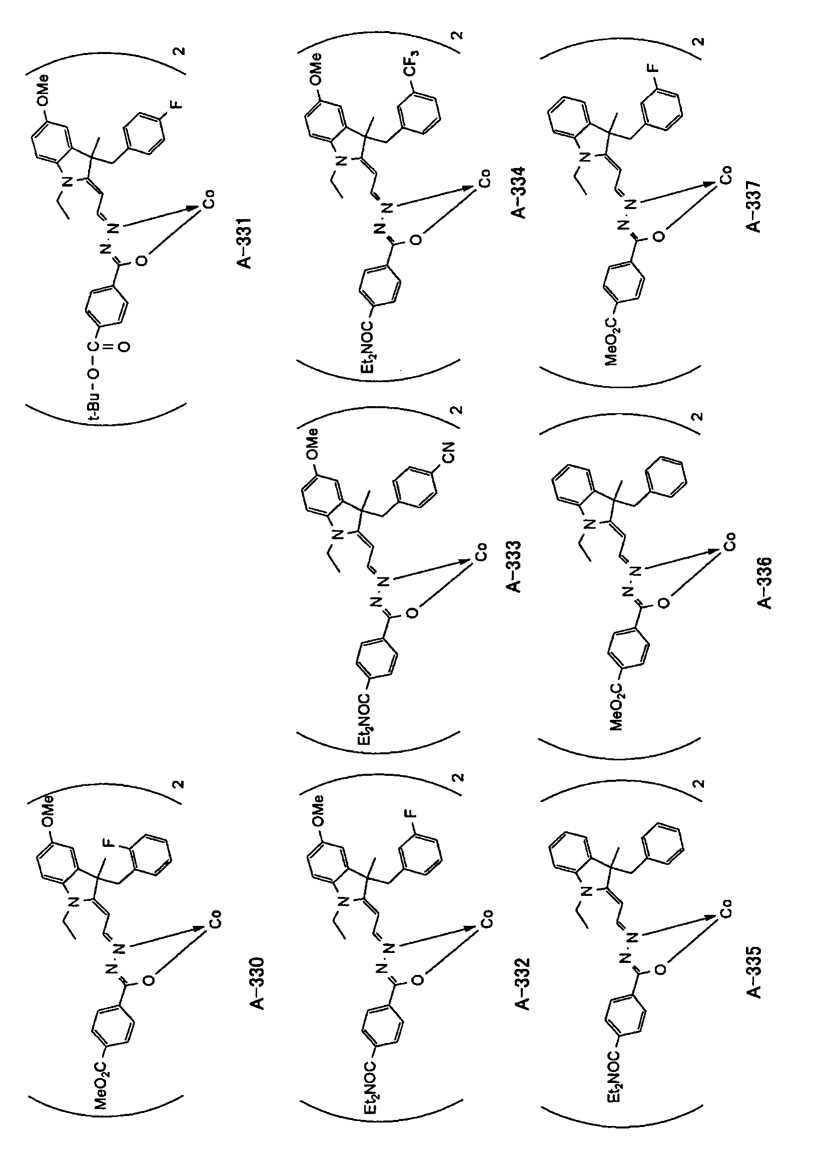

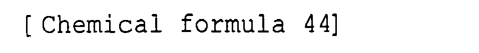

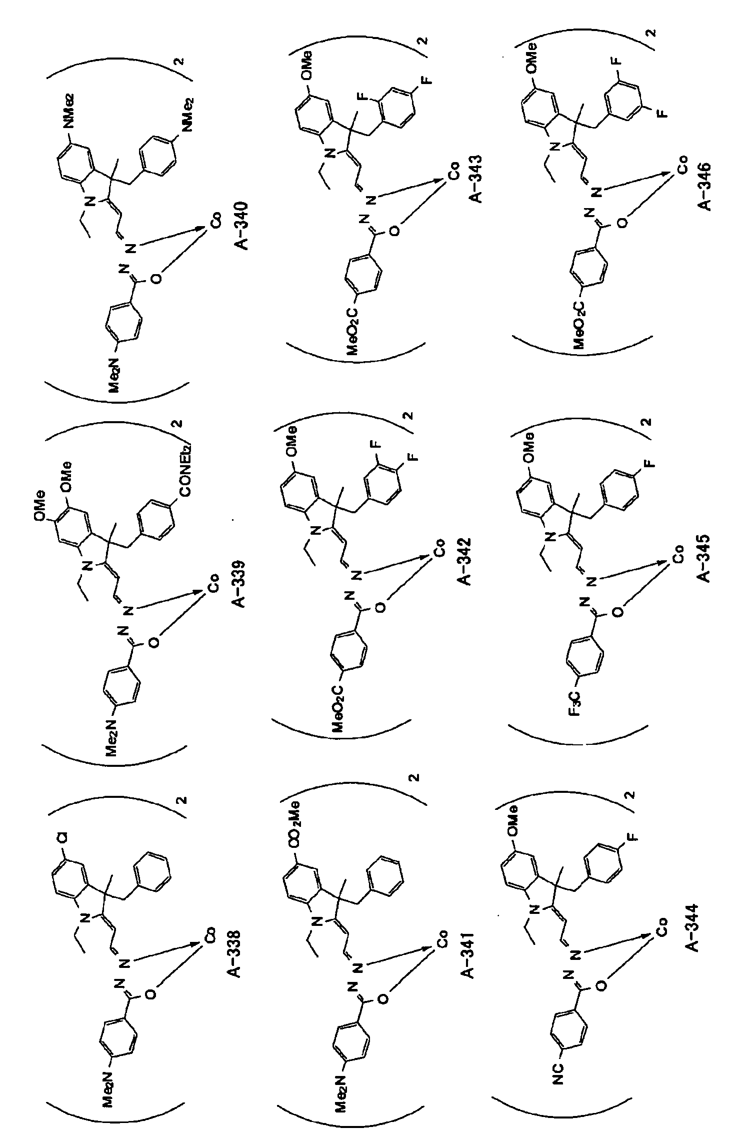

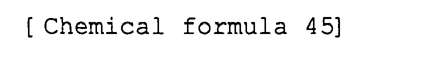

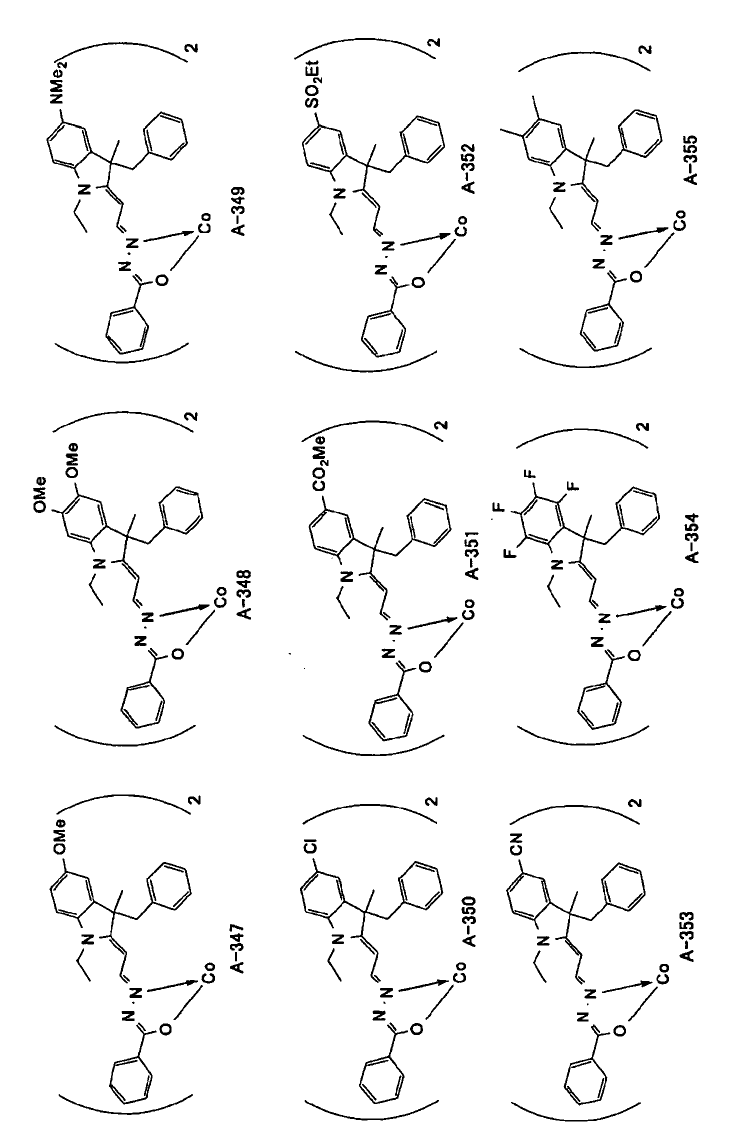

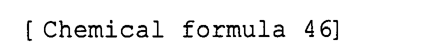

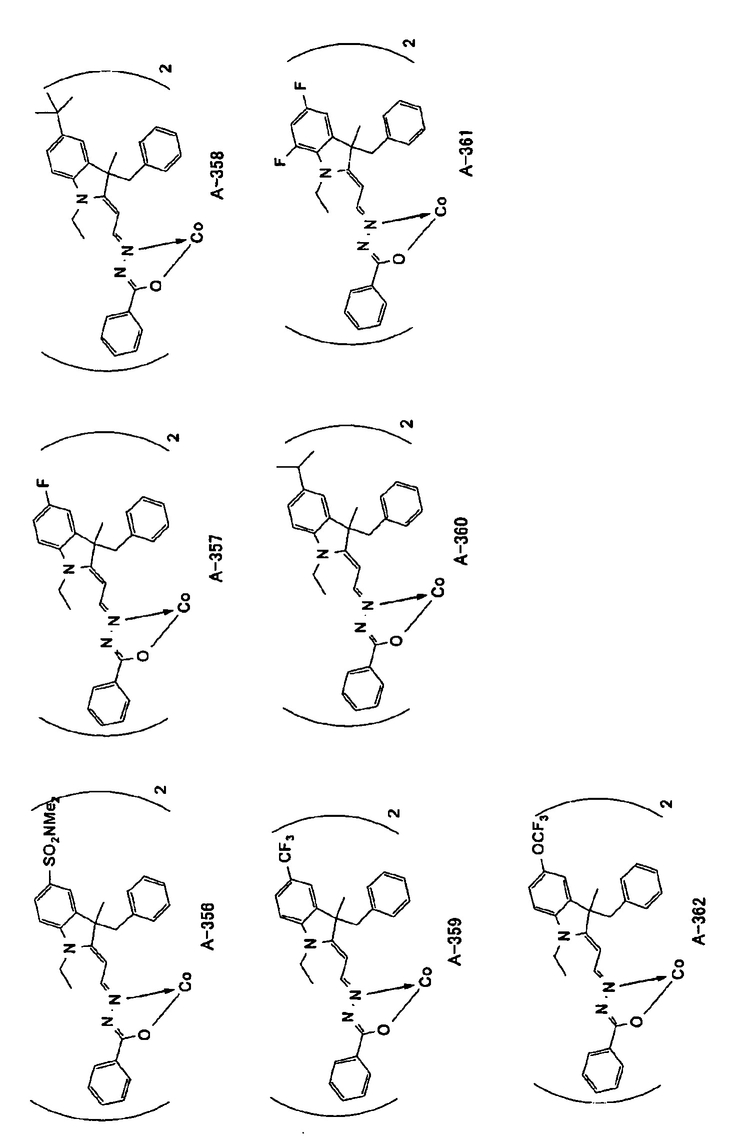

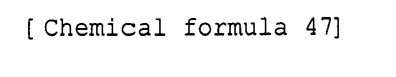

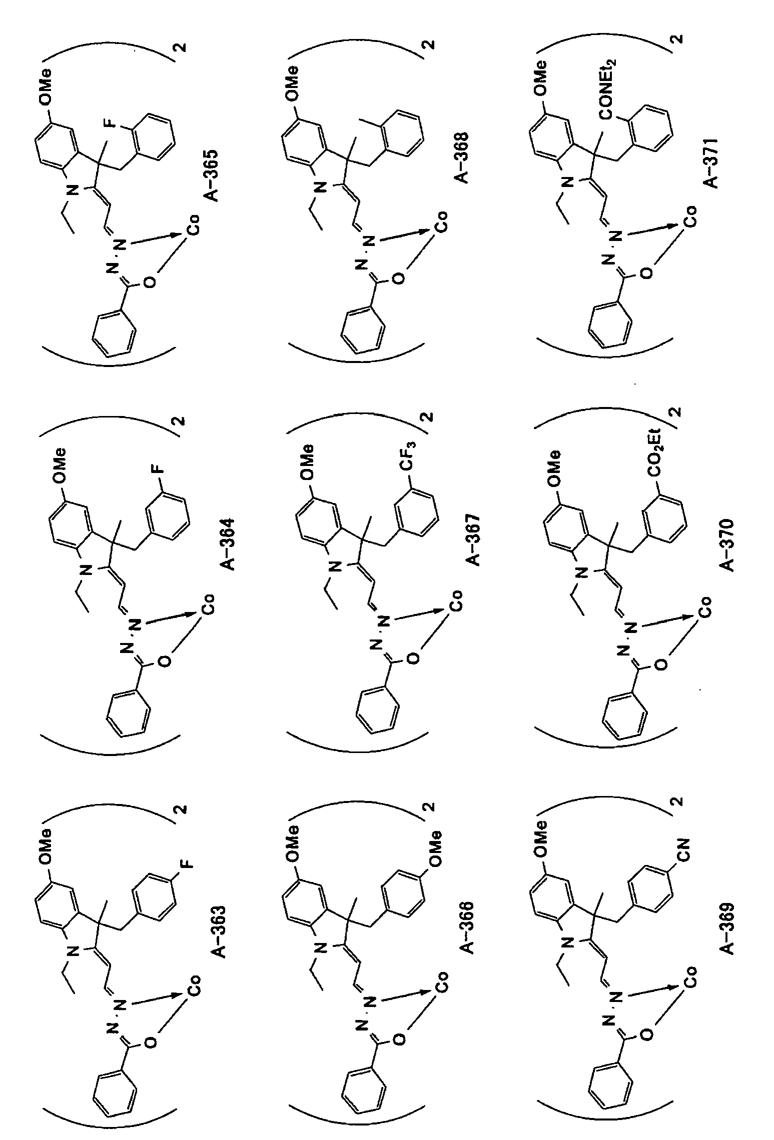

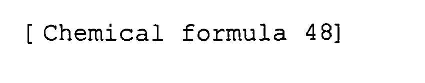

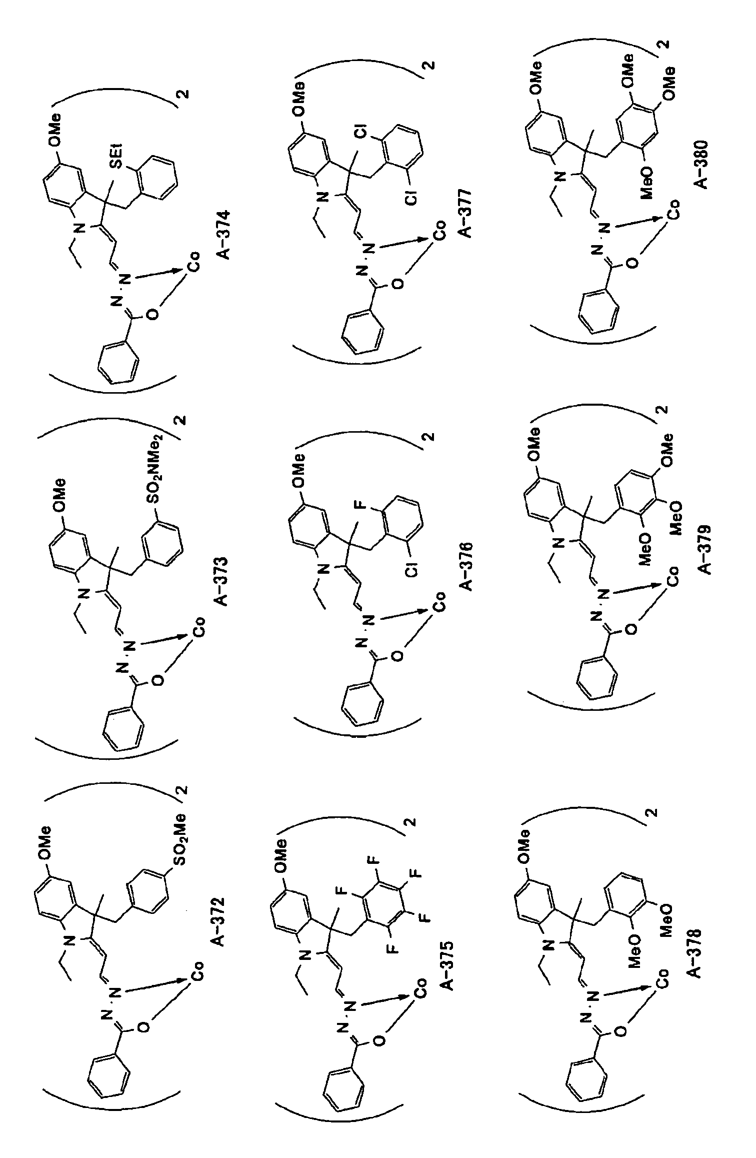

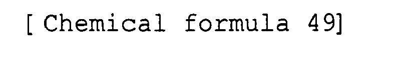

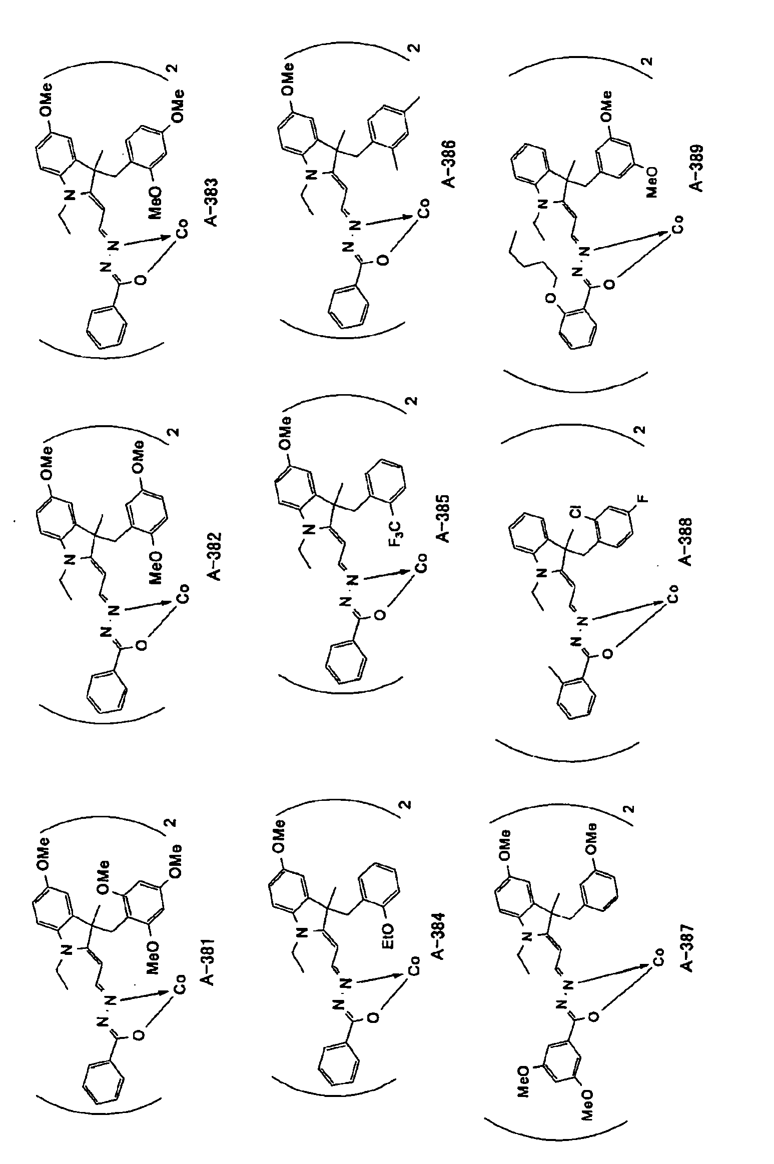

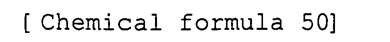

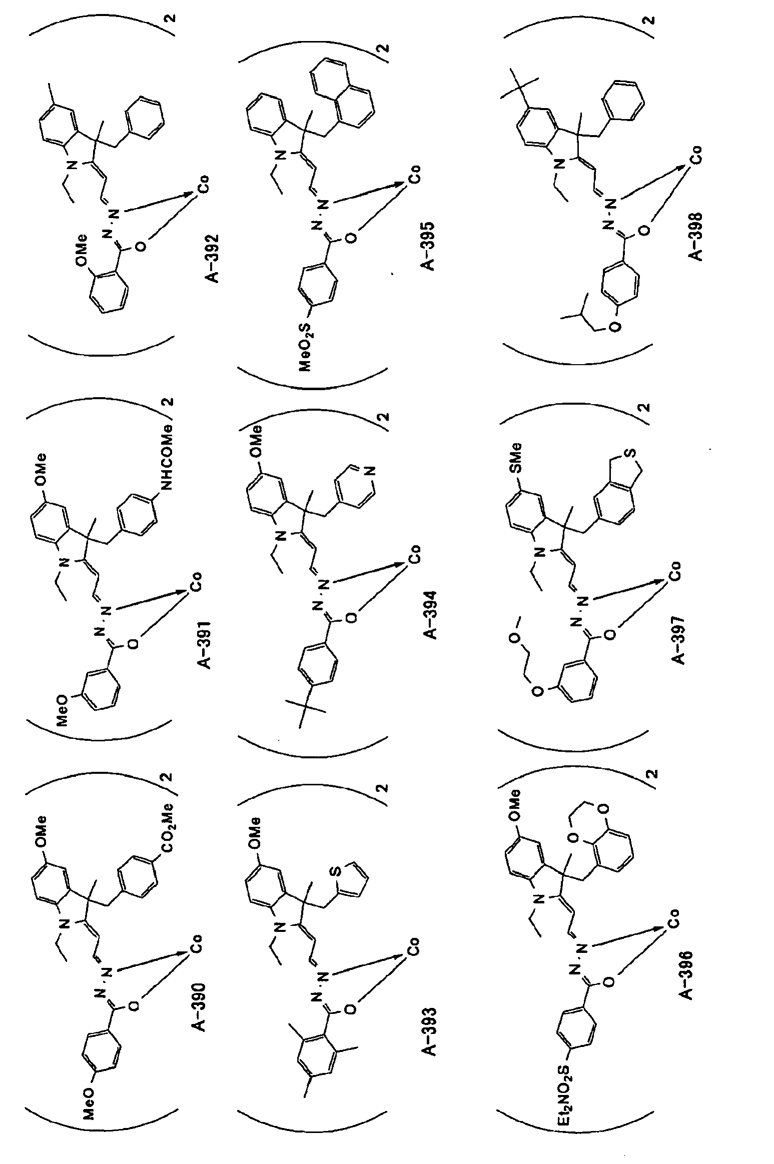

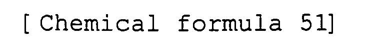

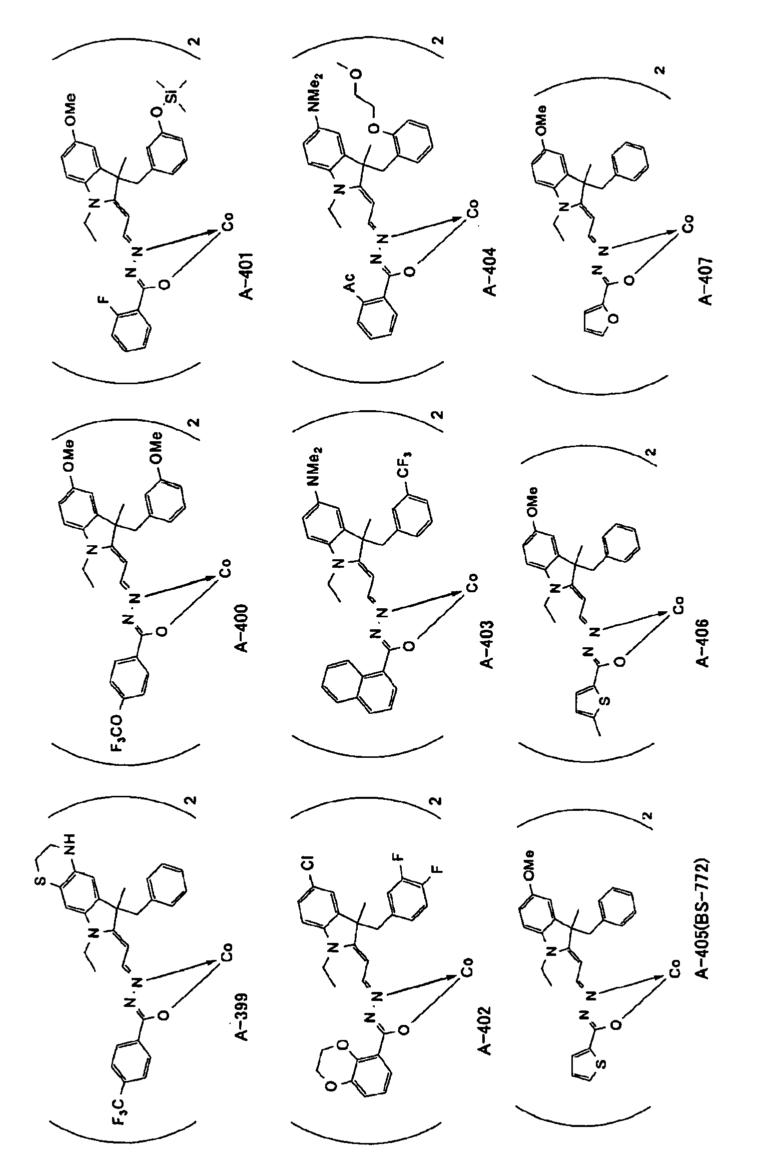

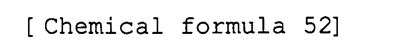

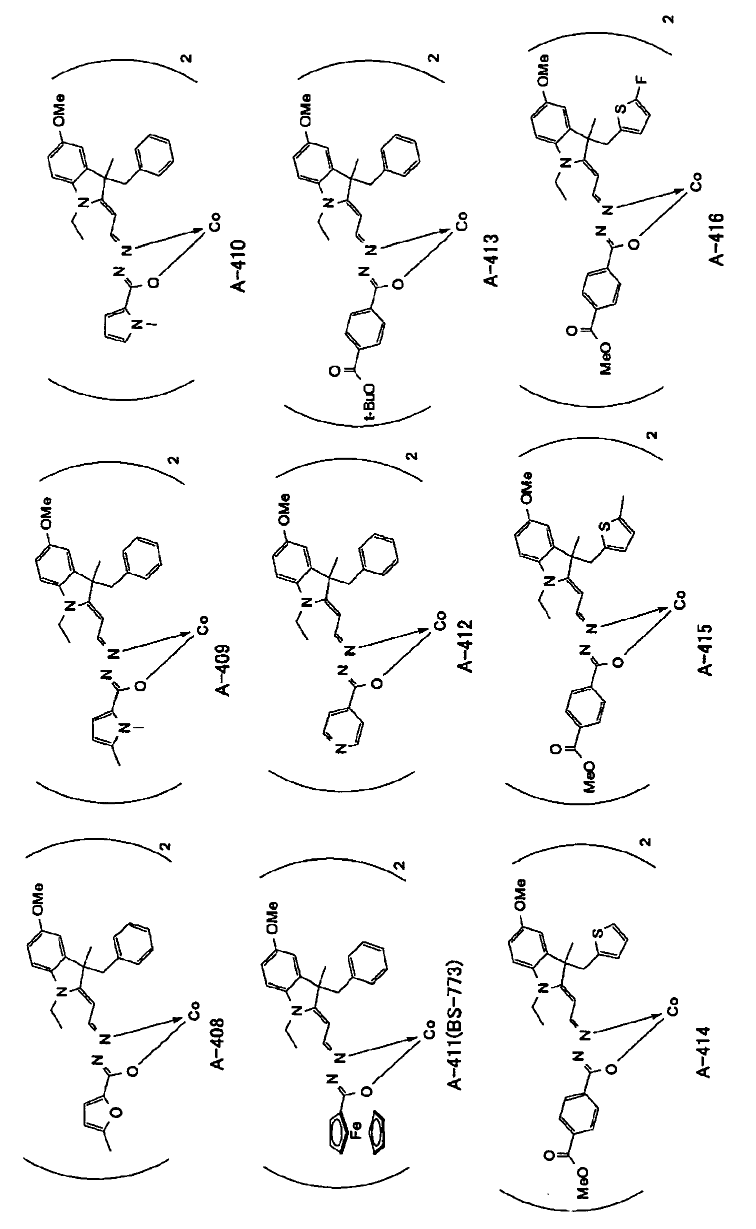

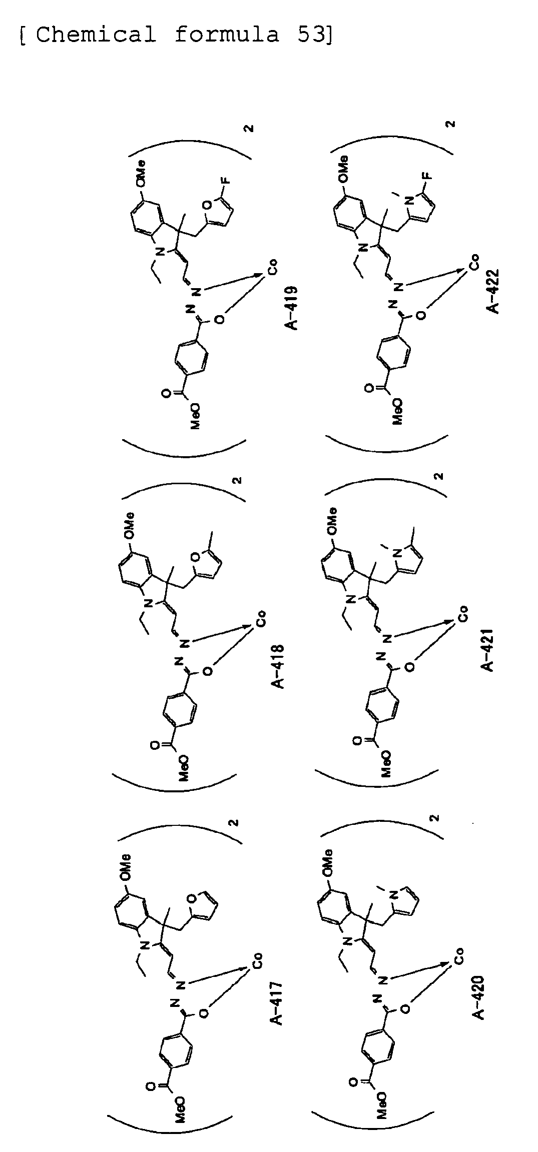

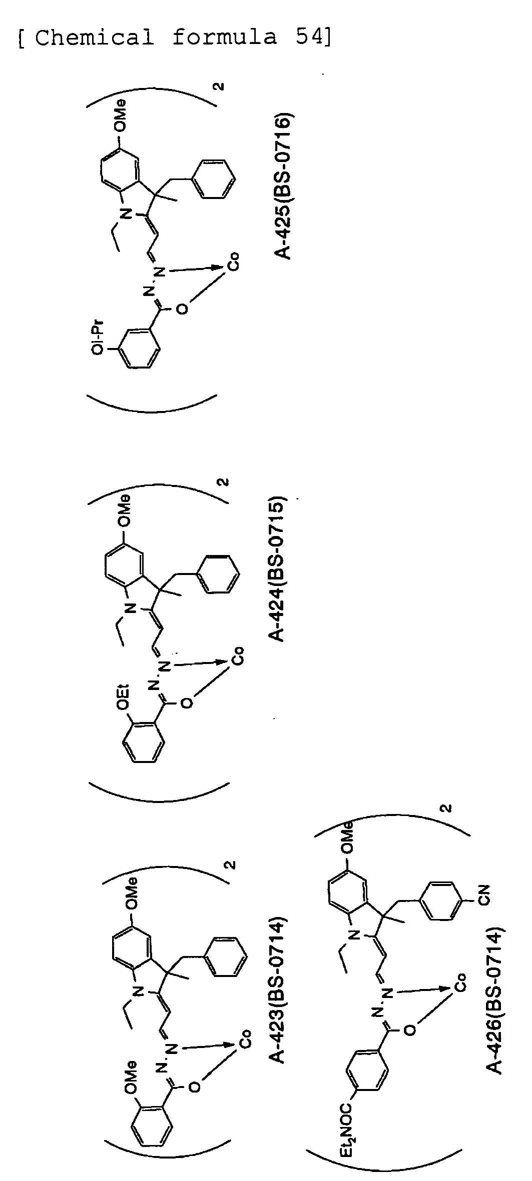

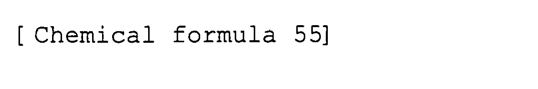

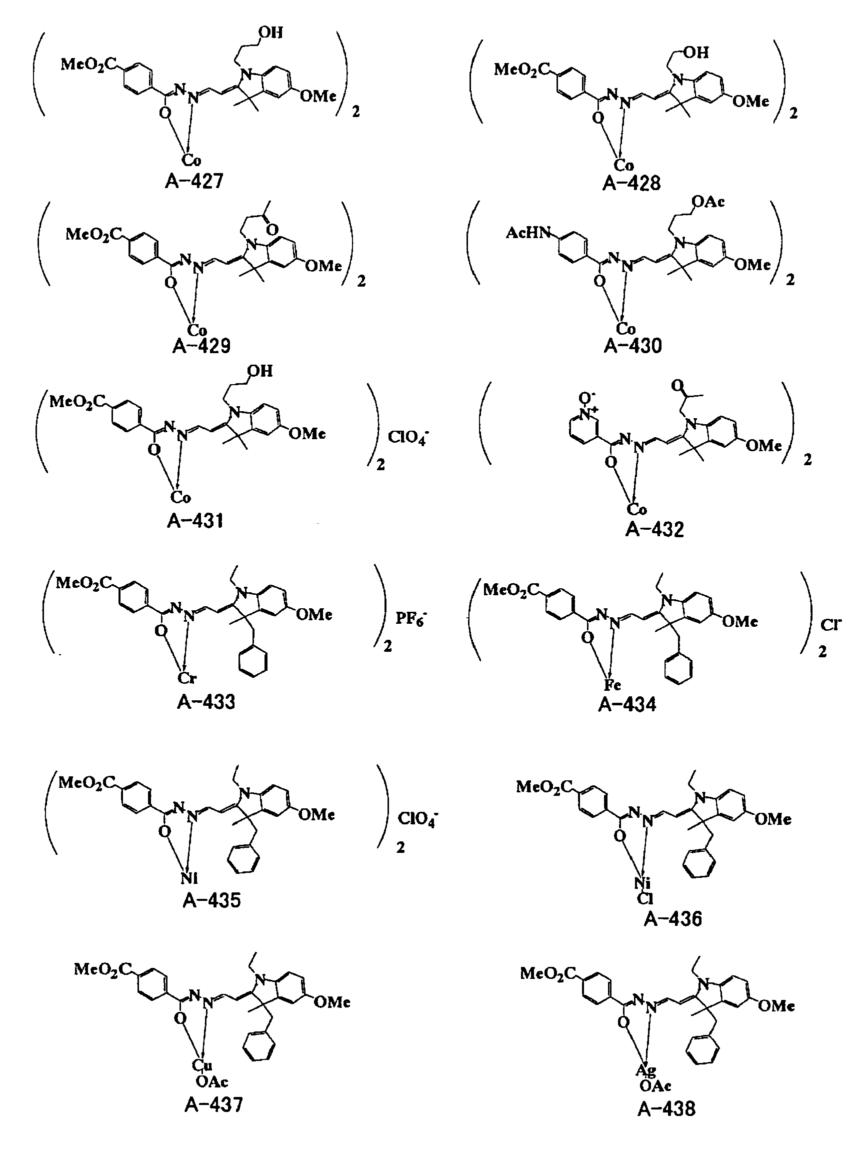

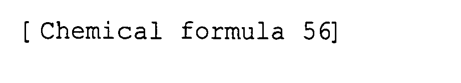

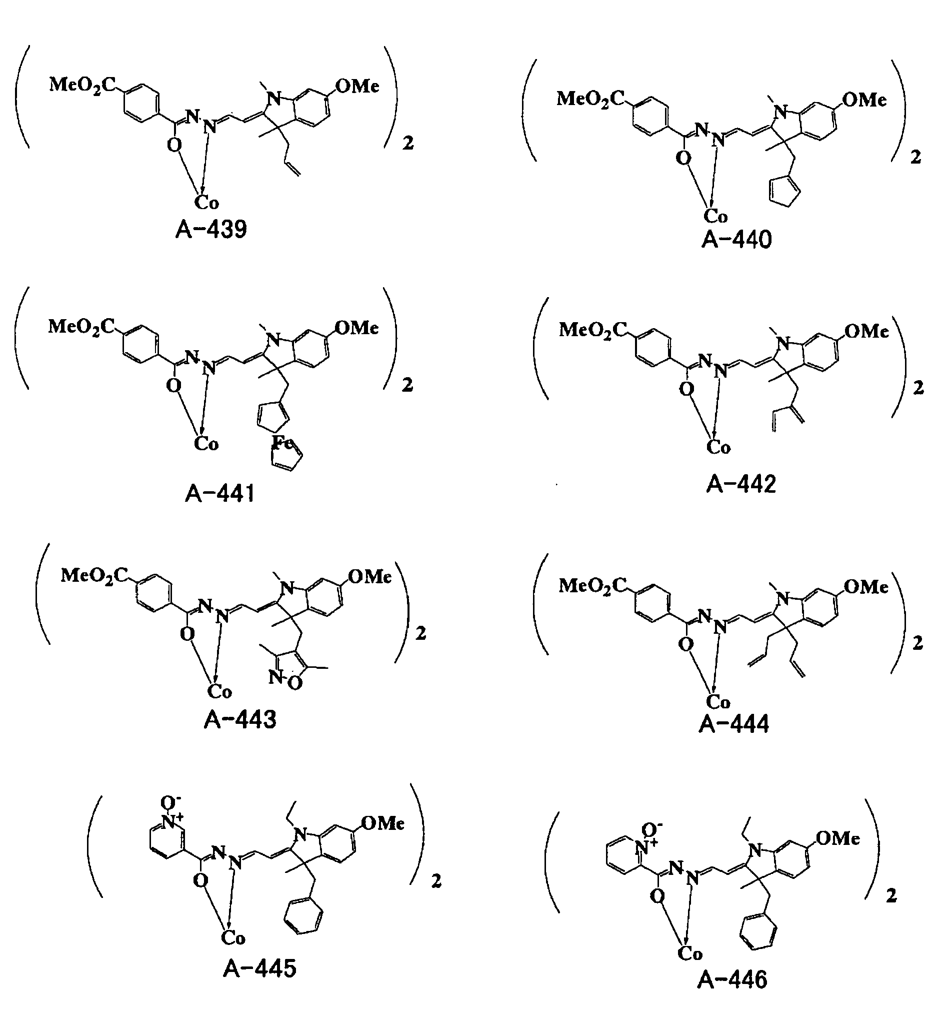

In the exemplified compounds described above, a group of compounds synthesized according to the synthesis methods described in Examples, which will be described later, are shown in the table below.
In the table, the A number corresponds to the exemplified compound, λmax is the absorption maximum in acetonitrile, and ε is the molar absorbance coefficient.

**[Table 1]**

| Compound/Example No. | λmax | ε | | Compound/Example No. | λmax | ε |
|---|---|---|---|---|---|---|
| A-1 | 415 | 69710 | | A-54 | 379 | 42640 |
| A-2 | 415 | 95348 | | A-55 | 410 | 67958 |
| A-3 | 407 | 47729 | | A-56 | 417 | 76541 |
| A-4 | 467 | 76787 | | A-57 | 402 | 58675 |
| A-5 | 413 | 67849 | | A-58 | 417 | 62467 |
| A-6 | 394 | 52841 | | A-59 | 415 | 67426 |
| A-7 | 393 | 65726 | | A-60 | 415 | 80102 |
| A-9 | 421 | 74989 | | A-61 | 415 | 69315 |
| A-11 | 401 | 60394 | | A-62 | 417 | 74816 |
| A-13 | 464 | 53149 | | A-63 | 405 | 46785 |
| A-14 | 445 | 98111 | | A-64 | 422 | 48147 |
| A-15 | 399 | 72382 | | A-65 | 422 | 76545 |
| A-16 | 363 | 67603 | | A-66 | 423 | 74101 |
| A-17 | 441 | 79423 | | A-67 | 384 | 50162 |
| A-18 | 402 | 57770 | | A-68 | 391 | 56744 |
| A-19 | 402 | 60865 | | A-69 | 422 | 68192 |
| A-21 | 409 | 65801 | | A-70 | 416 | 60806 |
| A-22 | 381 | 46041 | | A-71 | 428 | 60661 |
| A-23 | 379 | 38428 | | A-75 | 424 | 75721 |
| A-24 | 378 | 46106 | | A-75 | 397 | 63661 |
| A-26 | 369 | 55948 | | A-76 | 399 | 65020 |
| A-27 | 406 | 57035 | | A-78 | 422 | 60851 |
| A-28 | 402 | 54516 | | A-79 | 421 | 49255 |
| A-29 | 390 | 48843 | | A-80 | 433 | 53718 |
| A-42 | 433 | 57537 | | A-81 | 433 | 59282 |
| A-43 | 433 | 71105 | | A-82 | 407 | 39223 |
| A-44 | 440 | 55400 | | A-83 | 429 | 70130 |
| A-45 | 415 | 25482 | | A-84 | 425 | 52735 |
| A-46 | 421 | 30159 | | A-85 | 421 | 52741 |
| A-47 | 379 | 44761 | | A-86 | 421 | 74898 |
| A-48 | 406 | 51360 | | A-87 | 423 | 76623 |
| A-49 | 416 | 67513 | | A-88 | 406 | 67799 |
| A-50 | 405 | 42125 | | A-140 | 457 | 88230 |
| A-51 | 401 | 48610 | | A-141 | 488 | 89177 |
| A-52 | 433 | 74839 | | A-142 | 462 | 110211 |
| A-53 | 411 | 58533 | | A-143 | 408 | 70181 |

**[Table 2]**

| Compound/Example No. | λmax | ε | | Compound/Example No. | λmax | ε |
|---|---|---|---|---|---|---|
| A-144 | 414 | 67340 | | A-212 | 429 | 75582 |
| A-145 | 466 | 86674 | | A-220 | 436 | 72471 |
| A-146 | 456 | 84422 | | A-221 | 432 | 75275 |
| A-147 | 467 | 111433 | | A-222 | 431 | 78651 |
| A-148 | 458 | 83228 | | A-223 | 430 | 76168 |
| A-149 | 428 | 71212 | | A-224 | 426 | 79735 |
| A-150 | 409 | 61087 | | A-225 | 426 | 61650 |
| A-151 | 446 | 70850 | | A-226 | 424 | 39373 |
| A-152 | 446 | 73278 | | A-227 | 424 | 59816 |
| A-153 | 446 | 70109 | | A-255 | 447 | 73781 |
| A-154 | 429 | 65978 | | A-256 | 445 | 73603 |
| A-155 | 427 | 73342 | | A-257 | 439 | 70645 |
| A-156 | 449 | 66835 | | A-328 | 446 | 77364 |
| A-157 | 445 | 73743 | | A-329 | 446 | 69975 |
| A-158 | 434 | 74419 | | A-405 | 431 | 80721 |
| A-159 | 431 | 76510 | | A-411 | 423 | 79720 |
| A-160 | 424 | 63292 | | A-423 | 425 | 50921 |
| A-186 | 446 | 75105 | | A-424 | 423 | 45354 |
| A-192 | 422 | 54417 | | A-425 | 427 | 54332 |
| A-193 | 424 | 62352 | | A-426 | 433 | 69637 |
| A-195 | 423 | 59342 | | | | |
| A-197 | 437 | 65565 | | | | |
| A-198 | 423 | 59675 | | | | |
| A-199 | 429 | 77729 | | | | |
| A-200 | 427 | 55287 | | | | |
| A-201 | 428 | 70911 | | | | |
| A-202 | 422 | 58526 | | | | |
| A-203 | 420 | 62209 | | | | |
| A-204 | 424 | 48605 | | | | |
| A-205 | 423 | 54329 | | | | |
| A-206 | 415 | 67226 | | | | |
| A-207 | 414 | 68341 | | | | |
| A-211 | 445 | 76082 | | | | |

In each of the compounds shown in the tables, λmax is in the range of 350 to 530 nm. Particularly, in preferable compounds, λmax is in the range of 380 to 500 nm. Thus, it is possible to use the compounds for recording by a laser beam with a wavelength of 350 to 530 nm, which is desirable for high-density recording.

### {Synthesis method}

A hydrazide ligand constituting the hydrazide chelate complex compound of the present invention represented by general formula (1) can be easily synthesized by a reaction shown below or the like.

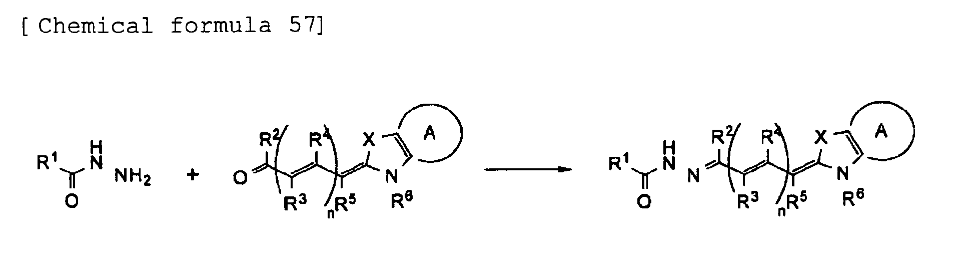

In the above reaction formula, ring A, R¹ to R⁶, X, and n have the same meanings as defined in general formula (1).

In this case, a solvent may be present or absent in the reaction system.
When a reaction solvent is used, as the solvent, a polar solvent, such as methanol, ethanol, acetonitrile, dioxane, tetrahydrofuran, chloroform, or dichloroethane; or a nonpolar solvent, such as toluene or xylene, can be used. Furthermore, as a catalyst, an inorganic acid, such as hydrochloric acid, acetic acid, or sulfuric acid; or an organic acid, such as p-TsOH (p-toluenesulfonic acid) or PPTS (pyridinium p-toluenesulfonate) may be added thereto.
In such a case, the amount of the catalyst to be added is not particularly limited as long as the reaction proceeds. Preferably, the catalyst is added in an amount of about 1/100 to 1 mole relative to 1 mole of the substrate. When the acid coordinates with the heteroatom of the substrate, preferably, a molar amount corresponding to the amount coordinated with the substrate is further added.
The reaction temperature is preferably from room temperature to about a refluxing temperature of the solvent. The reaction time is one minute to about 48 hours, and in general, about 3 hours to about 10 hours, in view of the cleanliness of the reaction.

The hydrazide chelate complex compound of the present invention can be obtained by treating, with a base, the hydrazide ligand synthesized by the technique described above, and then subjecting the resulting product to reaction under heating at a temperature from room temperature to about a refluxing temperature of the solvent. When a reaction solvent is used, as the solvent, a polar solvent, such as water, methanol, ethanol, acetonitrile, tetrahydrofuran, dioxane, dimethoxyethane, dichloroethane, or chloroform; or a nonpolar solvent, such as toluene or xylene, can be used. As the base, an inorganic base, such as sodium hydroxide, potassium hydroxide, potassium carbonate, sodium carbonate, cesium carbonate, sodium hydride, tert-butoxysodium, or tert-butoxypotassium; or an organic base, such as triethylamine or piperidine, can be used.

### {Light fastness and solubility in coating solvent}

Among the hydrazide chelate complex compounds of the present invention, preferred ones are characterized by being excellent in terms of light fastness and solubility in a coating solvent, and being excellent in terms of film properties and recording sensitivity when used for forming a recording layer of an optical recording medium.

In this case, the phrase "excellent in terms of light fastness" means that even if a light fastness test is performed under conditions at a temperature of 58°C and a humidity of 50%, with irradiation of a xenon lamp (intensity 0.55 W/m²) for 40 hours on a thin film formed of a hydrazide chelate complex compound with a thickness of about 50 nm, usually 70% or more, preferably 80% or more, and particularly preferably 90% or more of the hydrazide chelate complex compound in the thin film remains without being degraded. Here, the degree of degradation is determined by the rate of decrease in the absorption maximum at 300 to 500 nm.

Specifically, the light fastness test is carried out in the manner described below.
First, a solution containing a hydrazide chelate complex compound is applied over a substrate such that the film thickness after drying is about 50 nm, followed by drying, thus obtaining a layer containing the hydrazide chelate complex compound. The layer containing the resulting dye is irradiated with a xenon lamp (intensity 0.55 W/m²) for a predetermined period of time under conditions at a temperature of 58°C and a humidity of 50%. The absorbances at the absorption maximum wavelength before and after the irradiation are compared to obtain the dye residual ratio.

Furthermore, the phrase "excellent in terms of solubility in a coating solvent" means that the solubility in 2,2,3,3-tetrafluoropropanol (TFP) at 20°C under normal pressure conditions is 0.7% by weight or more, preferably 1.0% by weight or more, and more preferably 1.5% by weight or more. The dissolution is determined by whether or not residual crystals of the compound remain in the solvent when the compound and TFP are mixed with a predetermined concentration.
Additionally, in the application of the present invention, the upper limit of the solubility is not particularly restricted, but is usually 20% by weight or less, and in particular, about 10% by weight or less.

The reasons for the fact that the hydrazide chelate complex compound of the present invention is excellent in terms of light fastness and solubility in a coating solvent include that the hydrazide chelate complex compound is stabilized by metal chelation, that the fused ring moiety (1A) in general formula (1) shown below is sterically bulky and overlapping of molecules is minimized, thus improving the solubility, and others.

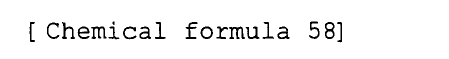

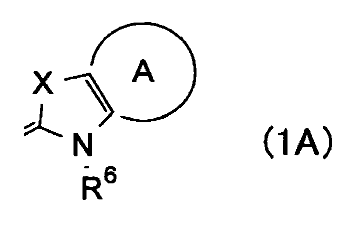

Furthermore, since there are two coordination points for one ligand and the fused ring moiety (1A) is relatively reactive, stability under normal conditions and instability under recording laser irradiation conditions, i.e., high sensitivity, are expected.

### {Film properties}

Furthermore, the hydrazide chelate complex compound according to the present invention is excellent in terms of film properties. That is, after a recording layer is formed by spin coating, whitening caused by crystallization of the compound is not observed on the surface of the disk, which is also industrially advantageous.

### { Application}

Furthermore, among the hydrazide chelate complex compounds of the present invention, preferred ones are suitably used for multilayer media. That is, in a multilayer medium, when information is recorded in the individual layers, since absorption and transmission of light inevitably occur in layers other than layers intended for recording, it is necessary to use a dye which has better recording sensitivity than a dye used for a single-layer medium. The hydrazide chelate complex compound of the present invention has good recording sensitivity compared with the conventional one, and thus is believed to be more preferable.

### [Dye for forming recording layer of optical recording medium]

A dye for forming a recording layer of an optical recording medium according to the present invention contains the hydrazide chelate complex compound of the present invention described above.
In the dye for forming a recording layer of an optical recording medium according to the present invention, only one hydrazide chelate complex compound of the present invention may be used, or two or more hydrazide chelate complex compounds of the present invention may be used in any combination and at any ratio. In addition to one or two or more hydrazide chelate complex compounds of the present invention, one or two or more other dyes may be used together.
However, when a dye or dyes other than the hydrazide chelate complex compound or compounds of the present invention are used together, from the standpoint that the excellent properties of the hydrazide chelate complex compound or compounds of the present invention are sufficiently exhibited, the ratio of the hydrazide chelate complex compound or compounds of the present invention in the total dyes is set at usually 50% by weight or more, and preferably 70% by weight or more.

The dye of other kind, which can be used together with the hydrazide chelate complex compound of the present invention, preferably has absorption in the wavelength region of a laser beam for recording and absorbs the energy of the irradiated laser beam so that pits are formed as a result of thermal deformation, such as decomposition, evaporation, or melting, at the irradiated spots in the recording layer, the reflective layer, or the substrate. Furthermore, it is also possible to use at the same time a dye suitable for recording with a near-infrared laser beam with a wavelength selected from the range of 770 to 830 nm for CD-R or a red laser beam with a wavelength selected from the range of 620 to 690 nm for DVD-R so that an optical recording material suitable for recording with laser beams in a plurality of wavelength regions is prepared. Furthermore, by selecting a dye having good light fastness from the dyes for the CD-R or DVD-R use and using it together with the hydrazide chelate complex compound of the present invention, light fastness can be further improved.
Specific examples of the dye of other kind, which can be used together, include a metal-containing azo dye, a benzophenone dye, a phthalocyanine dye, a naphthalocyanine dye, a cyanine dye, an azo dye, a squalirium dye, a metal-containing indoaniline dye, a triarylmethane dye, a merocyanine dye, an azlenium dye, a naphthoquinone dye, an anthraquinone dye, an indophenol dye, a xanthene dye, an oxazine dye, and a pyrylium dye. These may be used alone, or two or more may be used together.

Furthermore, in the dyes of other kind, it is also possible to use a dye suitable for recording with a near-infrared laser beam with a wavelength selected from the range of 770 to 830 nm for CD-R or a red laser beam with a wavelength selected from the range of 620 to 690 nm for DVD-R so that an optical recording material suitable for recording with laser beams in a plurality of wavelength regions is prepared.

### [Optical recording medium]

### {Recording layer}

A recording layer included in an optical recording medium of the present invention is formed using a dye for forming a recording layer of an optical recording medium according to the present invention (hereinafter, may be simply referred to as "dye of the present invention"), the dye containing at least one hydrazide chelate complex compound of the present invention represented by the general formula (1), preferably by the general formula (2), described above.
That is, the recording layer of the optical recording medium of the present invention contains one or two or more hydrazide chelate complex compounds of the present invention.

The proportion of the dye of the present invention in the recording layer is usually 10% by weight or more, preferably 50% by weight or more, and particularly preferably 70% by weight or more.
If the proportion of the dye is too low, recording sensitivity is significantly decreased, which is not desirable. When two or more dyes are used together as the dye of the present invention, the total is set so as to satisfy the range described above. Furthermore, when a binder and various additives, which will be described below, are used, preferably, the amounts of the binder and the additives are adjusted such that the proportion of the dye of the present invention in the resulting recording layer is in the range described above. Furthermore, from the standpoint that the excellent properties of the dye of the present invention are sufficiently exhibited, particularly preferably, a binder or additives are not used for the recording layer according to the present invention.

In order to improve film forming properties, the recording layer may contain a binder. Examples of the binder include known binders, such as polyvinyl alcohol, polyvinyl pyrrolidone, a ketone resin, nitrocellulose, cellulose acetate, an acrylic resin, a polystyrene resin, a urethane resin, polyvinyl butyral, polycarbonate, and polyolefin. These may be used alone or in mixture of two or more.
If the proportion of the binder in the recording layer is too high, the recording sensitivity is significantly decreased. Therefore, when the binder, and various additives, which will be described below, are used, the amount is adjusted so that the proportion of the dye of the present invention in the resulting recording layer satisfies the range described above.

Furthermore, the recording layer may contain a singlet oxygen quencher for improving stability and light fastness, a recording sensitivity-improving agent, and the like.

Examples of the singlet oxygen quencher include transition metal chelate compounds with acetylacetonate, bisphenyldithiol, salicylaldehyde oxime, bisdithio-α-diketone or the like. These may be used alone, or two or more may be used together.

As the recording sensitivity-improving agent, a metal compound in which a metal, such as a transition metal, is contained in the compound in the form of atoms, ions, clusters, or the like may be mentioned. Examples thereof include organic metal compounds, such as an ethylenediamine complex, an azomethine complex, a phenylhydroxyamine complex, a phenanthroline complex, a dihydroxyazobenzene complex, a dioxime complex, a nitrosoaminophenol complex, a pyridyltriazine complex, an acetylacetonate complex, and a metallocene complex. These may be used alone, or two or more may be used together. The metal atoms are not particularly limited, but are preferably transition metal atoms.
Furthermore, as necessary, a leveling agent, an antifoaming agent, and the like may also be used.

Note that the singlet oxygen quencher is used in an amount of usually about 5% to 30% by weight relative to the dye, and the recording sensitivity-improving agent is used in an amount of usually about 10% to 30% by weight relative to the dye.
When two or more singlet oxygen quenchers are used or two or more recording sensitivity-improving agents are used, the total is set for each so as to satisfy the range described above.

When a recording layer of an optical recording medium is formed using the dye of the present invention containing the hydrazide chelate complex compound of the present invention, a commonly used thin-film deposition method, such as vacuum deposition, sputtering, a doctor blade method, casting, spin coating, or a dipping method, can be used.
Among them, in view of mass productivity and cost, spin coating is preferable. However, vacuum deposition or the like is preferable from the standpoint that a recording layer with a uniform thickness can be obtained.
When a recording layer is formed by spin coating, the number of revolutions is preferably 500 to 5,000 rpm. After spin coating, as necessary, the resulting recording layer may be subjected to treatment, such as heating or exposure to a solvent vapor.

The thickness of the recording layer is not particularly limited because the suitable film thickness depends on the recording method or the like. The thickness of the recording layer is usually 1 nm or more, preferably 5 nm or more, more preferably 10 nm or more, usually 5 µm or less, preferably 2 µm or less, more preferably 300 nm or less, still more preferably 200 nm or less, and particularly preferably 100 nm or less. When the thickness of the recording layer is larger than the lower limit, it is possible to secure the amount of light absorption required for recording, and recording can be easily performed with good sensitivity. Furthermore, since distortion does not easily occur in the recording signal, a high-quality mark can be easily formed with a desired size. When the thickness of the recording layer is smaller than the upper limit, it is possible to secure the amount of light reflection required for reproduction, and as a result, a good reproduced signal can be obtained.

When the recording layer is formed by a doctor blade method, casting, spin coating, a dipping method, or the like, first, the dye for forming the recording layer of the present invention, a binder, a singlet oxygen quencher, a recording sensitivity-improving agent, and other dyes, and the like are dissolved in a solvent to prepare a coating solution.

As the solvent, use of TFP is particularly preferable from the industrial point of view. The solvent is not limited to TFP, and any solvent which does not erode the substrate may be used. Examples thereof include a ketone alcohol solvents, such as diacetone alcohol and 3-hydroxy-3-methyl-2-butanone; cellosolve solvents, such as methyl cellosolve and ethyl cellosolve; chain hydrocarbon solvents, such as n-hexane and n-octane; alicyclic hydrocarbon solvents, such as cyclohexane, methylcyclohexane, ethylcyclohexane, dimethylcyclohexane, n-butylcyclohexane, tert-butylcyclohexane, and cyclooctane; ether solvents, such as diisopropyl ether and dibutyl ether; fluoroalkyl alcohol solvents, such as 2,2,3,3,4,4,5,5-octafluoropentanol (OFP) and hexafluorobutanol; and hydroxy-ester solvents, such as methyl lactate, ethyl lactate, and ethyl isobutyrate. These solvents may be used alone or in mixture of two or more. From the industrial point of view, use of one solvent alone is preferable.

The concentration of the dye of the present invention in the coating solution is determined appropriately depending on the solvent solubility, but is usually 0.1% by weight or more, preferably 0.2% by weight or more, usually 10% by weight or less, and preferably 3.0% by weight or less. If the dye concentration in the coating solution is excessively low, the formation efficiency of the recording layer decreases. If the dye concentration in the coating solution is excessively high, the possibility of occurrence of problems, such as crystallization of the dye, increases.

When vacuum deposition is used, for example, the hydrazide chelate complex compound of the present invention and, as necessary, other components for the recording layer, such as dyes and various additives, are charged into a crucible placed in a vacuum container. The vacuum container is evacuated by a suitable vacuum pump to about 10⁻² to 10⁻⁵ Pa, and then the crucible is heated to evaporate the components for the recording layer so as to be deposited on a substrate placed opposite the crucible. Thereby, a recording layer is formed.

### {Layer structure of optical recording medium}

An optical recording medium of the present invention includes a recording layer formed on a substrate as described above using the dye for forming the recording layer of the present invention.
Optical recording media of the present invention will be specifically described below with reference to embodiments. However, it is to be understood that the embodiments are merely illustrative, and various alterations can be made within the scope of the invention.
Note that an optical recording medium of the present invention includes a recording layer disposed on a substrate, the recording layer being formed using the dye for forming the recording layer of the present invention as described above.

Embodiments of the optical recording medium of the present invention will be described below with reference to the drawings.

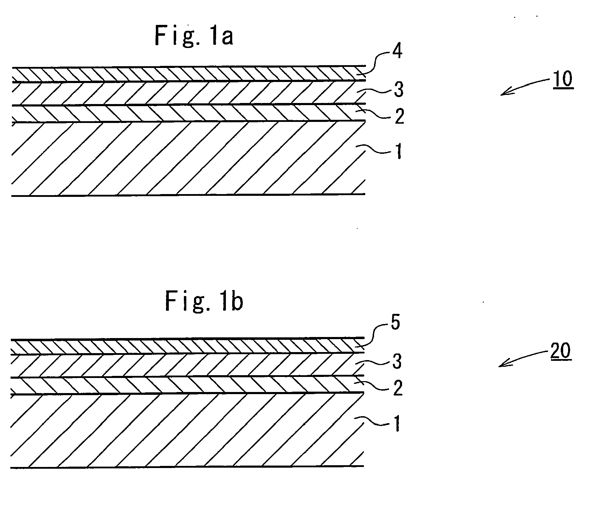

Figs. 1a and 1b are each a schematic cross-sectional view showing an example of a layered structure of the optical recording medium according to an embodiment of the present invention.

First, a first embodiment of the present invention will be described with reference to Fig. 1a.
An optical recording medium 10 shown in Fig. 1a has a structure in which a substrate 1 composed of a light-transmitting material, a recording layer 2 provided on the substrate 1, a reflective layer 3 disposed on the recording layer 2, and a protective layer 4 are disposed in that order. In the optical recording medium 10, recording/reproduction of information are performed by a laser beam L irradiated from the substrate 1 side.

As a material for the substrate 1, any of various materials that are basically transparent at wavelengths of a recording beam and a reproducing beam. Specific examples thereof include resins, such as an acrylic resin, a methacrylic resin, a polycarbonate resin, a polyolefin resin (in particular, an amorphous polyolefin, such as a polyethylene resin or a polypropylene resin), a vinyl chloride resin, a vinyl acetate resin, nitrocellulose, a polyimide resin, a polyester resin, a polystyrene resin, and an epoxy resin; and glass. It is also possible to use a substrate having a structure in which a resin layer composed of a radiation-curable resin, such as a photo-curable resin, is disposed on glass. Above all, from the standpoints of high productivity, cost, moisture resistance, etc., a polycarbonate resin which is used by injection molding is preferable, and from the standpoints of chemical resistance, moisture resistance, etc., amorphous polyolefin is preferable. Furthermore, from the standpoint of fast response and the like, glass is preferable.

When a substrate 1 composed of a resin is used or when a substrate 1 in which a resin layer is provided on the side (upper side) in contact with a recording layer is used, a pregroove or pit for recording/reproducing beams may be formed on the upper surface. The shape of the pregroove may be, for example, a concentric circular shape or spiral shape, based on the center of the optical recording medium 10.
When a concentric circular or spiral pregroove (groove portion) is formed on the substrate, the groove pitch is preferably about 0.2 to 1.2 µm.
Furthermore, preferably, the groove width W satisfies the relationship 100 nm < W < 400 nm, and the groove depth d satisfies the relationship 20 nm < d < 200 nm.

If the groove width of the groove portion is less than 0.2 µm (200 nm), it is not possible to store a necessary amount of dye for recording in the groove, resulting in a decrease in recording characteristics, or because of the narrow groove width, it is not possible to detect a groove signal having a level that is required for servo control, thus being undesirable. On the other hand, if the groove width exceeds 0.4 µm (400 nm), the groove width becomes equal to or larger than the light-collecting spot, and it is not possible to detect the groove signal both in principle and experimentally, thus being undesirable.
Furthermore, increasing of the groove width more than necessary is disadvantageous also from the standpoint of recording density, thus being undesirable.
Furthermore, if the groove depth d is less than 20 nm, as in the case where the groove width is small, it is not possible to store a necessary amount of dye for recording in the groove, resulting in a decrease in recording characteristics, or because of the narrow groove width, it is not possible to detect a groove signal having a level that is required for servo control, thus being undesirable. If d exceeds 200 nm, since the aspect ratio of the groove shape increases, it is not possible to form the groove itself, or the amount of dye in the groove increases more than necessary, resulting in a decrease in the amount of reflected light, which makes it difficult to perform servo control, thus being undesirable.
Preferably, the groove width W is 225 to 375 nm, and the groove depth d is 25 to 150 nm.

The reflective layer 3 is disposed on the recording layer 2. The thickness of the reflective layer 3 is preferably 50 to 300 nm. As a material for the reflective layer 3, a material that has sufficiently high reflectance at the wavelength of a reproducing beam, for example, a metal, such as Au, Al, Ag, Cu, Ti, Cr, Ni, Pt, Ta, or Pd, can be used alone or in the form of an alloy. Among these, Au, Al, and Ag have high reflectance and are suitable as the material for the reflective layer 3. Furthermore, another material may be added to these metals used as a main component. Here, the term "main component" means that the content of the component is 50% by weight or more. Examples of the material other than the main component include metals and metalloids, such as Mg, Se, Hf, V, Nb, Ru, W, Mn, Re, Fe, Co, Rh, Ir, Cu, Zn, Cd, Ga, In, Si, Ge, Te, Pb, Po, Sn, Bi, Ta, Ti, Pt, Pd, and Nd. Among them, a reflective layer 3 containing Ag as the main component is particularly preferable from the standpoints that the cost is low, high reflectance is easily obtained, and when a print-receiving layer, which will be described later, is provided, a white and beautiful ground color can be obtained. For example, an alloy obtained by incorporating about 0.1 to 5 atomic percent of at least one metal selected from Au, Pd, Pt, Cu and Nd into Ag is preferred from the standpoints of high reflectance, high durability, high sensitivity and low cost. Specific examples thereof include a AgPdCu alloy, a AgCuAu alloy, a AgCuAuNd alloy, and a AgCuNd alloy. As a material other than a metal, it is also possible to form a multilayer film by alternately stacking a low-refractive-index thin film and a high-refractive-index thin film, and the multilayer film is used as a reflective layer 3.

Examples of the method for forming the reflective layer 3 include sputtering, ion-plating, chemical vapor deposition, and vacuum deposition. Furthermore it is also possible to provide a known inorganic or organic intermediate layer or adhesive layer on the substrate 1 or under the reflective layer 3 in order to improve the reflectance, improve the recording characteristics, or improve the adhesive property.

The material for the protective layer 4 disposed on the reflective layer 3 is not particularly limited as long as it protects the reflective layer 3 from an external force. Examples thereof include organic substances, such as a thermoplastic resin, a thermosetting resin, an electron-beam curable resin, and an UV (ultraviolet) curable resin; and inorganic substances, such as SiO₂, SiN₄, MgF₂, and SnO₂.
A thermoplastic resin, a thermosetting resin, or the like is dissolved in an appropriate solvent to prepare a coating solution, and by applying and drying of the coating solution, a protective layer can be formed.
An UV curable resin is used directly or dissolved in an appropriate solvent to prepare a coating solution, and by applying of the coating solution, followed by curing by UV light, a protective layer can be formed. As the UV curable resin, for example, an acrylate resin, such as urethane acrylate, epoxy acrylate, or polyester acrylate, may be used. These materials may be used alone or in mixture of two or more, and furthermore, may be formed into a single-layer film or a multilayer film.

As the method for forming the protective layer 4, as in the recording layer 2, a coating method, such as spin coating or casting, chemical vapor deposition, or the like may be used. Among them, spin coating is preferable. The thickness of the protective layer 4 is usually 0.1 µm or more, and preferably 3 µm or more because a certain thickness is required to provide the protection function. However, if the thickness is excessively large, no further effect is obtained, or there is a possibility that it will take time to form the protective layer 4 or the cost will increase. Consequently, the thickness is usually 100 µm or less, and preferably 30 µm or less.

Additionally, in order to enhance adhesion between the individual layers, an undercoating layer may be disposed between the two adjacent layers. The type of the undercoating layer is not particularly limited as long as it enhances the adhesion between the individual layers and does not affect the properties of the individual layers. In view of ease of handling, use of an organic layer is preferable.

Furthermore, two optical recording media 10 each having the structure described above may be bonded together with a bonding layer. For example, another substrate 1 may be bonded to the upper surface of the protective layer 4 in the layer structure of the example described above, or to the upper surface of the reflective layer 3 by omitting the protective layer 4 from the layer structure of the example described above. In such a case, the substrate 1 may be a substrate itself not provided with any layers, or a substrate 1 may have any layer, such as a reflective layer 3, on the bonding surface or a surface opposite to the bonding surface. Furthermore, two optical recording media 10 each having the layer structure of the example described above, or two optical recording media 10 each having a structure in which the protective layer 4 is omitted from the layer structure of the example described above may be bonded together so that the upper surfaces of the protective layer 4 and/or the reflective layer 3 of the respective optical recording media face each other. One example of such a structure is a two-layer optical recording medium, which will be described later.
Alternatively, a double-sided optical recording medium may be produced by providing a reflective layer, a recording layer, a protective layer, etc. on each side instead of on one side.
Furthermore, a multilayer optical recording medium may be produced by forming two or more pairs of a reflective layer and a recording layer with an intermediate layer therebetween on a substrate, and providing a protective layer on the top thereof.

Next, a second embodiment of the present invention will be described with reference to Fig. 1b.
In Fig. 1b, the same reference numerals are used to designate the components in common with those of Fig. 1a, and the descriptions thereof are omitted. An optical recording medium 20 shown in Fig. 1b has a structure in which a substrate 1 composed of a light-transmitting material, a reflective layer 3 provided on the substrate 1, a recording layer 2 disposed on the reflective layer 3, and a protective coating film 5 are disposed in that order. A barrier layer may be disposed between the recording layer 2 and the protective coating film 5, the barrier layer preventing mixing between the recording layer and the protective layer due to a metal, ceramic, or the like. In the optical recording medium 20, recording/reproduction of information are performed by a laser beam L irradiated from the protective coating film 5 side.

The protective coating film 5 in the shape a film or a sheet may be attached by an adhesive, or using the same material as the protective layer 4, a coating solution for film forming may be applied, followed by curing or drying to form the protective coating film 5. The thickness of the protective coating film 5 is usually 0.1 µm or more, and preferably 3 µm or more because a certain thickness is required to provide the protection function. However, if the thickness is excessively large, no further effect is obtained, or there is a possibility that it will take time to form the protective coating film 5 or the cost will increase. Consequently, the thickness is usually 300 µm or less, and preferably 200 µm or less.

The individual layers, such as the recording layer 2 and the reflective layer 3, can be formed using the same materials as in the optical recording medium 10 in the first embodiment shown in Fig. 1a. However, in the second embodiment, the substrate 1 is not required to be transparent. Consequently, in addition to the materials previously described, opaque resins, ceramics, metals (including alloys), etc. may be used. In such a layer structure, any layer may be disposed between the individual layers as long as the characteristics of the present invention are not impaired.

As one of the means for increasing the recording density of the optical recording medium 10 or 20, the numerical aperture of an object lens may be increased. Thereby, the size of the optical spot focused on the information recording surface can be reduced to very small values. However, if the numerical aperture of the object lens is increased, the aberration of the optical spot caused by the warpage or the like of the optical recording medium 10 or 20 tends to be increased when irradiated with a laser beam to perform recording/reproduction. Consequently, there may be a case where good recording/reproducing signals cannot be obtained stably.

Such aberration tends to be increased as the thickness of the transparent substrate or the protective coating film through which a laser beam passes increases. Therefore, in order to decrease the aberration, preferably the thickness of the substrate or the protective coating film is decreased as much as possible. However, usually, the substrate 1 is required to have a certain thickness in order to secure the strength of the optical recording medium 10 or 20. Accordingly, in such a case, it is preferable to employ the structure of the optical recording medium 20 in the second embodiment (the optical recording medium 20 having a basic layer structure including the substrate 1, the reflective layer 3, the recording layer 2, and the protective coating film 5). In comparison with the case where the thickness of the substrate 1 of the optical recording medium 10 in the first embodiment is decreased, it is easy to decrease the protective coating film 5 of the optical recording medium 20 in the second embodiment. Thus, preferably, the optical recording medium 20 in the second embodiment is used.

However, even in the structure of the optical recording medium 10 in the first embodiment (the optical recording medium 10 having a basic layer structure including the substrate 1, the recording layer 2, the reflective layer 3, and the protective layer 4), by decreasing the thickness of the transparent substrate 1 through which recording/reproducing laser beams pass to about 50 to 300 µm, the aberration can be decreased so that the optical recording medium can be used.

Furthermore, after other individual layers are formed, an ultraviolet-curable resin layer, an inorganic thin film, or the like may be formed on the incidence surface for the recording/reproducing laser beams (usually, the lower surface of the substrate 1) for the purpose of protecting the surface or preventing the deposition of dust and the like. On the surface opposite to the incident surface for the recording/reproducing laser beams (usually, the upper surface of the reflective layer 3 or the protective layer 4), a print-receiving layer may be formed, on which printing by various printers, such as ink jet printers and thermal transfer printers, or writing with various writing instruments can be performed.

### {Multilayer recording medium]

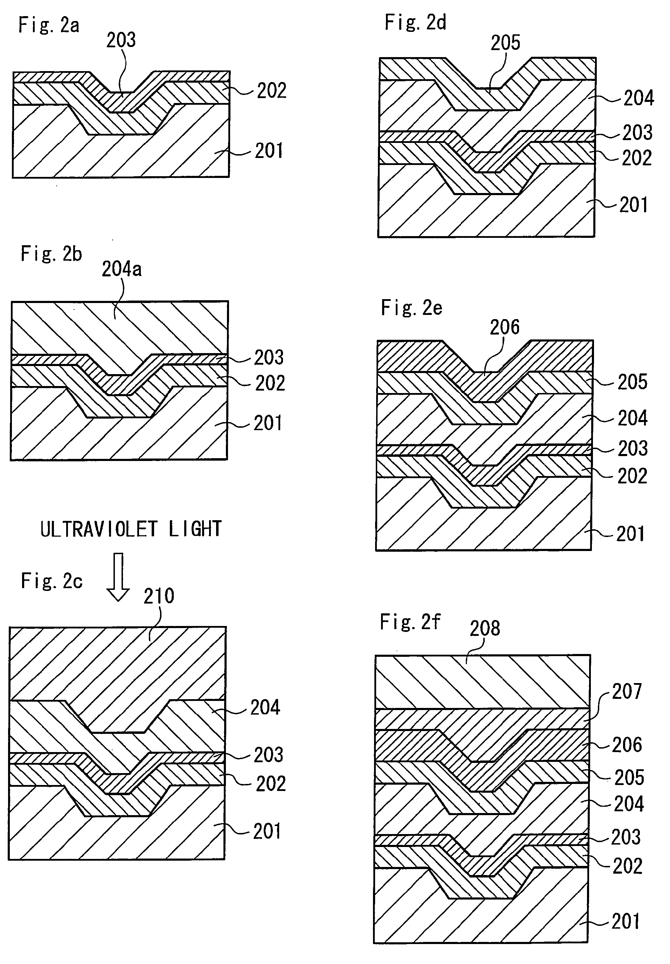

Next, as a third embodiment of the present invention, an optical recording medium having a plurality of recording layers and a manufacturing method therefor will be described with reference to Figs. 2a to 2f.
Figs. 2a to 2f are schematic cross-sectional views showing a method for manufacturing a two-layer optical recording medium according to the third embodiment of the present invention.

First, as shown in Fig. 2a, a first substrate 201 provided with a groove, a land, and a prepit on the surface thereof is formed, for example, by injection molding using a stamper. Next, a coating solution prepared by dissolving at least an organic dye in a solvent is applied by spin coating or the like to the surface having irregularities of the first substrate 201, and heating (annealing) is performed in order to remove the solvent used for the coating solution, thereby forming a first recording layer 202. After the first recording layer 202 is formed, by sputtering or vapor deposition of a Ag alloy or the like, a translucent first reflective layer 203 is formed on the first recording layer 202 by sputtering or the like.

Subsequently, as shown in Fig. 2b, an ultraviolet-curable resin layer 204a is applied over the entire surface of the first reflective layer 203 by spin coating or the like. Furthermore, as shown in Fig. 2c, after the ultraviolet-curable resin layer 204a is applied by spin coating or the like, a resin stamper 210 is placed thereon to transfer irregularities to the ultraviolet-curable resin layer 204a. In this step, the transfer is performed while controlling the thickness of the ultraviolet-curable resin layer 204a within a predetermined range. In such a state, the ultraviolet-curable resin layer 204a is cured by irradiation of ultraviolet light from the resin stamper 210 side or the like. When the ultraviolet-curable resin layer 204a is cured sufficiently, the resin stamper 210 is released. Thereby, an intermediate layer 204 having irregularities on the surface thereof is formed.

Note that the resin stamper 210 has sufficient releasability with respect to the resin to be formed into the intermediate layer 204. Preferably, the resin stamper 210 has good moldability and good shape stability. From the standpoints of productivity and cost, preferably, the resin stamper 210 can be used for a plurality of times of transfer operation. Furthermore, preferably, the resin stamper 210 can be recycled after use. Examples of the material for the resin stamper 210 include an acrylic resin, a methacrylic resin, a polycarbonate resin, a polyolefin resin (in particular, amorphous polyolefin), a polyester resin, a polystyrene resin, and an epoxy resin. Among them, in view of high productivity, such as moldability, cost, low hygroscopicity, shape stability, etc., amorphous polyolefin is preferable.

Subsequently, as shown in Fig. 2d, a coating solution prepared by dissolving an organic dye in a solvent is applied by spin coating or the like to the surface of the intermediate layer 204, and heating (annealing) is performed in order to remove the solvent used for the coating solution, thereby forming a second recording layer 205.

Then, as shown in Fig. 2e, a second reflective layer 206 is formed on the second recording layer 205 by sputtering or vapor deposition of a Ag alloy or the like. Subsequently, as shown in Fig. 2f, a mirror-finished substrate, which serves as a second substrate 208, obtained by injection molding of polycarbonate is bonded to the second reflective layer 206 through an adhesive layer 207. Thereby, the manufacture of the optical recording medium is completed.

The optical recording medium 100 according to the third embodiment of the present invention and the manufacturing method therefor have been described above. However, the embodiment is not limited to the structure described above, but various alterations can be made.
For example, an optical recording medium may have three or more recording layers. Furthermore, as necessary, another layer may be provided as a layer between the individual layers or as an outermost layer. The embodiment is not limited to the substrate-incident type optical disk, but can be applied to a surface-incident type optical disk which has a layered structure including at least substrate/reflective layer/second recording layer/buffer layer/intermediate layer/translucent reflective layer/first recording layer/protective layer and in which a laser beam is applied from the protective layer side (i.e., surface side) to perform recording/reproduction of information.

The dye used for a multilayer medium is preferably required to have higher recording sensitivity than the dye used for a single-layer medium. The reason for this is that when information is recorded to the individual layers, absorption and transmission of light inevitably occur in layers other than layers intended for recording. In this sense, the hydrazide chelate complex dye of the present application is also more preferable because it has higher recording sensitivity than the conventional one.

### [Recording method for optical recording medium]

### {Laser beam}

Recording of information onto the optical recording medium obtained as described above is performed usually by irradiating the recording layer with a laser beam focused to about 0.4 to 0.6 µm. When the recording layer absorbs the energy of the laser beam, thermal deformation, such as decomposition, heat generation, or melting, occurs at the laser beam irradiated spot, resulting in changes in optical characteristics. Thereby, information is recorded.
On the other hand, when reproduction of information recorded in the recording layer is performed, similarly, the recording layer is irradiated with a laser beam having lower energy (usually, from the same direction as in the recording operation). In the recording layer, by reading the difference in reflectance between a portion where changes in optical characteristics have occurred (i.e., portion where information has been recorded) and a portion where changes have not occurred, reproduction of information is performed.

In order to perform high-density recording, the wavelength of the laser beam used for recording is preferably shorter. In particular, in the optical recording medium of the present invention, from the standpoint of fully utilizing the advantage that the recording layer contains the hydrazide chelate complex compound of the present invention described above, a laser beam with a wavelength of 350 to 530 nm is preferable. (Hereinafter, the recording method using such a laser beam is appropriately referred to as the "recording method for the optical recording medium of the present invention" or simply referred to as the "recording method of the present invention".)

Typical examples of such a laser beam include a blue laser beam having a center wavelength of 405 nm, 410 nm, or the like; and a blue-green high-power semiconductor laser beam having a center wavelength of 515 nm. Other examples include a beam obtained by subjecting either (a) a continuous-wave semiconductor laser beam having a basic oscillation wavelength of 740 to 960 nm or (b) a continuous-wave solid laser beam excited by a semiconductor laser beam and having a basic oscillation wavelength of 740 to 960 nm to wavelength conversion by a second harmonic generation element (SHG).

As the SHG, any piezoelectric element lacking reflection symmetry can be used. Preferably, KDP (KH₂PO₄), ADP (NH₄H₂PO₄), BNN (Ba₂NaNb₅O₁₅), KN (KNbO₃), LBO (LiB₃O₅), a compound semiconductor, or the like is used. Specific examples of the second harmonic include, in the case of a semiconductor laser having a basic oscillation wavelength of 860 nm, a wavelength of 430 nm as a double wave thereof, and in the case of a solid laser excited by a semiconductor laser, a wavelength of 430 nm as a double wave from a Cr-doped LiSrAlF6 crystal (basic oscillation wavelength: 860 nm).
Among them, use of a blue laser beam having a center wavelength of 405 nm is particularly preferable.

With respect to the absorption wavelength and the absorbance of the optical recording medium, preferably, the maximum absorption wavelength (λmax) of the hydrazide chelate complex compound of the present invention in the absorption spectrum in acetonitrile is 380 to 500 nm, and the OD coefficient (absorbance when 1 g is assumed to be dissolved in 1 L of a solvent) at the λmax is 50 or more from the viewpoint of control of film thickness and an increase in sensitivity to a laser.

### {Recording sensitivity}

The hydrazide chelate complex compound of the present invention is excellent in terms of sensitivity to recording laser.
Specifically, when a preferable hydrazide chelate complex compound applied to a substrate at a thickness of 50 nm is irradiated with a blue laser beam having a center wavelength of 404 nm and NA = 0.85, a satisfactory recording pit can be formed at a laser intensity of 12 mW or less, preferably 10 mW or less, and particularly preferably 7.5 mW or less. Here, the expression "a satisfactory recording pit can be formed" means that when a coating film on a substrate is irradiated with a blue laser beam with a specific laser intensity, the formation of a pit can be confirmed visually or using an optical microscope.

Furthermore, with respect to a more preferable compound, after an optical recording medium shown in Fig. 1a or 1b is produced, when recording is performed at a laser wavelength of 405 nm, using a tester (ODU-1000 manufactured by Pulstec Industrial Co., Ltd.) with NA = 0.65, and then reproduction is performed using the tester, the PRSNR (Partial Response SNR) value at the HD DVD-R standard Ver. 1.0 defined by the DVD forum satisfies the standard value, and the recording optimum power is usually 12 mW or less, preferably 10 mW or less, and particularly preferably 7.5 mW or less. The specific production method of the optical recording medium and the specific evaluation method by the tester will be described later.

### {Reflectance at recorded portion}

The recording method for the optical medium of the present invention is characterized in that, at the optical wavelength of the laser for recording, the reflectance at the recorded portion is higher than the reflectance before recording and the reflectance at the unrecorded portion. In order to set the reflectance at the recorded portion to be higher than the reflectance at the unrecorded portion, the coating dye is required to have a certain absorption amount or more at the recording laser wavelength, and furthermore, preferably, the recording laser wavelength lies on the shorter wavelength side than the wavelength at which the absorption peak of the dye is at maximum.
Furthermore, preferably, the optical recording medium has the groove shape, which is separately described in Claims, Examples, etc. In such a structure, it is possible to perform recording and reproduction of optical information with high density by Low-to-High recording, which is a recording mechanism different from the conventional one.

### EXAMPLES

The present invention will be described more in detail below with reference to examples. However, it is to be understood that the present invention is not limited to the examples described below as long as it does not depart from the gist of the present invention.

In the examples below, DEI-MS (desorption ionization mass spectrometry) analysis was carried out using a JMS-700 MStation mass spectrometer manufactured by JEOL Ltd., under the conditions of accelerating voltage: 10 kV and temperature rising condition: 0 to 0.9 A, 1 A/min.
Furthermore, the ultraviolet-visible absorption spectrum was analyzed with a UV-3150 ultraviolet-visible-near infrared spectrophotometer manufactured by Shimadzu Corporation.
With respect to nuclear magnetic resonance (NMR) analysis, using an AV-400M nuclear magnetic resonance analyzer (400 MHz) manufactured by Bruker Corp., protons were analyzed in heavy chloroform at room temperature.

### [Example 1]

### <Synthesis of hydrazide ligand (L-1)>

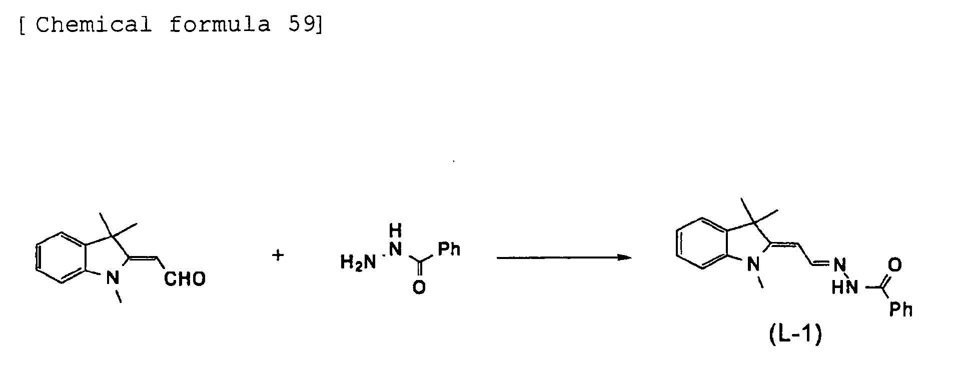

2-(1,3,3-Trimethylindoline-2-ylidene)acetaldehyde (1.0 g) and benzhydrazide (0.70 g) in ethanol (20 ml) were stirred under heating for one hour. The reaction mixture was cooled to room temperature, and water (20 ml) was added thereto. The generated solid was filtered out, washed with water (10 ml) and ethyl acetate (10 ml), followed by drying, to give the light yellow target compound (L-1) (1.3 g, yield 82%).

The resulting compound was identified by ¹H NMR.
NMR(CDC13) δ: 8.57 (d, J = 10.0 Hz, 1H), 7.85 (d, J = 8.0 Hz, 2H), 7.5-7.4 (m, 3H), 7.25-7.1 (m, 2H), 6.90 (t, J = 8.0 Hz, 1H), 6.68 (d, J = 8.0 Hz, 1H), 5.60 (d, J = 10.0 Hz, 1H), 3.22 (s, 3H), 1.57 (s, 6H)

### <Synthesis of exemplified compound (A-1)>

The compound (L-1) (0.50 g) was dissolved in hot methanol (20 ml). Triethylamine (0.16 g) and cobalt acetate tetrahydrate (0.20 g) were added in that order to the solution, and stirring was performed for one hour at 50°C. The reaction mixture was filtered, and the filtrate was added dropwise to water (20 ml). The generated solid was filtered out and washed with water (10 ml). Thereby, a yellow solid (0.46 g, yield 84%) of the following target compound (A-1) was obtained.
λmax (CH₃CN): 414 nm
OD at λmas: 100

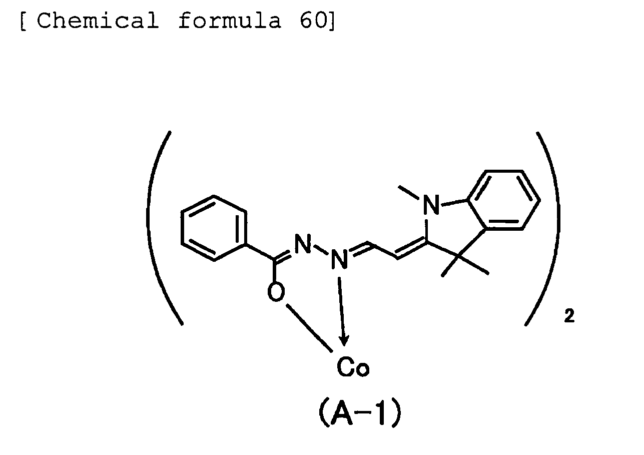

With respect to the resulting compound (A-1), solubility in a coating solvent was tested by the method described below. Test results confirmed that the compound was completely dissolved at a concentration of 0.7% by weight, and the amount of insolubles was slight even at a concentration of 1.0% by weight.

### <Solubility test>

Using 2,2,3,3-tetrafluoropropanol as a coating solvent, the compound (A-1) at a concentration of each of 0.7% by weight and 1.0% by weight was subjected to supersonic treatment at 20°C, at normal pressure, for 30 minutes. Then, the solution was dropped to filter paper ("No. 5C" quantitative filter paper manufactured by Toyo Roshi Kaisha), and dried at room temperature for 24 hours. It was visually observed whether or not crystal residues of undissolved components were present on the filter paper.

### [Example 2]

### <Synthesis of exemplified compound (A-2)>

The compound (L-1) (0.25 g) was dissolved in hot methanol (20 ml). Triethylamine (90 mg) and copper acetate tetrahydrate (0.10 g) were added in that order to the solution, and stirring was performed for one hour at 50°C. Water (20 ml) was added to the reaction mixture, and the generated solid was filtered out and washed with water (10 ml) and methanol (10 ml). Thereby, a yellow solid (0.20 g, yield 82%) of the following target compound (A-2) was obtained.
λmax (CH₃CN): 415 nm
OD at λmax: 135

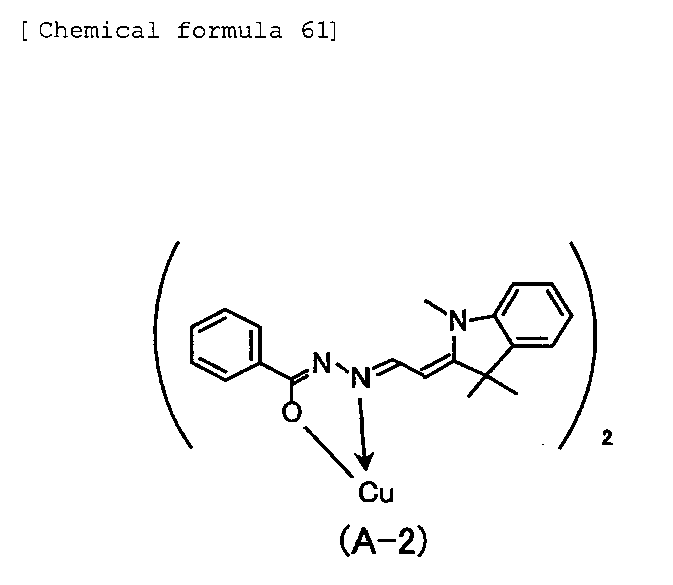

With respect to the resulting compound (A-2), solubility in a coating solvent was tested by the method shown in Example 1. Test results confirmed that the compound was completely dissolved at a concentration of 0.7% by weight, and the amount of insolubles was slight even at a concentration of 1.0% by weight.

### {Example 3]

### <Synthesis of hydrazide ligand (L-2)>

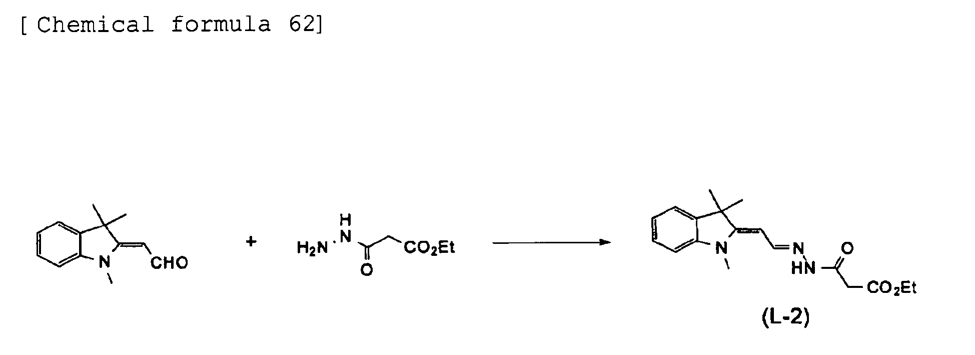

2-(1,3,3-Trimethylindoline-2-ylidene)acetaldehyde (1.0 g) and ethyl 3-hydrazino-3-oxopropionate (1.0 g) in methanol (30 ml) were stirred under heating for one hour. The solvent was removed from the reaction mixture by distillation under reduced pressure conditions. Extraction was performed with ethyl acetate, and after washing with a saline solution, the organic layer was dried over magnesium sulfate. The solvent was removed by distillation under reduced pressure conditions. Recrystallization from chloroform and hexane gave the light yellow target compound (L-2) (0.62 g, yield 38%).

The resulting compound was identified by DEI-MS.
DEI-MS (measured value): 329 (M⁺), calculated value: 329

### <Synthesis of exemplified compound (A-6)>

The compound (L-2) (0.25 g) was dissolved in hot methanol (20 ml). Triethylamine (0.30 g) and cobalt acetate tetrahydrate (0.37 g) were added in that order to the solution, and stirring was performed for one hour at 50°C. The reaction mixture was filtered, and the filtrate was added dropwise to water (20 ml). The generated solid was filtered out and washed with water (10 ml). Thereby, a yellow solid (0.21 g, yield 77%) of the following target compound (A-6) was obtained.
λmax (CH₃CN): 392 nm
OD at λmax: 74

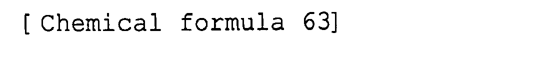

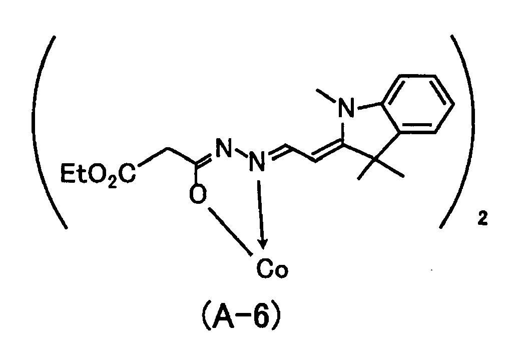

With respect to the resulting compound (A-6), solubility in a coating solvent was tested by the method shown in Example 1. Test results confirmed that the compound was completely dissolved at a concentration of each of 0.7% by weight and 1.0% by weight.

### <Production of recording medium-1>

The resulting compound (A-6) was dissolved in 2,2,3,3-tetrafluoropropanol at a concentration of 1.0% by weight, and minute foreign particles were removed by filtration. Then, the resulting solution was dropped to an injection-molded polycarbonate substrate with a diameter of 120 mm and a thickness of 1.2 mm and coating was performed by spin coating (4,900 rpm), followed by drying at 80°C for 30 minutes. Thereby, a transparent dye film (recording layer) with a thickness of about 50 nm was formed, and an optical recording medium was produced.

With respect to the resulting optical recording medium, recording sensitivity was tested by the method described below. As a result, the maximum recording sensitivity at which formation of a recording pit was confirmed was 9.0 mW.

### <Recording sensitivity test>

Irradiation was performed with a semiconductor laser beam having a center wavelength of 404 nm and NA = 0.85, and the maximum recording sensitivity at which formation of a recording pit was confirmed by an optical microscope was measured.

Furthermore, with respect to the resulting optical recording medium, light fastness was tested by the method described below. As a result, the dye residual ratio was 90%.

### <Light fastness test>

Under the conditions of temperature 58°C and humidity 50%, a recording layer was irradiated with a xenon lamp at an irradiation intensity of 0.55 W/m² for 40 hours. Then, the dye residual ratio in the recording layer was determined on the basis of the absorbances before and after irradiation at the absorption maximum wavelength.

### [Example 4]

### <Synthesis of hydrazide ligand (L-3)>

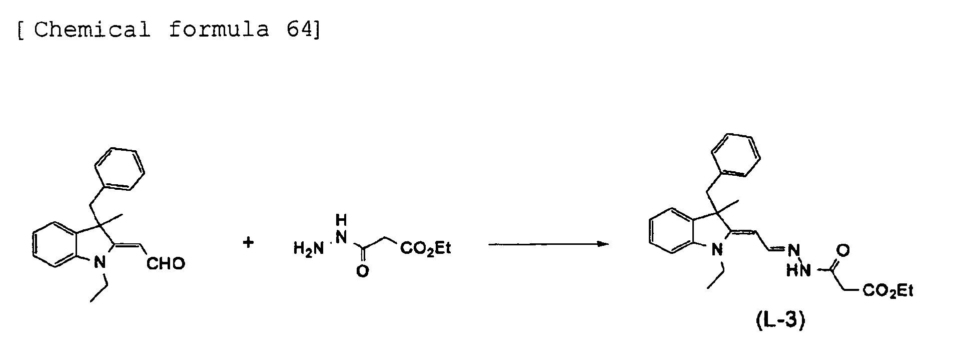

2-(1-Ethyl-3-benzyl-methylindoline-2-ylidene)acetaldehyde (0.6 g) and ethyl 3-hydrazino-3-oxopropionate (0.35 g) in acetic acid (0.1 ml) and methanol (10 ml) were stirred under heating for one hour. The solvent was removed from the reaction mixture by distillation under reduced pressure conditions. Extraction was performed with ethyl acetate, and after washing with a saline solution, the organic layer was dried over magnesium sulfate. The solvent was removed by distillation under reduced pressure conditions. Purification with silica gel column chromatography gave the light yellow target compound (L-3) (0.67 g, yield 78%).

The resulting compound was identified by DEI-MS.
DEI-MS (measured value): 419 (M⁺), calculated value: 419

### <Synthesis of exemplified compound (A-11)>

The compound (L-3) (0.60 g) was dissolved in hot methanol (5 ml). Triethylamine (0.20 g) and cobalt acetate tetrahydrate (0.23 g) were added in that order to the solution, and stirring was performed for one hour at 50°C. The reaction mixture was filtered, and the filtrate was recrystallized from methanol to give a yellow solid (0.61 g, yield 95%) of the following target compound (A-11).
λmax (CH₃CN): 401 nm
OD at λmax: 67

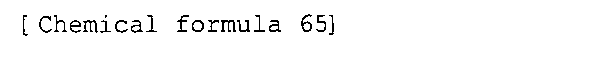

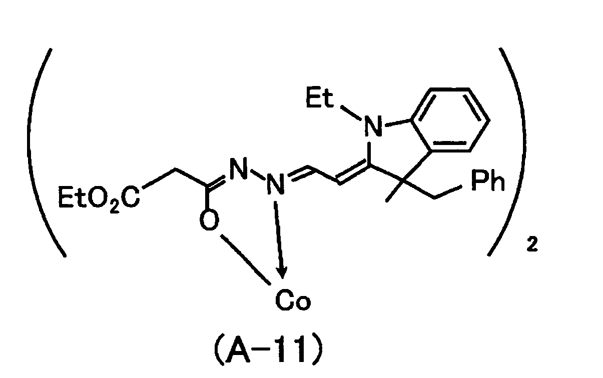

With respect to the resulting compound (A-11), solubility in a coating solvent was tested by the method shown in Example 1. Test results confirmed that the compound was completely dissolved at a concentration of each of 0.7% by weight and 1.0% by weight.

Subsequently, with respect to the resulting compound (A-11), an optical recording medium was produced as in Example 3.
With respect to the resulting optical recording medium, recording sensitivity was tested by the method shown in Example 3. As a result, the maximum recording sensitivity at which formation of a recording pit was confirmed was 7.0 mW.
Furthermore, with respect to the resulting optical recording medium, light fastness was tested by the method shown in Example 3. As a result, the dye residual ratio was 91%.

### [Comparative Example 1]

With respect to the following compound (B-2) described in Patent Document 2, solubility in a coating solvent was tested by the method shown in Example 1. Test results confirmed that the amount of insolubles was large at a concentration of each of 0.7% by weight and 1.0% by weight.

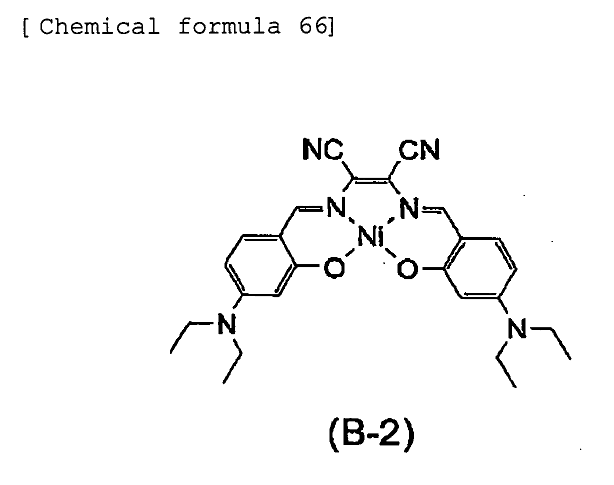

### [Comparative Example 2]

With respect to the following compound (B-3), which is a salen metal complex compound, solubility in a coating solvent was tested by the method shown in Example 1. Test results confirmed that the amount of insolubles was large at a concentration of each of 0.7% by weight and 1.0% by weight.

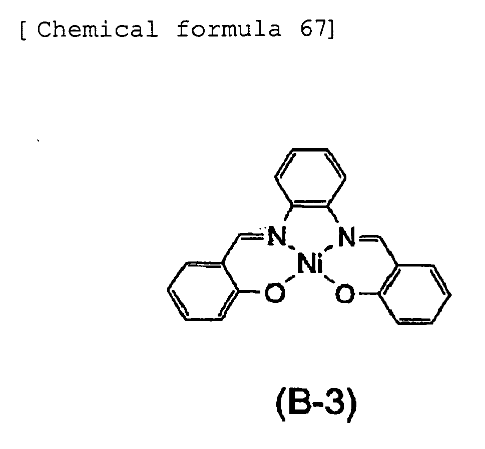

### [Comparative Example 3]

With respect to the following compound (B-1) described in Patent Document 1, an optical recording medium was produced as in Example 3. With respect to the resulting optical recording medium, light fastness was tested by the method shown in Example 3. As a result, the dye residual ratio was less than 10%.

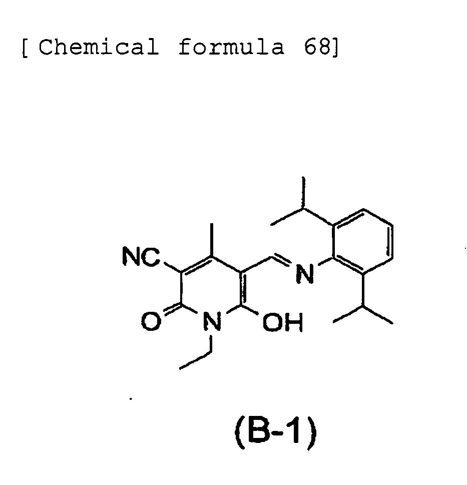

### [Example 5]

### <Synthesis of hydrazide ligand (L-4)>

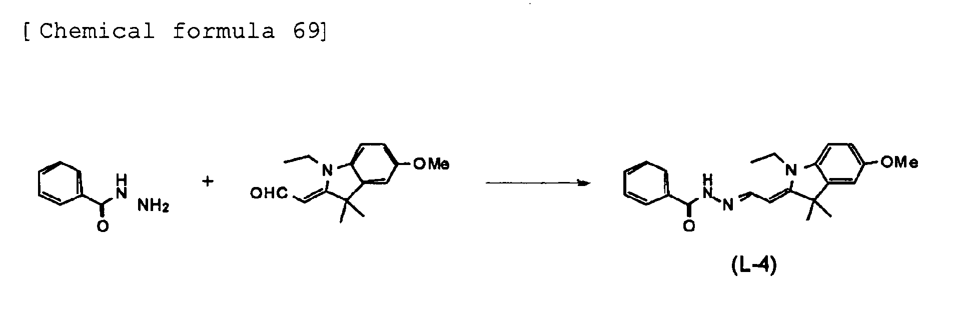

Benzhydrazide (0.70 g) and 2-(1-ethyl-3,3-dimethyl-5-methoxyindoline-2-ylidene)acetaldehyde (1.2 g) in acetic acid (0.3 ml) and methanol (30 ml) were stirred under heating for 8 hours. The solvent was removed from the reaction mixture by distillation under reduced pressure conditions. Purification with silica gel column chromatography gave the light yellow target compound (L-3) (1.2 g, yield 81%).

The resulting compound was identified by DEI-MS.
DEI-MS (measured value): 363 (M⁺), calculated value: 363

### <Synthesis of exemplified compound (A-86)>

Triethylamine (0.45 ml) and cobalt acetate tetrahydrate (0.40 g) were added to a methanol solution (25 ml) of the compound (L-4) (1.0 g), and stirring under heating was performed for one hour at 50°C. The solvent was removed by distillation from the resulting mixture, and purification with methanol was performed. Thereby, a dark yellow solid (0.50 g, yield 46%) of the following target compound (A-86) was obtained.
λmax (CH₃CN): 421 nm
OD at λmas: 96

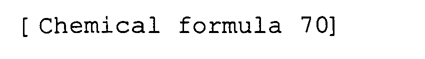

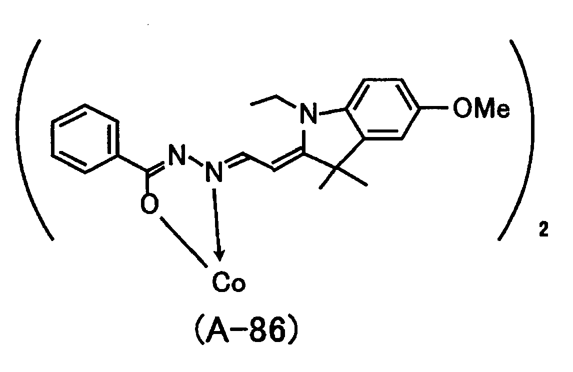

With respect to the resulting compound (A-86), solubility in a coating solvent was tested by the method shown in Example 1. Test results confirmed that the compound was completely dissolved at a concentration of each of 0.7% by weight and 1.0% by weight.

### <Production of recording medium-2>

The resulting compound (A-86) was dissolved in 2,2,3,3-tetrafluoropropanol at a concentration of 1.0% by weight, and minute foreign particles were removed by filtration. Then, the resulting solution was dropped to an injection-molded polycarbonate substrate with a diameter of 120 mm, a thickness of 0.6 mm, a track pitch of 0.4 µm, a groove width of 260 nm, and a groove depth of 60 nm, and coating was performed by spin coating (the number of revolutions was 100 rpm when the solution was dropped to the inner periphery of the disk, then was smoothly increased, and 10 seconds after beginning of coating, reached a maximum number of revolutions of 6,000 rpm, and the maximum number of revolutions was retained for 5 seconds), followed by drying at 70°C for 25 minutes. Thereby, a transparent dye film (recording layer) was formed. The absorbance measured at 470 nm, with air as a reference, was 0.30. Then, a AgBi_{0.2}Nd_{0.5} reflective film was disposed by sputtering on the recording layer at a thickness of 120 nm. Furthermore, onto the reflective layer, a backboard made of polycarbonate with a thickness of 0.6 mm was bonded using an ultraviolet-curable resin (SK7100 manufactured by Sony Chemicals Corporation). Thereby, an optical recording medium was produced (optical recording medium of Example 5).

With respect to the resulting optical recording medium of Example 5, characteristics evaluation as the optical recording medium was performed by the method described below. As a result, the recording mechanism was Low-To-High type, and the optimum recording power was 10.0 mW. At this time, the PRSNR (Partial Response SNR: partial response SN ratio) of the optical recording medium was 16.0, which exceeded the standard of 15. Furthermore, the SbER (bit error rate) was 1.10 × 10⁻⁵, which was within the standard of 5.0 × 10⁻⁵ and satisfactory.

### <Characteristics evaluation as optical recording medium>

Using a tester (ODU-1000 manufactured by Pulstec Industrial Co., Ltd.) with a NA (numerical aperture) of 0.65 at a laser wavelength of 405 nm, random pattern recording was performed at a linear velocity of 6.61 m/s and a shortest mark length of 204 nm. Then, using the same evaluation apparatus (ODU-1000), reproduction was performed. In recording and reproduction, by the method according to the HD DVD-R standard Ver. 1.0 defined by the DVD forum, the PRSNR (Partial Response SNR) specified in the standard was evaluated.

### [Example 6]

### <Synthesis of hydrazide ligand (L-5)>

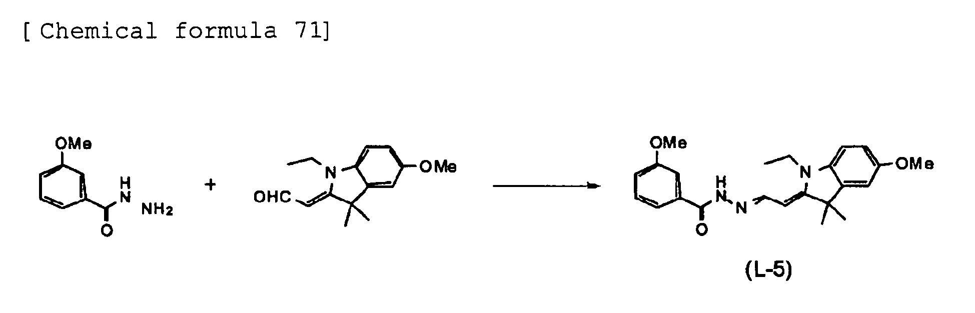

The light yellow target compound (L-3) (1.3 g, yield 80%) was obtained as in the synthesis of the hydrazide ligand (L-4) of Example 5 except that 3-methoxybenzhydrazide (0.83 g) and 2-(1-ethyl-3,3-dimethyl-5-methoxyindoline-2-ylidene)acetaldehyde (1.2 g) were used as the starting materials.
The resulting compound was identified by DEI-MS.

DEI-MS (measured value): 393 (M⁺), calculated value: 393

### <Synthesis of exemplified compound (A-87)>

Using a methanol solution (25 ml) of the compound (L-5) (1.0 g), triethylamine (0.45 ml), and cobalt acetate tetrahydrate (0.40 g), a dark yellow solid (0.56 g, yield 52%) of the following target compound (A-87) was obtained as in the synthesis of the exemplified compound (A-86) of Example 5.
λmax (CH₃CN) : 423 nm
OD at λmax : 91

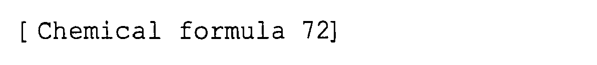

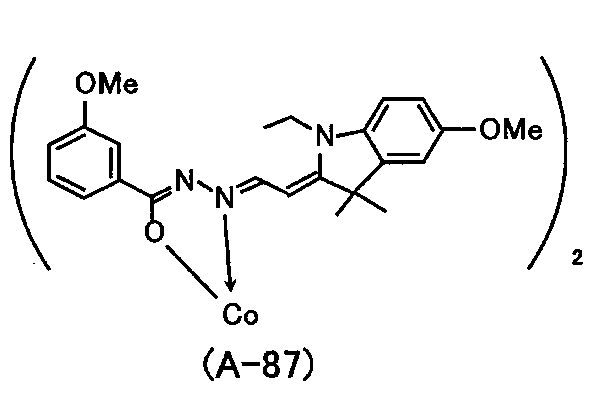

With respect to the resulting compound (A-87), solubility in a coating solvent was tested by the method shown in Example 1. Test results confirmed that the compound was completely dissolved at a concentration of each of 0.7% by weight and 1.0% by weight.

Subsequently, an optical recording medium (optical recording medium of Example 6) was produced under the same conditions as in Example 5 except that the above-described compound (A-87) was used as the dye, and evaluation was performed under the same conditions.
As a result, the recording mechanism was Low-to-High type, and the optimum recording power was 10.5 mW. At this time, the PRSNR of the optical recording medium was 15.0, which was equivalent to the standard of 15. Furthermore, the SbER was 1.50 × 10⁻⁵, which was within the standard of 5.0 × 10⁻⁵ and satisfactory.

### [Example 7]

### <Synthesis of hydrazide ligand (L-6)>

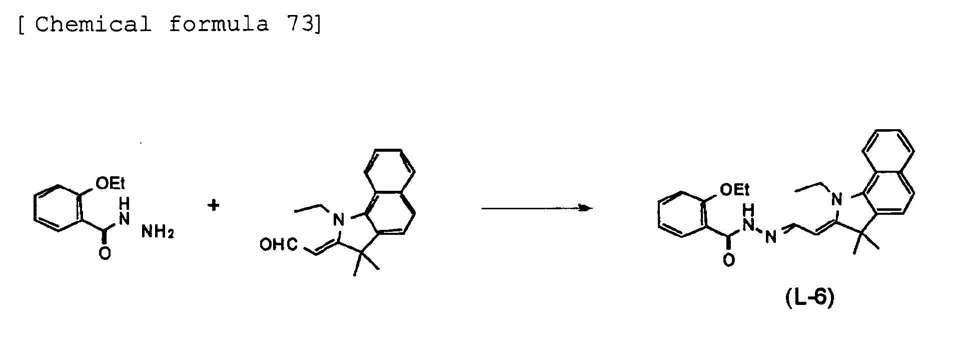

The light yellow target compound (L-6) (1.0 g, yield 48%) was obtained as in the synthesis of the hydrazide ligand (L-4) of Example 5 except that 2-ethoxybenzhydrazide (0.90 g) and 2-(1-ethyl-3,3-dimethyl-5-methoxyindoline-2-ylidene)acetaldehyde (1.3 g) were used as the starting materials.

The resulting compound was identified by DEI-MS.
DEI-MS (measured value): 427 (M⁺), calculated value: 427

### <Synthesis of exemplified compound (A-88)>

Using a methanol solution (25 ml) of the compound (L-6) (1.0 g), triethylamine (0.40 ml), and cobalt acetate tetrahydrate (0.35 g), a dark yellow solid (0.67 g, yield 63%) of the following target compound (A-88) was obtained as in the synthesis of the exemplified compound (A-86) of Example 5.
λmax (CH₃CN): 401 nm
OD at λmax: 77

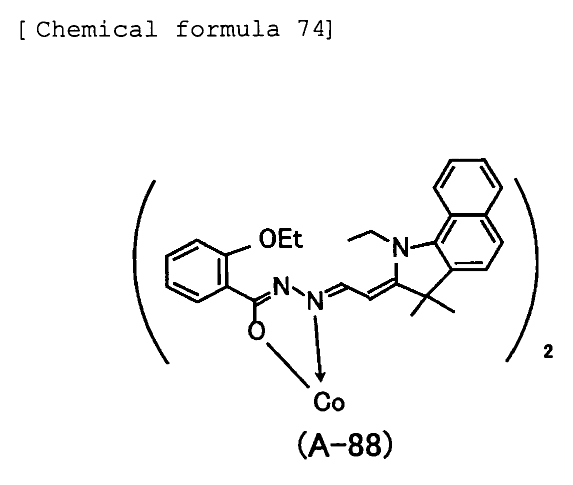

With respect to the resulting compound (A-88), solubility in a coating solvent was tested by the method shown in Example 1. Test results confirmed that the compound was completely dissolved at a concentration of each of 0.7% by weight and 1.0% by weight.

### <Production of recording medium>

Subsequently, an optical recording medium (optical recording medium of Example 7) was produced under the same conditions as in Example 5 except that the above-described compound (A-88) was used as the dye, and evaluation was performed under the same conditions.
As a result, the recording mechanism was Low-to-High type, and the optimum recording power was 10.0 mW. At this time, the PRSNR of the optical recording medium was 17.0, which exceeded the standard of 15. Furthermore, the SbER was 4.50 × 10⁻⁵, which was within the standard of 5.0 × 10⁻⁵ and satisfactory.

### [Example 8]

### <Synthesis of hydrazide ligand (L-7)>

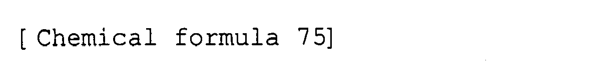

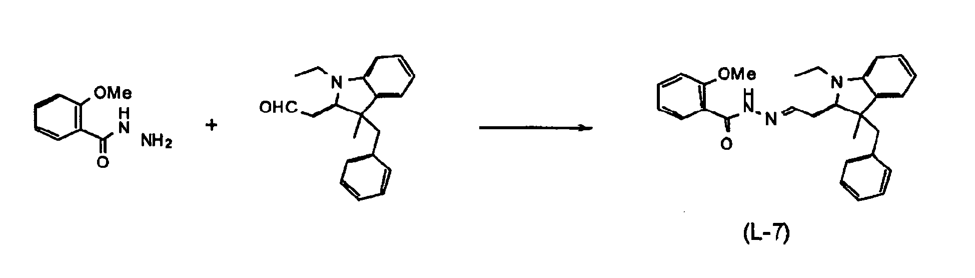

The light yellow target compound (L-7) (1.2 g, yield 53%) was obtained as in the synthesis of the hydrazide ligand (L-4) of Example 5 except that 2-methoxybenzhydrazide (0.83 g) and 2-(1-ethyl-3-benzyl-3-methylindoline-2-ylidene)acetaldehyde (1.5 g) were used as the starting materials.

The resulting compound was identified by DEI-MS.
DEI-MS (measured value): 439 (M⁺), calculated value: 439

### <Synthesis of exemplified compound (A-150)>

Using a methanol solution (25 ml) of the compound (L-7) (1.0 g), triethylamine (0.35 ml), and cobalt acetate tetrahydrate (0.30 g), a dark yellow solid (0.52 g, yield 49%) of the following target compound (A-150) was obtained as in the synthesis of the exemplified compound (A-86) of Example 5.
λmas (CH₃CN): 409 nm
OD at λmas: 65

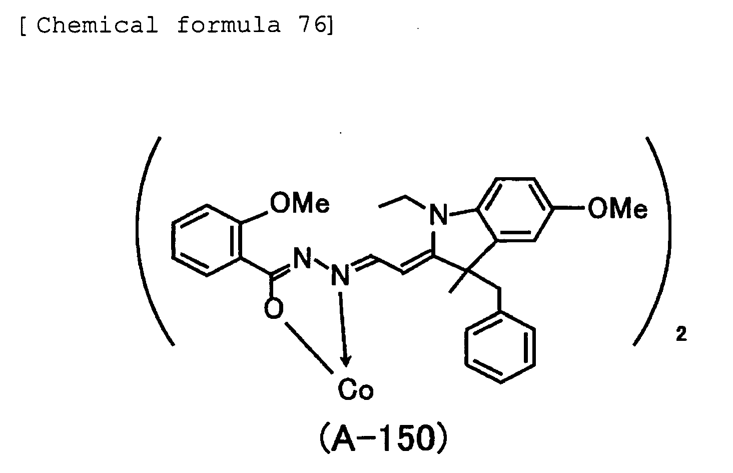

With respect to the resulting compound (A-150), solubility in a coating solvent was tested by the method shown in Example 1. Test results confirmed that the compound was completely dissolved at a concentration of each of 0.7% by weight and 1.0% by weight.

Subsequently, an optical recording medium (optical recording medium of Example 8) was produced under the same conditions as in Example 5 except that the above-described exemplified compound (A-150) was used as the dye, and evaluation was performed under the same conditions.
As a result, the recording mechanism was Low-to-High type, and the optimum recording power was 7.5 mW. At this time, the PRSNR of the optical recording medium was 15.7, which exceeded the standard of 15. Furthermore, the SbER was 2.60 × 10⁻⁵, which was within the standard of 5.0 × 10⁻⁵ and satisfactory.

### [Example 9]

### <Synthesis of hydrazide ligand (L-8)>

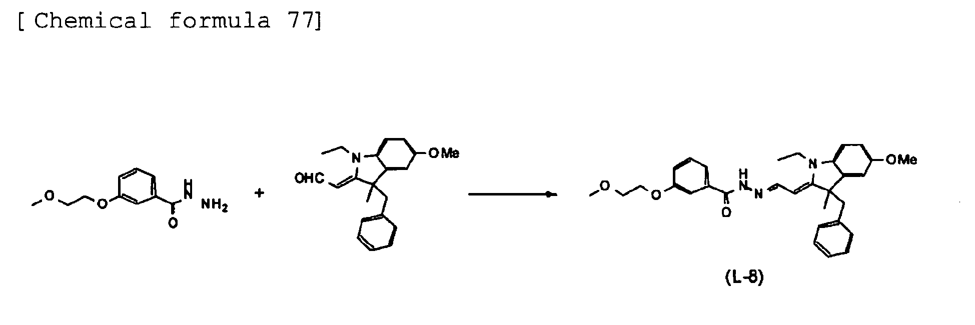

The light yellow target compound (L-8) (1.6 g, yield 63%) was obtained as in the synthesis of the hydrazide ligand (L-4) of Example 5 except that 3-(methoxyethoxy)benzhydrazide (1.1 g) and 2-(1-ethyl-3-benzyl-3-methyl-5-methoxyindoline-2-ylidene)acetaldehyde (1.6 g) were used as the starting materials.

The resulting compound was identified by DEI-MS.
DEI-MS (measured value): 513 (M⁺), calculated value: 513

### <Synthesis of exemplified compound (A-212)>

Using a methanol solution (25 ml) of the compound (L-8) (1.0 g), triethylamine (0.30 ml), and cobalt acetate tetrahydrate (0.25 g), a dark yellow solid (0.55 g, yield 52%) of the following target compound (A-212) was obtained as in the synthesis of the exemplified compound (A-86) of Example 5.
λmax (CH₃CN): 429 nm
OD at λmax: 70

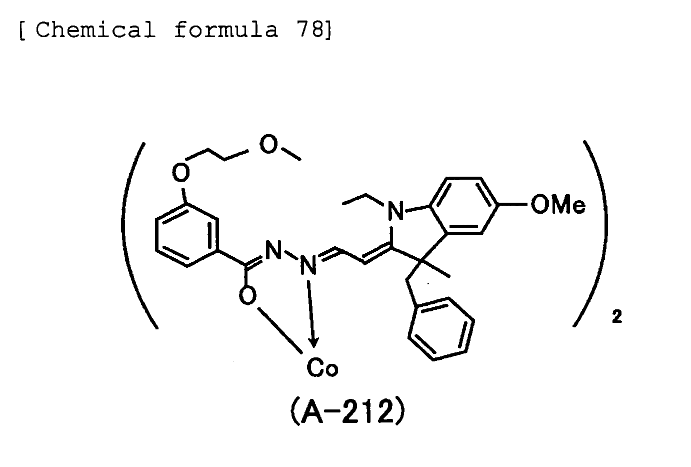

With respect to the resulting compound (A-212), solubility in a coating solvent was tested by the method shown in Example 1. Test results confirmed that the compound was completely dissolved at a concentration of each of 0.7% by weight and 1.0% by weight.

Subsequently, an optical recording medium (optical recording medium of Example 9) was produced under the same conditions as in Example 5 except that the above-described exemplified compound (A-212) was used as the dye, and evaluation was performed under the same conditions.
As a result, the recording mechanism was Low-to-High type, and the optimum recording power was 8.5 mW. At this time, the PRSNR of the optical recording medium was 31.3, which exceeded the standard of 15. Furthermore, the SbER was 1.60 × 10⁻⁷, which was within the standard of 5.0 × 10⁻⁵ and satisfactory.

### [Example 10]

### <Synthesis of hydrazide ligand (L-9)>

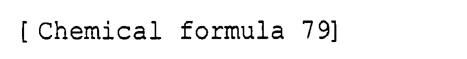

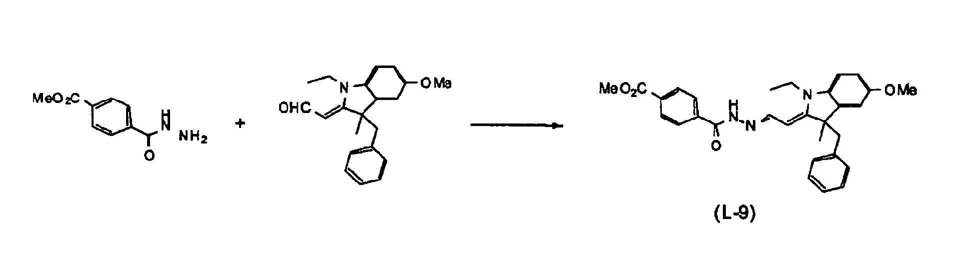

The light yellow target compound (L-9) (1.8 g, yield 73%) was obtained as in the synthesis of the hydrazide ligand (L-4) of Example 5 except that 4-(methoxycarbonyl)benzhydrazide (1.0 g) and 2-(1-ethyl-3-benzyl-3-methyl-5-methoxyindoline-2-ylidene)acetaldehyde (1.6 g) were used as the starting materials.

The resulting compound was identified by DEI-MS.
DEI-MS (measured value): 497 (M⁺), calculated value: 497

### <Synthesis of exemplified compound (A-186)>

Using a methanol solution (25 ml) of the compound (L-9) (1.0 g), triethylamine (0.35 ml), and cobalt acetate tetrahydrate (0.30 g), a dark yellow solid (0.75 g, yield 71%) of the target compound (A-186) was obtained as in the synthesis of the exemplified compound (A-86) of Example 5.
λmax (CH₃CN): 446 nm
OD at λmax: 71

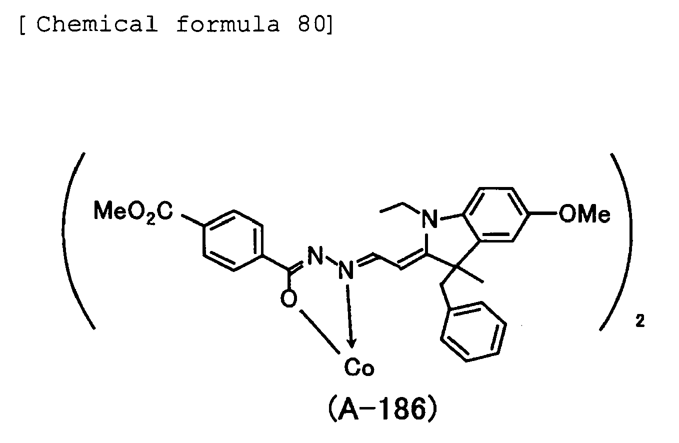

With respect to the resulting compound (A-186), solubility in a coating solvent was tested by the method shown in Example 1. Test results confirmed that the compound was completely dissolved at a concentration of each of 0.7% by weight and 1.0% by weight.

Subsequently, an optical recording medium (optical recording medium of Example 10) was produced under the same conditions as in Example 5 except that the above-described exemplified compound (A-186) was used as the dye, and evaluation was performed under the same conditions.
As a result, the recording mechanism was Low-to-High type, and the optimum recording power was 6.6 mW. At this time, the PRSNR of the optical recording medium was 30.0, which exceeded the standard of 15. Furthermore, the SbER was 5.60 × 10⁻⁹, which was within the standard of 5.0 × 10⁻⁵ and satisfactory.

### [Example 11]

### <Synthesis of hydrazide ligand (L-10)>

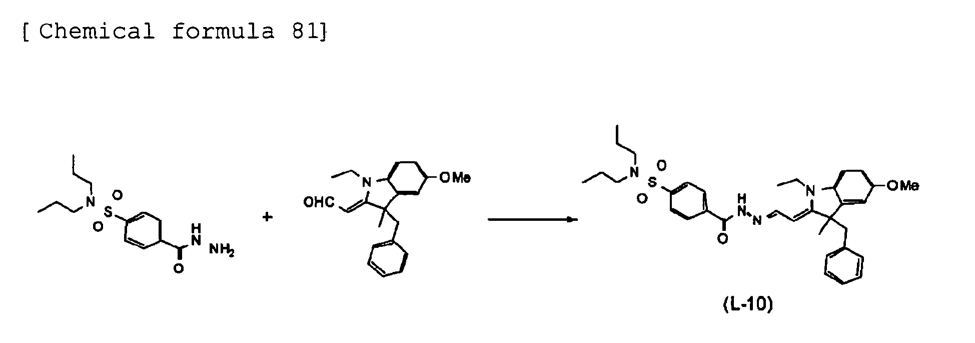

The light yellow target compound (L-10) (2.0 g, yield 67%) was obtained as in the synthesis of the hydrazide ligand (L-4) of Example 5 except that 4-(N,N-di-n-propylsulfamoyl)benzhydrazide (1.5 g) and 2-(1-ethyl-3-benzyl-3-methyl-5-methoxyindoline-2-ylidene)acetaldehyde (1.6 g) were used as the starting materials.

The resulting compound was identified by DEI-MS.
DEI-MS (measured value): 602 (M⁺), calculated value: 602

### <Synthesis of exemplified compound (A-211)>

Using a methanol solution (25 ml) of the compound (L-10) (1.0 g), triethylamine (0.30 ml), and cobalt acetate tetrahydrate (0.25 g), a dark yellow solid (0.69 g, yield 66%) of the target compound (A-211) was obtained as in the synthesis of the exemplified compound (A-86) of Example 5.
λmax (CH₃CN): 445 nm
OD at λmax: 60

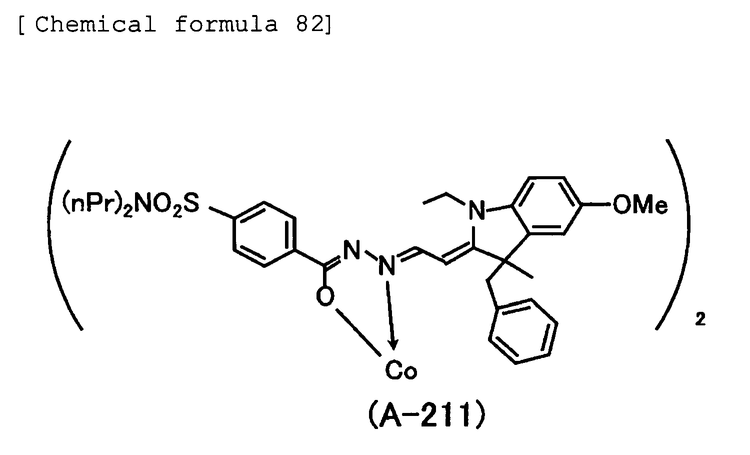

With respect to the resulting compound (A-211), solubility in a coating solvent was tested by the method shown in Example 1. Test results confirmed that the compound was completely dissolved at a concentration of each of 0.7% by weight and 1.0% by weight.

Subsequently, an optical recording medium (optical recording medium of Example 11) was produced under the same conditions as in Example 5 except that the above-described exemplified compound (A-211) was used as the dye, and evaluation was performed under the same conditions.
As a result, the recording mechanism was Low-to-High type, and the optimum recording power was 6.4 mW. At this time, the PRSNR of the optical recording medium was 28.3, which exceeded the standard of 15. Furthermore, the SbER was 2.30 × 10⁻⁹, which was within the standard of 5.0 × 10⁻⁵ and satisfactory.

### [Example 12]

### <Synthesis of hydrazide ligand (L-11)>

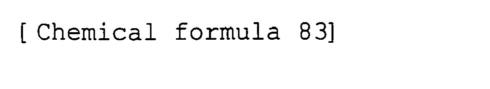

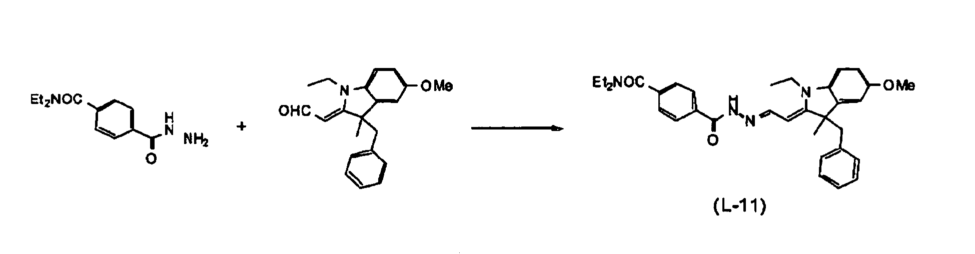

The light yellow target compound (L-11) (1.5 g, yield 56%) was obtained as in the synthesis of the hydrazide ligand (L-4) of Example 5 except that 4-(N,N-diethylcarbamoyl)benzhydrazide (1.2 g) and 2-(1-ethyl-3-benzyl-3-methyl-5-methoxyindoline-2-ylidene)acetaldehyde (1.6 g) were used as the starting materials.

The resulting compound was identified by DEI-MS.
DEI-MS (measured value): 538 (M⁺), calculated value: 538

### <Synthesis of exemplified compound (A-159)>

Using a methanol solution (25 ml) of the compound (L-11) (1.0 g), triethylamine (0.30 ml), and cobalt acetate tetrahydrate (0.25 g), a dark yellow solid (0.75 g, yield 71%) of the target compound (A-159) was obtained as in the synthesis of the exemplified compound (A-86) of Example 5.
λmas (CH₃CN): 431 nm
OD at λmax: 68

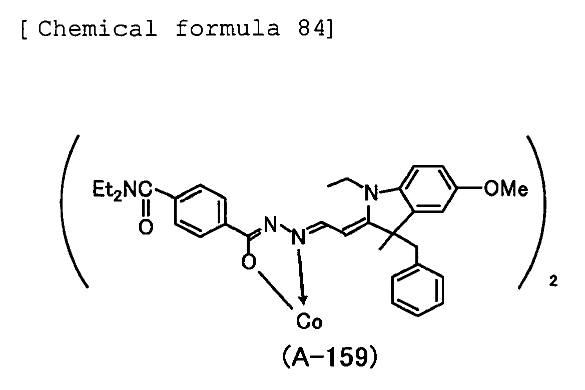

With respect to the resulting compound (A-159), solubility in a coating solvent was tested by the method shown in Example 1. Test results confirmed that the compound was completely dissolved at a concentration of each of 0.7% by weight and 1.0% by weight.

Subsequently, an optical recording medium (optical recording medium of Example 12) was produced under the same conditions as in Example 5 except that the above-described exemplified compound (A-159) was used as the dye, and evaluation was performed under the same conditions.
As a result, the recording mechanism was Low-to-High type, and the optimum recording power was 6.0 mW. At this time, the PRSNR of the optical recording medium was 31.7, which exceeded the standard of 15. Furthermore, the SbER was 3.90 × 10⁻¹², which was within the standard of 5.0 × 10⁻⁵ and satisfactory.

### [Example 13]

### <Synthesis of hydrazide ligand (L-12)>

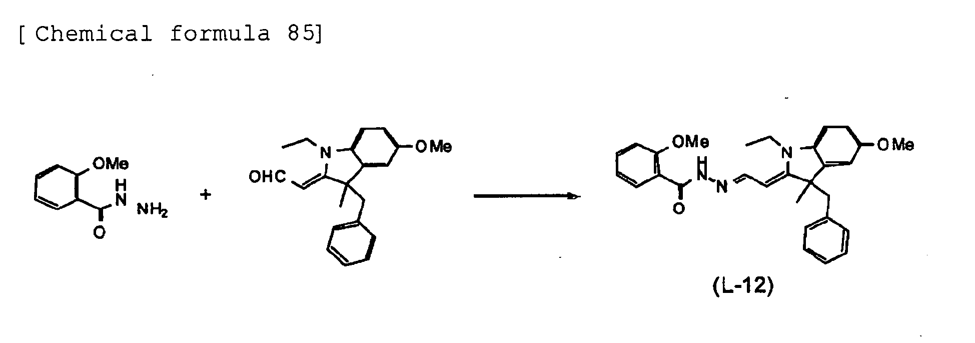

The light yellow target compound (L-12) (1.2 g, yield 51%) was obtained as in the synthesis of the hydrazide ligand (L-4) of Example 5 except that 2-methoxybenzhydrazide (0.83 g) and 2-(1-ethyl-3-benzyl-3-methyl-5-methoxyindoline-2-ylidene)acetaldehyde (1.6 g) were used as the starting materials.

The resulting compound was identified by DEI-MS.
DEI-MS (measured value): 469 (M⁺), calculated value: 469

### <Synthesis of exemplified compound (A-193)>

Using a methanol solution (25 ml) of the compound (L-12) (1.0 g), triethylamine (0.35 ml), and cobalt acetate tetrahydrate (0.30 g), a dark yellow solid (0.82 g, yield 77%) of the target compound (A-193) was obtained as in the synthesis of the exemplified compound (A-86) of Example 5.
λmax (CH₃CN) : 423 nm
OD at λmax: 59

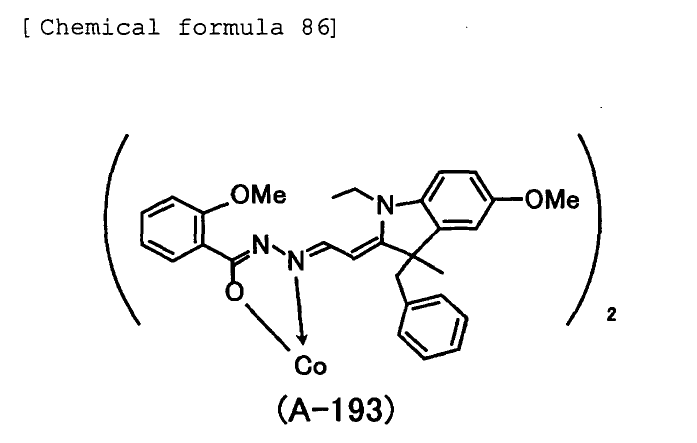

With respect to the resulting compound (A-193), solubility in a coating solvent was tested by the method shown in Example 1. Test results confirmed that the compound was completely dissolved at a concentration of each of 0.7% by weight and 1.0% by weight.

Subsequently, an optical recording medium (optical recording medium of Example 13) was produced under the same conditions as in Example 5 except that the above-described exemplified compound (A-193) was used as the dye, and evaluation was performed under the same conditions.
As a result, the recording mechanism was Low-to-High type, and the optimum recording power was 6.8 mW. At this time, the PRSNR of the optical recording medium was 36.0, which exceeded the standard of 15. Furthermore, the SbER was 8.10 × 10⁻¹², which was within the standard of 5.0 × 10⁻⁵ and satisfactory.

### [Example 14]

### <Synthesis of hydrazide ligand (L-13)>

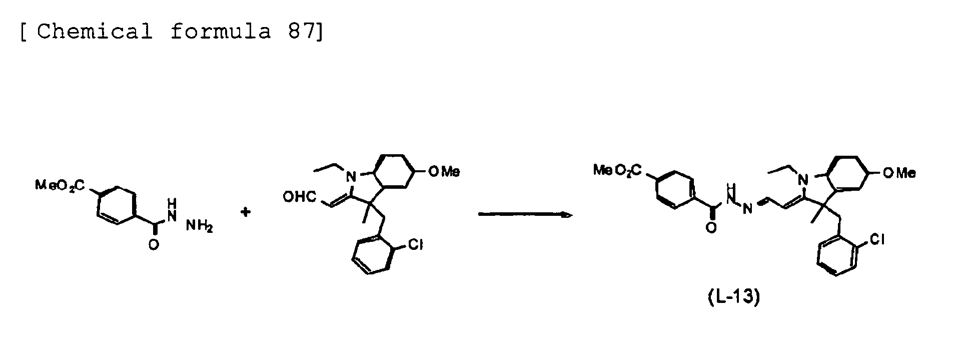

The light yellow target compound (L-13) (1.9 g, yield 75%) was obtained as in the synthesis of the hydrazide ligand (L-4) of Example 5 except that 2-(methoxycarbonyl)benzhydrazide (1.0 g) and 2-(1-ethyl-3-(o-chlorophenyl)methyl-3-methyl-5-methoxyindoline-2-ylidene)acetaldehyde (1.7 g) were used as the starting materials.

The resulting compound was identified by DEI-MS.
DEI-MS (measured value): 531 (M⁺), calculated value: 531

### <Synthesis of exemplified compound (A-151)>

Using a methanol solution (25 ml) of the compound (L-13) (1.0 g), triethylamine (0.30 ml), and cobalt acetate tetrahydrate (0.27 g), a dark yellow solid (0.90 g, yield 85%) of the target compound (A-151) was obtained as in the synthesis of the exemplified compound (A-86) of Example 5.
λmax (CH₃CN): 446 nm
OD at λmax: 63

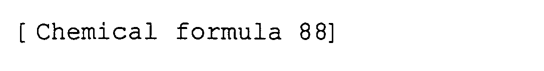

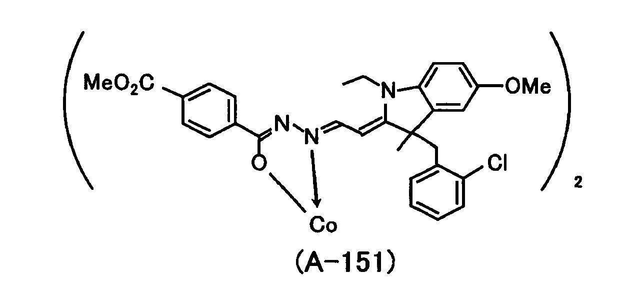

With respect to the resulting compound (A-151), solubility in a coating solvent was tested by the method shown in Example 1. Test results confirmed that the compound was completely dissolved at a concentration of each of 0.7% by weight and 1.0% by weight.
Subsequently, an optical recording medium (optical recording medium of Example 14) was produced under the same conditions as in Example 5 except that the above-described exemplified compound (A-151) was used as the dye, and evaluation was performed under the same conditions.
As a result, the recording mechanism was Low-to-High type, and the optimum recording power was 6.0 mW. At this time, the PRSNR of the optical recording medium was 29.6, which exceeded the standard of 15. Furthermore, the SbER was 5.00 × 10⁻¹⁰, which was within the standard of 5.0 × 10⁻⁵ and satisfactory.

### [Example 15]

### <Synthesis of hydrazide ligand (L-14)>

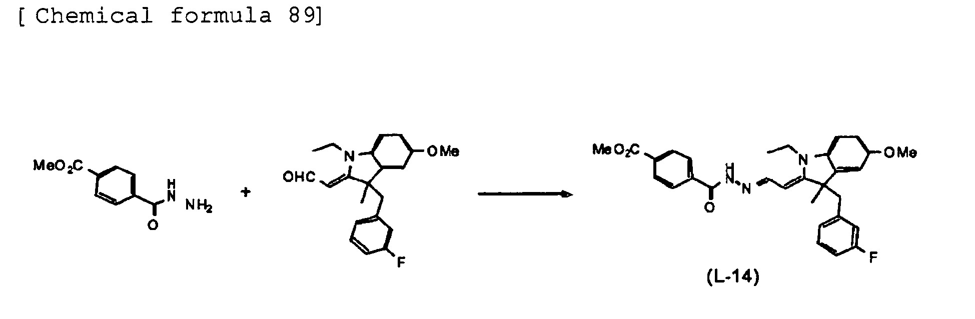

The light yellow target compound (L-14) (2.1 g, yield 81%) was obtained as in the synthesis of the hydrazide ligand (L-4) of Example 5 except that 2-(methoxycarbonyl)benzhydrazide (1.0 g) and 2-(1-ethyl-3-(m-fluorophenyl)methyl-3-methyl-5-methoxyindoline-2-ylidene)acetaldehyde (1.7 g) were used as the starting materials.

The resulting compound was identified by DEI-MS.
DEI-MS (measured value): 515 (M⁺), calculated value: 515

### <Synthesis of exemplified compound (A-152)>

Using a methanol solution (25 ml) of the compound (L-14) (1.0 g), triethylamine (0.32 ml), and cobalt acetate tetrahydrate (0.27 g), a dark yellow solid (0.93 g, yield 88%) of the target compound (A-152) was obtained as in the synthesis of the exemplified compound (A-86) of Example 5.
λmax (CH₃CN): 446 nm
OD at λmax: 67

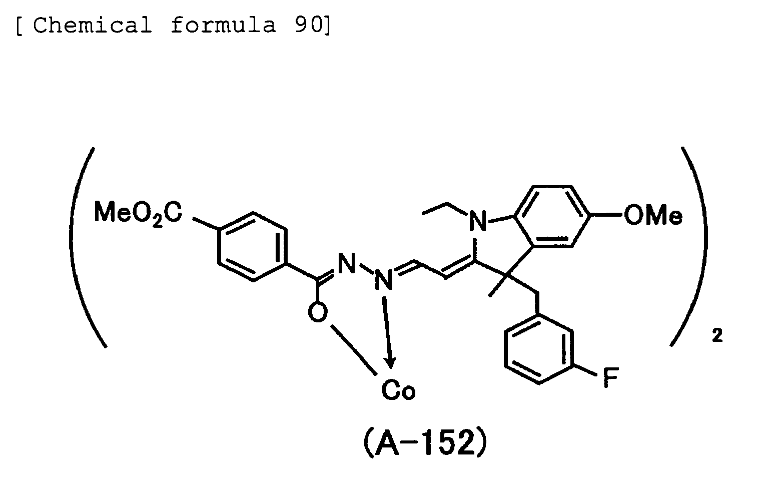

With respect to the resulting compound (A-152), solubility in a coating solvent was tested by the method shown in Example 1. Test results confirmed that the compound was completely dissolved at a concentration of each of 0.7% by weight and 1.0% by weight.
Subsequently, an optical recording medium (optical recording medium of Example 15) was produced under the same conditions as in Example 5 except that the above-described exemplified compound (A-152) was used as the dye, and evaluation was performed under the same conditions.
As a result, the recording mechanism was Low-to-High type, and the optimum recording power was 5.8 mW. At this time, the PRSNR of the optical recording medium was 31.7, which exceeded the standard of 15. Furthermore, the SbER was 3.70 × 10⁻¹², which was within the standard of 5.0 × 10⁻⁵ and satisfactory.

### [Comparative Example 4]

### <Synthesis of ligand (L-15)>

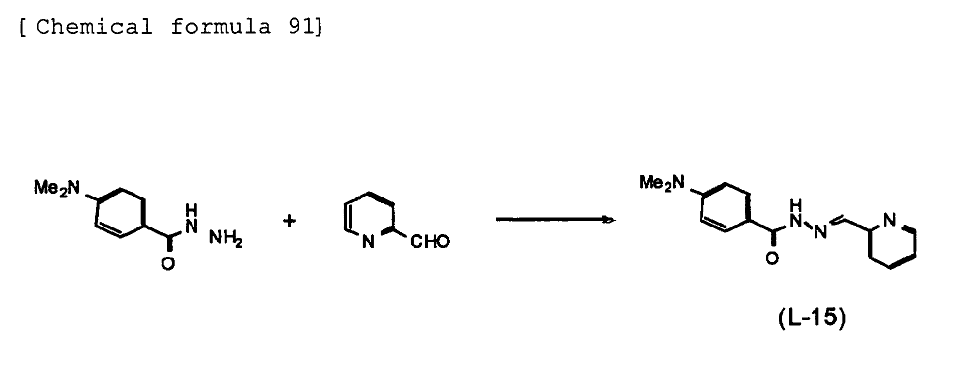

The light yellow target compound (L-15) (1.0 g, yield 74%) was obtained as in the synthesis of the hydrazide ligand (L-4) of Example 5 except that 4-dimethylaminobenzhydrazide (0.90 g) and 2-pyridine aldehyde (0.53 g) were used as the starting materials.

The resulting compound was identified by DEI-MS.
DEI-MS (measured value): 268 (M⁺), calculated value: 268

### <Synthesis of comparative example compound (B-4)>

Using a methanol solution (25 ml) of the compound (L-15) (1.0 g), triethylamine (0.60 ml), and cobalt acetate tetrahydrate (0.55 g), a dark yellow solid (0.87 g, yield 78%) of the target compound (B-4) was obtained as in the synthesis of the exemplified compound (A-86) of Example 5.
λmax (CH₃CN): 409 nm
OD at λmax: 103

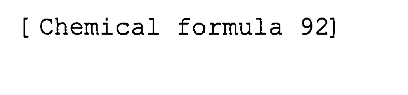

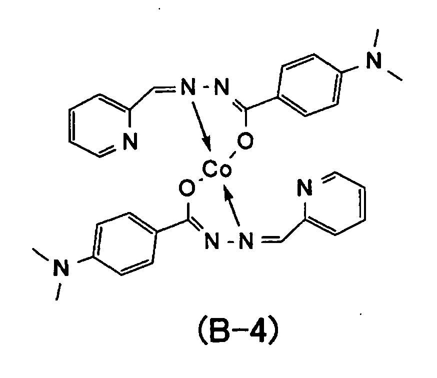

With respect to the resulting compound (B-4), solubility in a coating solvent was tested by the method shown in Example 1. Test results confirmed that the amount of insolubles was large at a concentration of each of 0.7% by weight and 1.0% by weight.

Subsequently, an optical recording medium (optical recording medium of Comparative Example 4) was produced under the same conditions as in Example 5 except that the above-described comparative example compound (B-4) was used as the dye, and evaluation was performed under the same conditions.
As a result, the recording mechanism was Low-to-High type, and the optimum recording power was 9.2 mW. At this time, the PRSNR of the optical recording medium was 10.0, which did not exceed the standard of 15. Furthermore, the SbER was 4.40 × 10⁻⁴, which exceeded the standard of 5.0 × 10⁻⁵, and sufficient characteristics were not obtained.

### [Comparative Example 5]

### <Synthesis of ligand (L-16)>

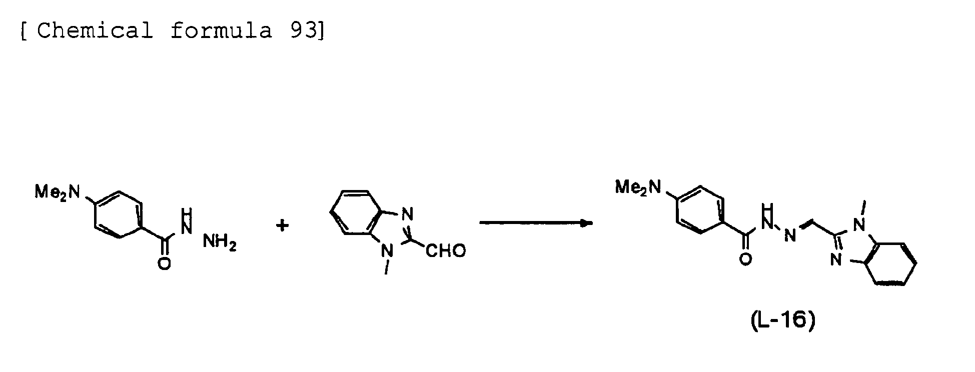

The light yellow target compound (L-16) (1.2 g, yield 75%) was obtained as in the synthesis of the hydrazide ligand (L-4) of Example 5 except that 4-dimethylaminobenzhydrazide (0.90 g) and 2-formyl-1-methylbenzimidazole (0.80 g) were used as the starting materials.

The resulting compound was identified by DEI-MS.
DEI-MS (measured value): 321 (M⁺), calculated value: 321

### <Synthesis of comparative example compound (B-5)>

Using a methanol solution (25 ml) of the compound (L-16) (1.0 g), triethylamine (0.50 ml), and cobalt acetate tetrahydrate (0.45 g), a dark yellow solid (0.81 g, yield 74%) of the target compound (B-5) was obtained as in the synthesis of the exemplified compound (A-86) of Example 5.
λmax (CH₃CN): 418 nm
OD at λmas: 107

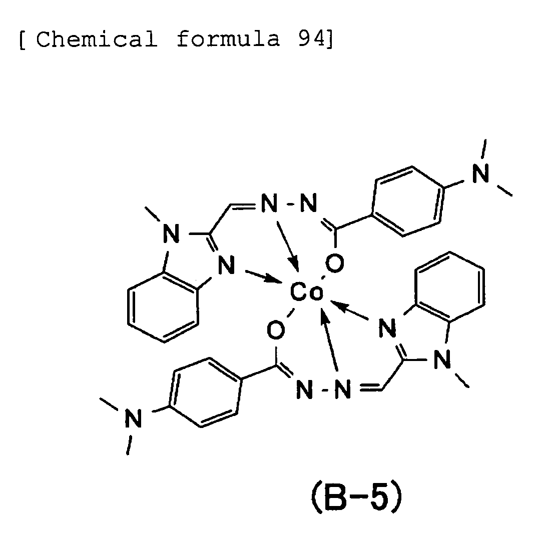

With respect to the resulting compound (B-5), solubility in a coating solvent was tested by the method shown in Example 1. Test results confirmed that the amount of insolubles was large at a concentration of each of 0.7% by weight and 1.0% by weight.

Subsequently, an optical recording medium (optical recording medium of Comparative Example 5) was produced under the same conditions as in Example 5 except that the above-described comparative example compound (B-5) was used as the dye, and evaluation was performed under the same conditions.
As a result, the recording mechanism was Low-to-High type, and the optimum recording power was 9.5 mW. At this time, the PRSNR of the optical recording medium was 12.0, which did not exceed the standard of 15. Furthermore, the SbER was 1.20 × 10⁻⁴, which exceeded the standard of 5.0 × 10⁻⁵, and sufficient characteristics were not obtained.

### [Comparative Example 6]

### <Synthesis of ligand (L-17)>

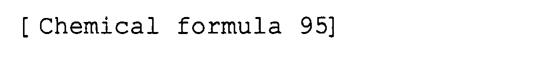

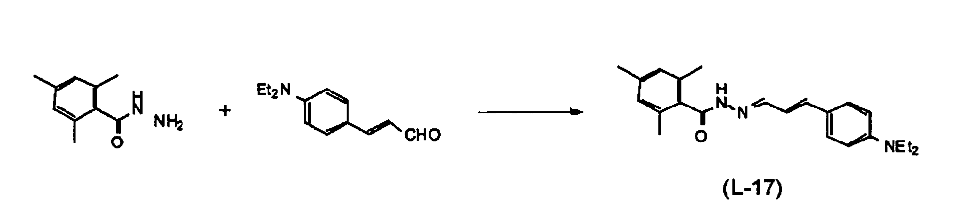

The light yellow target compound (L-17) (1.4 g, yield 75%) was obtained as in the synthesis of the hydrazide ligand (L-4) of Example 5 except that 2,4,6-tritylhydrazide (0.90 g) and p-diethylaminocinnamaldehyde (1.0 g) were used as the starting materials.

The resulting compound was identified by DEI-MS.
DEI-MS (measured value): 363 (M⁺), calculated value: 363

### <Synthesis of comparative example compound (B-6)>

Using a methanol solution (25 ml) of the compound (L-17) (1.0 g), triethylamine (0.45 ml), and cobalt acetate tetrahydrate (0.40 g), a dark yellow solid (0.89 g, yield 82%) of the target compound (B-6) was obtained as in the synthesis of the exemplified compound (A-86) of Example 5.
λmax (CH₃CN): 398 nm
OD at λmax: 72

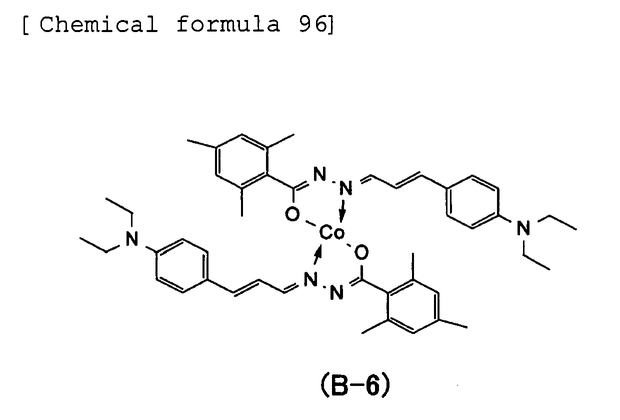

With respect to the resulting compound (B-6), solubility in a coating solvent was tested by the method shown in Example 1. Test results confirmed that the amount of insolubles was large at a concentration of each of 0.7% by weight and 1.0% by weight.

Subsequently, an optical recording medium (optical recording medium of Comparative Example 6) was produced under the same conditions as in Example 5 except that the above-described comparative example compound (B-6) was used as the dye, and evaluation was performed under the same conditions.
As a result, the recording mechanism was Low-to-High type, and the optimum recording power was 8.5 mW. At this time, the PRSNR of the optical recording medium was 8.5, which did not exceed the standard of 15. Furthermore, the SbER was 5.20 × 10⁻⁴, which exceeded the standard of 5.0 × 10⁻⁵, and sufficient characteristics were not obtained.

The results of the solubility test shown in Examples 1 to 15 and Comparative Examples 1 to 6 are summarized in Table 3.

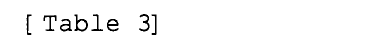

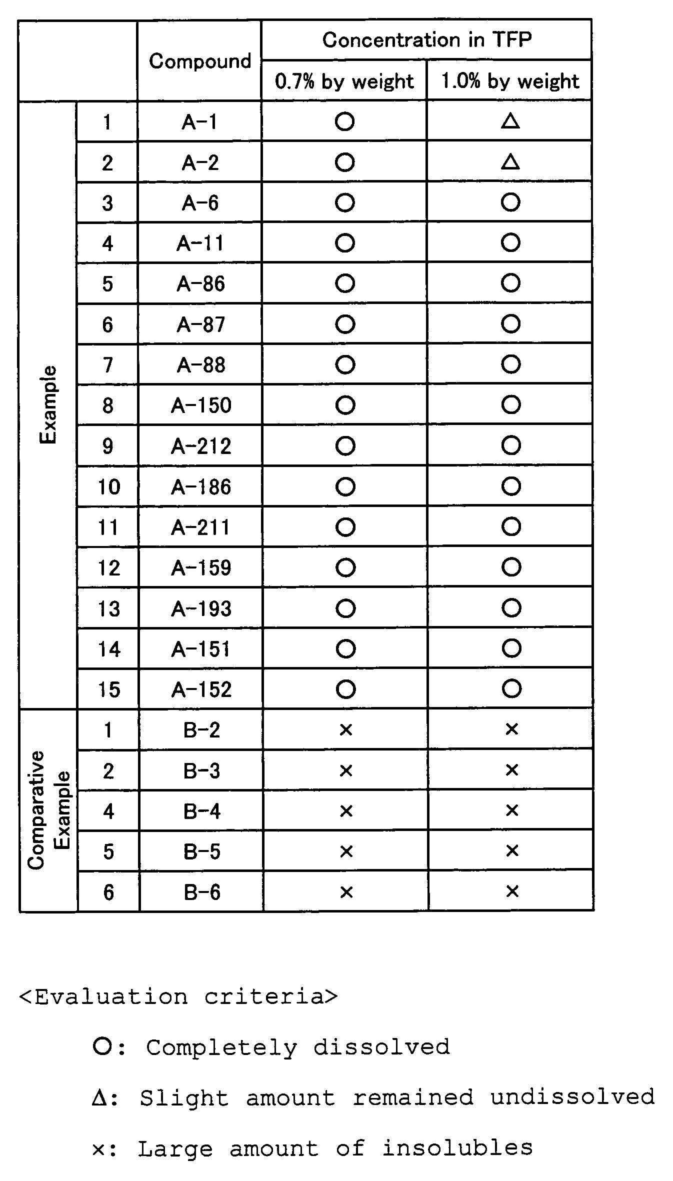

The following is evident from Table 3.
With respect to each of the hydrazide chelate complex compounds in Examples 1 to 15 of the present invention, even when a 0.7% to 1.0% by weight TFP solution is used, substantially no undissolved components were observed on filter paper, thus exhibiting high solubility.
In contrast, the compounds shown in comparative examples exhibit significantly poor solubility, and it is evident that the compounds of the present invention have superior solubility in a coating solvent.

Furthermore, the results of the recording sensitivity test and light fastness test shown in Examples 3 and 4 and Comparative Example 3 are summarized in Table 4.

**[Table 4]**

| Examples | Example | | Comparative Example |
|---|---|---|---|
| | 3 | 4 | 3 |
| Compound | A-6 | A-11 | B-1 |
| Maximum recording sensitivity (mW) | 9. 0 | 7.0 | - |
| Residual ratio (after 40-hour light fastness test) (%) | 90 | 91 | < 10 |

| | | | |
|---|---|---|---|
| - : Not carried out | | | |

As is evident from Table 4, the optical recording media produced using the hydrazide chelate complex compounds of the present invention are excellent in terms of sensitivity to a blue laser beam and light fastness.

Furthermore, the results of characteristics evaluation of the optical recording media shown in Examples 5 to 15 and Comparative Examples 4 to 6 are summarized in Table 5.

**[Table 5]**

| | Compound No. | Recording power (mW) | PRSNR | SbER | Remarks |
|---|---|---|---|---|---|
| Example 5 | A-86 | 10.0 | 16.0 | 1.10×10⁻⁵ | Absence of benzyl |
| Example 6 | A-87 | 10.5 | 15.0 | 1.50×10⁻⁵ | Absence of benzyl |
| Example 7 | A-88 | 10.0 | 17.0 | 4.50×10⁻⁵ | Absence of benzyl |
| Example 8 | A-150 | 7.5 | 15.7 | 2.60×10⁻⁵ | Presence of benzyl |
| Example 9 | A-212 | 8.5 | 31.3 | 1.60×10⁻⁷ | Presence of benzyl |
| Example 10 | A-186 | 6.6 | 30.0 | 5.60×10⁻⁹ | Presence of benzyl |
| Example 11 | A-211 | 6.4 | 28.3 | 2.30×10⁻⁹ | Presence of benzyl |
| Example 12 | A-159 | 6.0 | 31.7 | 3.90×10⁻¹² | Presence of benzyl |
| Example 13 | A-193 | 6.8 | 36.0 | 8.10×10⁻¹² | Benzyl with substituent |
| Example 14 | A-151 | 6.0 | 29.6 | 5.00×10⁻¹⁰ | Benzyl with substituent |
| Example 15 | A-152 | 5.8 | 31.7 | 3.70×10⁻¹ | Benzyl with substituent |
| Comparative Example 4 | B-4 | 9.2 | 10.0 | 4.40×10⁻⁴ | Comparative example |
| Comparative Example 5 | B-5 | 9.5 | 12.0 | 1.20×10⁻⁴ | Comparative example |
| Comparative Example 6 | B-6 | 8.5 | 8.5 | 5.20 × 10⁻⁴ | Comparative example |

As is evident from Table 5, in each of the optical recording media produced using the hydrazide chelate complex compounds of the present invention, the PRSNR is 15 or more, the SbER is within 5.0 × 10⁻⁵, and the optimum recording power is 12 mW or less, thus exhibiting excellence in recording sensitivity. Among them, in each of the optical recording media produced using the hydrazide chelate complex compounds of Examples 8 to 15, in which Y¹ or Y² in general formula (2) has a benzyl group, furthermore, at least one of an optimum recording power of 7.5 mW or less, a PRSNR of 25 or more, and a SbER of 2.0 × 10⁻⁷ or less is satisfied, thus exhibiting particular excellence in recording sensitivity.

### [Example 16] (Example of two-layer medium)

Using the dyes used in Examples 13 and 15, i.e., the exemplified compounds (A-152) and (A-193), a two-layer medium was produced, and recording characteristics of each of the recording layers, Layer 0 and Layer 1, were evaluated.
First, a procedure for producing the medium will be described below.
A substrate and a stamper were prepared in advance such that the track pitch of the substrate was 0.4 µm, the groove depth was 60 nm for Layer 0 and 65 nm for Layer 1, and the groove width was 260 nm for both layers.

First, on the 0.59-mm polycarbonate substrate provided with the groove for Layer 0, spin coating was performed using a solution prepared by mixing the exemplified compound (A-193) in TFP (2,2,3,3-tetrafluoro-1-propanol) at a concentration of 1.0% by weight, as in the single-layer medium, followed by drying at 70°C for 25 minutes. Thereby, a Layer 0 recording layer was formed. At this time, the absorbance at 470 nm was 0.280.
Next, a translucent reflective film AgBi_{1.0} was formed at 45 nm by sputtering adjacent to the Layer 0. Then, an ultraviolet-curable resin (SD6036 manufactured by Dainippon Ink and Chemicals Inc.) was applied by spin coating at about 22 µm to the AgBi surface, and similarly, an ultraviolet-curable resin (MPZ388 manufactured by Nippon Kayaku Co., Ltd.) was applied by spin coating at about 8 µm to a stamper provided with a groove for transferring composed of an amorphous cyclic polyolefin resin for forming Layer 1 groove. Subsequently, the coated surfaces were bonded to each other, and then the two types of resins were cured by irradiation of UV light at 240 mJ/cm² from the amorphous olefin stamper side. Next, only the stamper for Layer 1 was released, and an intermediate layer, in which a groove for Layer 1 (groove depth 65 nm, groove width 260 nm, track pitch 0.4 µm) was transferred to the released surface, was formed. At this time, the total thickness of the intermediate layer after UV curing was 28 µm.
Next, onto the intermediate layer provided with the groove for Layer 1, the exemplified compound (A-152) was applied by spin coating, as in the Layer 0, followed by drying at 70°C for 25 minutes. Thereby, a Layer 1 recording layer was formed. At this time, the absorbance for the dye only at 470 nm was 0.300. Furthermore, a total reflective film AgCu_{0.9}Nd_{0.7} was formed at 120 nm by sputtering adjacent to the Layer 1. Lastly, a UV-curable resin for bonding was applied to each of the total reflective layer and a 0.6-mm-thick backboard composed of polycarbonate, and bonding and curing were performed. Thereby, a two-layer optical recording medium was produced.

The recording conditions were the same as in the single-layer medium, and recording was performed, using a tester (ODU-1000 manufactured by Pulstec Industrial Co., Ltd.) with a NA (numerical aperture) of 0.65 at a laser wavelength of 405 nm, at a linear velocity of 6.61 m/s and a shortest mark length of 204 nm. Recording and reproduction were performed by the method according to the HDDVD-R standard Ver. 1.0 defined by the DVD forum, and the PRSNR (Partial Response SNR) and SbER specified in the standard were evaluated.

The evaluation results showed that the recording mechanism was the Low-to-High type in both the Layer 0 and the Layer 1. In the Layer 0, the optimum recording power was 10.5 mW, the PRNSR was 25.0, the SbER was 1.2 × 10⁻⁸. In the Layer 1, the optimum recording power was 13.0 mW, the PRNSR was 24.0, the SbER was 4.3 × 10⁻⁸. The PRSNR values in the Layer 0 and the Layer 1 greatly exceeded the standard of 15.0 and satisfactory. The SbER was also within the standard of 5.0 × 10⁻⁵, and the recording characteristics required for the two-layer medium were ensured sufficiently in both the Layer 0 and the Layer 1.

While the present invention has been described in detail with reference to the specific embodiments, it is apparent to persons skilled in the art that the embodiments may be subjected to various modifications without departing from the spirit of the present invention.
This application claims the benefit of Japanese Patent Application (Patent Application No. 2006-215920) filed on August 8, 2006 and Japanese Patent Application (Patent Application No. 2007-010449) filed on January 19, 2007, which are hereby incorporated by reference herein in their entirety.

## Claims

1. A hydrazide chelate complex compound represented by the following general formula (1): 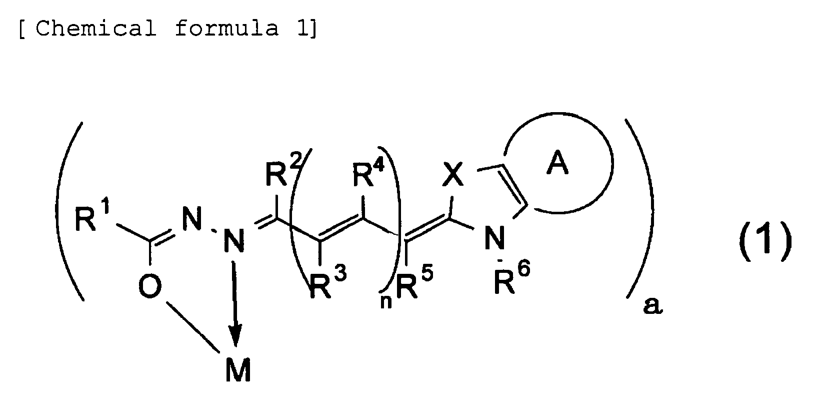 wherein, in general formula (1), ring A represents an aromatic ring which may have a substituent; R¹ and R⁶ each independently represent an aromatic ring group which may have a substituent or a monovalent nonaromatic ring substituent having 20 or less carbon atoms; R² to R⁵ each independently represent a hydrogen atom, an aromatic ring group which may have a substituent, or a monovalent nonaromatic ring substituent having 20 or less carbon atoms; n represents 0 or 1; a represents an integer of 1 to 3; M represents a transition metal atom; and X represents an atom of Groups 14 to 16 of the periodic table; when X is an atom of Groups 14 to 15 of the periodic table, X may further have a monovalent substituent having 20 or less carbon atoms; and the above-described molecule may have a counterion.

2. The hydrazide chelate complex compound according to Claim 1, **characterized in that,** in general formula (1), ring A is an aromatic hydrocarbon ring.

3. The hydrazide chelate complex compound according to Claim 1, **characterized in that**, in general formula (1), X is a carbon atom.

4. The hydrazide chelate complex compound according to Claim 1, **characterized by** being represented by the following general formula (2): 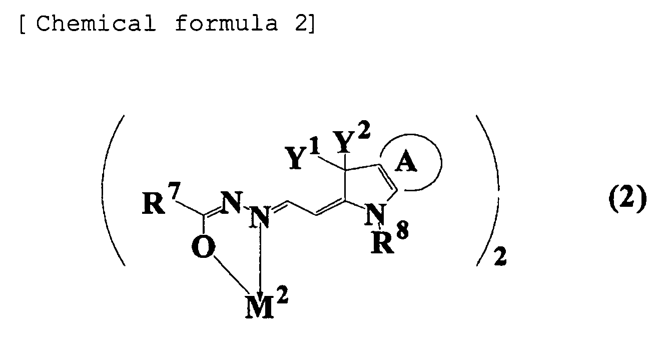 wherein, in general formula (2), ring A represents an aromatic ring which may have a substituent; R⁷, R⁸, Y¹, and Y² each independently represent an aromatic ring group which may have a substituent or a monovalent nonaromatic ring substituent having 20 or less carbon atoms; and M² represents a transition metal atom; and the above-described molecule may have a counterion.

5. The hydrazide chelate complex compound according to Claim 4, **characterized in that**, in general formula (2), at least one of Y¹ and Y² is an arylmethyl group or a heteroarylmethyl group which may have a substituent.

6. The hydrazide chelate complex compound according to Claim 5, **characterized in that,** in general formula (2), at least one of Y¹ and Y² is a benzyl group which may have a substituent.

7. The hydrazide chelate complex compound according to Claim 4, **characterized in that**, in general formula (2), M² is an element of Group 9.

8. A dye for forming a recording layer of an optical recording medium, **characterized by** comprising the hydrazide chelate complex compound according to Claim 1.

9. An optical recording medium **characterized by** comprising at least a substrate and a recording layer disposed on the substrate, wherein the recording layer is formed using the dye for forming a recording layer of an optical recording medium according to Claim 8.

10. The optical recording medium according to Claim 9, **characterized by** having a concentric or spiral groove portion on the substrate, wherein the groove width W satisfies the relationship 100 nm < W < 400 nm, and the groove depth d satisfies the relationship 20 nm < d < 200 nm.

11. A recording method for an optical recording medium, **characterized by** performing recording on the optical recording medium according to Claim 9 using a laser beam with a wavelength of 350 to 530 nm.

12. The recording method for an optical recording medium according to Claim 11, **characterized in that,** at a wavelength of a laser beam for recording, the reflectance in the recorded portion is higher than before recording and the reflectance in the unrecorded portion.
